(19) Europäisches Patentamt / European Patent Office / Office européen des brevets

(11) **EP 4 523 395 B1**

(12) **EUROPEAN PATENT SPECIFICATION**

(45) Date of publication and mention
of the grant of the patent:
**05.08.2026 Bulletin 2026/32**

(21) Application number: **23818696.9**

(22) Date of filing: **09.06.2023**

(51) International Patent Classification (IPC):
*H04L 47/56* (2022.01)     *H04H 20/95* (2008.01)
*H04L 47/62* (2022.01)     *H04L 47/283* (2022.01)

(52) Cooperative Patent Classification (CPC):
**H04L 47/56; H04L 43/026; H04L 43/0829;
H04L 43/0852; H04L 43/0864; H04L 43/087;
H04L 43/0888; H04L 47/283; H04L 47/62;**
H04L 43/10

(86) International application number:
**PCT/CA2023/050799**

(87) International publication number:
**WO 2023/235988 (14.12.2023 Gazette 2023/50)**

(54) **SYSTEMS AND METHODS FOR COMMUNICATIONS USING BLENDED WIDE AREA NETWORKS**

SYSTEME UND VERFAHREN ZUR KOMMUNIKATION UNTER VERWENDUNG VON
GEMISCHTEN WEITBEREICHSNETZWERKEN

SYSTÈMES ET PROCÉDÉS POUR DES COMMUNICATIONS À L'AIDE DE RÉSEAUX ÉTENDUS
MÉLANGÉS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.06.2022 US 202263350654 P**

(43) Date of publication of application:
**19.03.2025 Bulletin 2025/12**

(60) Divisional application:
**26186520.8 / 4 787 808**

(73) Proprietor: **Dejero Labs Inc.
Waterloo, ON N2L 3V3 (CA)**

(72) Inventors:
• **SZE, David Pui Keung
Waterloo, Ontario N2J 1R1 (CA)**
• **AZZAM, Imad
Waterloo, Ontario N2V 2P5 (CA)**
• **KENNEDY, David John
Burlington, Ontario L7L 5C1 (CA)**

(74) Representative: **J A Kemp LLP
80 Turnmill Street
London EC1M 5QU (GB)**

(56) References cited:
**EP-A1- 3 073 680          EP-B1- 2 837 231
WO-A1-2022/155738          US-A1- 2016 179 740
US-A1- 2018 278 969**

## Description

### FIELD

Embodiments of the present disclosure relate to the field of electronic data packet communications, and more specifically, embodiments relate to devices, systems and methods for push-based data packet communications where multiple network connections (e.g., wide area network connections) are available.

### INTRODUCTION

Existing data packet communication solutions for transmission of data packets via multiple available network connections rely upon static routing logic to determine how to communicate data packets through the connections. For example, systems may employ timers for each of the available connections, and the respective timer is used to determine when to pull packets from an input queue for transmission on the connection associated with the timer. These solutions assume that the connections have similar operating characteristics and availability, which trades performance for implementation simplicity, scheduling the next available data packet for transmission via the connection with the most recently expired timer. While the timer approach is simple, the computational efficiency can be impaired in certain situations.

Communication systems (e.g. LACP, ML-PPP) that treat multiple network connections as multiple instances of connections with similar operating characteristics can lead to less effective usage of the multiple connections if the multiple networks have different operating characteristics, as certain networks may be underutilized, or over-utilized. This imprecision in usage can result in greater latency times in delivering data packets, less reliable data packet delivery, more expensive data packet delivery, reduced throughput, and so forth.

Connection management solutions also experience difficulty handling applications where the available connections or their operating characteristics change over time. For example, a timer-based system can be insensitive to changing network performance, since the timers for each connection fire independently, so they may not have an accurate view of the network performance of all other connections. EP 2 837 231 B1 discloses a multipath router that adapts the amount of data sent via a given connection based on factors such as failure or latency.

Systems and methods for data communications which more efficiently utilize multiple connections to transmit data packets with smaller latency times, increased throughput, enable more reliable data packet delivery, or less expensive data packet delivery are desirable.

### SUMMARY

It is technically challenging to provide reliable communication mechanisms that are able to satisfy differing and competing communications requirements by various applications running on networked devices. The communications requirements from each application compete with one another for finite communications resources, and computational approaches are needed to control the coordination and usage of the limited communications resources. These challenges are further compounded in multiple wide area network (WAN) situations, where a controlling device, such as a network router, is coupled to multiple WAN connections, and configured to control how packets are communicated across one or more interfaces coupled to the multiple WAN connections.

The network router, for example, can be an electronic device having routing logic or circuitry, or an on-board processor, which is configured to control packet communications (e.g., packet delivery and/or packet receipt) as required by various client applications.

The network router can be used in practical embodiments, such as controlling communications for a mobile or a stationary communications center, such as a portable media truck (e.g., for a broadcast), or a data center facility (e.g., an emergency dispatch center). Multiple WANs are utilized in these situations by the network router to provide improved uptime and reliability, for example, where connections individually can be susceptible to communication failures (e.g., a period of high demand following an emergency situation or a denial of service attack) or communications challenges (e.g., as the truck drives around, the spectral characteristics of connecting to various cellular towers or satellites changes). Because multiple WANs are used, there are different options and available pathways for communications, and additional approaches are needed to sequence, and/or potentially re-sequence / regenerate a sequence at a receiver end-point. For example, data packets corresponding to a particular media broadcast can be controlled for communications individually across multiple WANs, using the WANs intelligently to distribute the packets among them, and as described herein, potentially also pre-emptively sending redundant packets across connections to improve overall reliability at the cost of efficiency. An example usage of multiple WANs could include a router having multiple SIM slots, multiple wired Ethernet connection ports, and/or multiple satellite connections, among others.

The packet communications can be requested from different types of client applications, and it is important to

**EP 4 523 395 B1**

note that these communications may have different types of communications requirements, namely (i) throughput-emphasizing requirements (e.g., bulk file transfer), or (ii) latency / jitter emphasizing requirements (e.g., real-time usages, such as VoIP, video conferencing). There may be multiple types of client applications demanding communications at or around the same time (e.g., the media truck at a sporting event is simultaneously running applications uploading a file for post-production in a few hours, sending a low quality data feed for quick previews, conducting a video conference for a sideline reporter), and these client communications compete with one another for finite, limited resources.

As described herein, the latency / jitter emphasizing requirements are especially difficult to satisfy as their packet flows are coupled with real-time delivery deadlines, requiring that packets arrive in time with minimal jitter / loss. When packets do not arrive in time or with jitter or loss, there may be issues where, for example, voice and video are not smooth, there are stutters, freezes, pauses, among others. In contrast, applications with flows having throughput-emphasizing requirements may be able to handle latency and jitter, for example, through the use of re-sequencing and buffers. The invention is defined by the independent claims. Further embodiments of the invention are defined by the dependent claims.

In an aspect, a device is configured to monitor, for each wide area network connection of the plurality of wide area network connections, latency, packet loss, and throughput properties for packets transmitted on the wide area network connection; identify, for each packet having a latency/jitter preference in a plurality of packets being routed, an adjusted target latency (ATL) based at least on a per-packet deadline for communication of the packet to a target endpoint; group, using the per-packet ATL and the plurality of wide area network connection properties to establish a plurality of tiered groupings such that each wide area network connection of the plurality of wide area network connections is grouped into a corresponding tiered grouping of the plurality of tiered groupings; and communicate the packet using one or more selected wide area network connections selected from the plurality of wide area network connections, selected at least using the plurality of tiered groupings.

In an aspect, the wide area network connection latency and packet loss properties include an estimated delivery time (EDT).

The wide area network connections belonging to each tiered grouping of the plurality of tiered groupings can be considered functionally equivalent for the selection of the wide area network connection for communications, and a plurality of tiered groupings can include at least a first Tier (Tier 1), a second Tier (Tier 2), and a third Tier (Tier 3), defined based on a relationship between the per-packet ATL and the plurality of wide area network connection properties, EDT and the one-way propagation delay ($T_{prop}$). The number of Tiers is not limited to three, and in a variation, the plurality of tiered groupings includes further Tiers that subdivide Tiers 1, 2, and 3 based on one or more pre-defined connection priority rules, such that the result is a new set of Tiers.

The selecting of the selected wide area network connection among available wide area network connections is iterated, for example, from available wide area network connections in Tier 1, and then Tier 2, and finally Tier 3, and the communication of the packet can use a selected wide area network connection selected from the plurality of wide area network connections. The scheduling of the packet, for example, can be conducted on multiple connections selected from the plurality of wide area network connections for pre-emptive re-transmissions.

Each of the wide area network connections in each Tier can be assigned a Tier-based score, and the scheduling of the packet on multiple connections is conducted to achieve a cumulative score greater than or equal to a pre-defined target score, and in a variation, connection priority rules are ignored if the scheduling of the packet on multiple connections on better (e.g., alternate, higher, lower) Tiers is unable to achieve the cumulative score greater than or equal to a pre-defined target score. A useful bypass mechanism is provided in some embodiments. Connections designated as unreliable or not having recent monitored properties can be assigned a Tier-based score of 0, regardless of their corresponding Tier level to encourage the use of more reliable and/or recent properties. Such connections are still used for packet transmission in order to measure updated monitored properties for them which will determine whether they have become reliable again.

The selecting of the selected wide area network connection among available wide area network connections in a tiered grouping can include pseudo-randomly selecting an available wide area network connection, such that initial selection of the selected wide area network connection for a data flow corresponding to a packet includes an initial pseudo-random selection, and for future packets corresponding to the data flow, the selection of the selected wide area network connection is maintained, for example, until a connection dormancy period threshold has been reached, or an explicit flow termination notification has occurred. This helps a wide area network connection be more "sticky" such that the system is biased towards using a consistent wide area network connection for a particular flow for a particular time, if available. The technical benefit of having a level of enforced consistency is that it reduces inefficiencies associated with instantiating or initiating different connections for use. For example, this can be used to avoid scenarios where the system continually picks between two or more different connections based on a small amount of improvement, causing an inefficient data communication due to non-idealities introduced by switching on and off different connections for usage.

The device can segment and/or classify data flows into (i) throughput preference flows and (ii) real-time flows; and only packets from real-time flows are identified as packets having a latency/jitter preference, such that for packets from the throughput preference flows, grouped Tiers are established based on identical composite properties based at least on

3

one or more measured properties of the plurality of wide area network connections.

In some embodiments, the selecting of the selected wide area network connection among available wide area network connections in a tiered grouping does not use pseudo-random selection, but instead selects based on the connection in the tiered grouping that has the shortest backlog. Backlog is measured in units of time (typically milliseconds) and is defined as the volume of inflight (transmitted but unacknowledged) bytes, divided by the transmission rate (throughput) of the wide area network connection. Selecting the connection with the shortest backlog minimizes the latency experienced by a flow when it flow requires more bandwidth than any single connection can provide on its own.

In some embodiments, the device can track per-packet deadlines of a packet sent on a first wide area network connection that is nearing a deadline but has not been acknowledged; and execute an early re-transmit of the packet that is nearing the deadline but has not been acknowledged using a second wide area network connection having available congestion window (CWND) along with a $T_{prop}$ and backlog value short enough to communicate the packet that is nearing the deadline but has not been acknowledged to the corresponding target endpoint, or determine that there is not an available non-stale second wide area network connection having available congestion window (CWND) along with a $T_{prop}$ and backlog value short enough to communicate the packet; and responsive to the determination, execute an early re-transmit of the packet that is nearing the deadline but has not been acknowledged using one or more stale wide area network connections. Additionally and/or simultaneously, early re-transmissions can be done, for example, on the first wide area network connection that was used to transmit the packet originally.

In further embodiments, an approach is proposed whereby prior to communicating the packet using the selected wide area network connection, a priority is established between the flows to which the packets belong. The priority is translated into defining a packet queue for each flow, and unloading packets from the defined packet queues according to a multitude of modified deficit round robin (DRR) scheduling states.

Corresponding methods, and non-transitory computer readable media are contemplated. As described in various embodiments herein, the system can be implemented as a networking controller that operates as a physical networking device for controlling communications across multiple network interfaces and/or network connections. The networking controller can be implemented as a specific hardware appliance for example, or as a chipset or embedded set of logic gates integrated on within another hardware device or operating on a computer server or software.

Applied uses relate to control of networking connections in situations where connections are unreliable, where there are a multitude of connections to choose from but where networking resources are finite, and/or where sudden load spikes or downtime are possible. For example, the networking approach can be useful in relation to emergency dispatch control, media broadcasting (e.g., in rural areas or congested areas).

This can be useful in situations where there are multiple, demanding applications running together, or even in situations where there is a single, non-demanding application, but where the connections themselves encounter failures or experience issues.

Practical scenarios include sportscasting, live-events broadcasting, public safety, high-uptime / critical infrastructure, among others. The approach helps utilize a combination of connections to help improve overall delivery and communications characteristics of data packets, which is beneficial especially if the connections have divergent networking characteristics that change over time (e.g., as congestion changes), as the position of the device changes (e.g., the device is mobile), and as the price and/or standard of service delivery also changes (e.g., best-efforts type contested connections shared across multiple users).

## DESCRIPTION OF THE FIGURES

In the figures, embodiments are illustrated by way of example. It is to be expressly understood that the description and figures are only for the purpose of illustration and as an aid to understanding.

Embodiments will now be described, by way of example only, with reference to the attached figures, wherein in the figures:

FIG. 1A is a schematic diagram of a pull communication system, according to some example embodiments;

FIG. 1B is a schematic diagram of a push communication system, according to some example embodiments;

FIG. 1C is a flow chart of a method for transmitting data packets for pushing packets to multiple networks based on availability, according to some example embodiments;

FIG. 1D is a flow chart of another method for transmitting data packets for ordering connections based on connection metadata, according to some example embodiments;

FIG. 1E is a flow chart of a further method for transmitting data packets based on a selected ordering of the network for assigning packets to networks, according to some example embodiments;

FIG. 1F is a process flow illustrating the dimensions used to sort network connections for controlling the routing of data packets, according to some example embodiments;

FIG. 2 is a schematic diagram of scheduling data packets of different priority levels, according to some example embodiments;

FIG. 3 is a series of schematic diagrams of the push communication system of FIG. 1B, scheduling data packets of different priority levels, according to some example embodiments;

FIG. 4A is a schematic diagram of connection selection with the push communication system of FIG. 1B, where connections and flow classes are contemplated, according to some example embodiments;

FIG. 4B is a schematic diagram of data packet selection with the push communication system of FIG. 1B, according to some example embodiments;

FIG. 4C is a schematic diagram of data packet assignment with the push communication system of FIG. 1B, according to some example embodiments;

FIG. 4D is a schematic diagram of another data packet assignment with the push communication system of FIG. 1B, according to some example embodiments;

FIG. 5A is a schematic diagram of the push communication system of FIG. 1B scheduling two independent data flows for transmission, according to some example embodiments;

FIG. 5B is a schematic diagram of the push communication system of FIG. 1B scheduling two dependent data flows for transmission, according to some example embodiments;

FIGS. 6A to 6E each show a corresponding screenshot of an interface for managing data packet transmissions, according to example embodiments; and

FIG. 7 is a diagram of data packet transmissions, according to some example embodiments;

FIG. 8A includes two diagrams showing illustrations of unidirectional data packet transmissions, according to some example embodiments;

FIG. 8B includes two diagrams showing illustrations of data packet transmissions occurring in response to acknowledgements, according to some example embodiments;

FIG. 8C is two further diagrams of data packet transmissions occurring without requiring acknowledgements to send further data packets, according to some example embodiments;

FIG. 9A is a diagram of in-flight goodput data, according to some example embodiments;

FIG. 9B is another diagram of in-flight goodput data, according to some example embodiments;

FIG. 9C is a further diagram of in-flight goodput data, according to some example embodiments;

FIG. 10A is a series of diagrams showing data packet transmission where a connection is experiencing congestion, according to some example embodiments;

FIG. 10B is a series of diagrams showing data packet transmission after adjustment of transmission capacity in response to a connection experiencing congestion, according to some example embodiments;

FIG. 11 is an example block schematic illustrating a blended connection aggregation system that can operate as a network gateway, according to some example embodiments;

FIG. 12A is a schematic diagram of a per-flow communication system, according to some example embodiments;

FIG. 12B is a schematic diagram of a per-flow communication system, according to some example embodiments;

FIG. 13A is a diagram showing computation of estimated time delivery, according to some example embodiments;

FIG. 13B is a diagram showing computation of estimated time delivery, according to some example embodiments;

FIG. 14 is a schematic diagram showing wide area network connections in different tiered groupings based on the estimated time delivery, showing three different tiers, according to some example embodiments;

FIG. 15A is a diagram showing an example of pseudorandom hashing and flow stickiness, according to some example embodiments;

FIG. 15B is a diagram showing expiry of stickiness after idle time and after a TCP FIN exchange, according to some example embodiments;

FIG. 15C is a diagram showing how pseudorandom selection helps keep packets of a single flow on the same connection, and also how increased demand traverses multiple Tiers, according to some example embodiments;

FIG. 16 is a diagram showing an example with a variety of connections sorted into a variety of Tiers, used to send a number of packets, according to some example embodiments;

FIG. 17 is a diagram showing examples of early retransmission, according to some example embodiments;

FIG. 18 is a diagram showing an example with a variety of connections sorted into a variety of Tiers, used to send a number of packets for throughput flow, according to some example embodiments;

FIG. 19 shows an example with a 2-level Deficit Weighted Round Robin (DWRR) queue management algorithm, according to some example embodiments;

FIG. 20 is a block diagram of a Per-Flow Packet Receiver, according to some example embodiments;

FIG. 21 is a block diagram of a per-flow communication system workflow, according to some example embodiments;

FIG. 22 is a block diagram showing a workflow for real-time flows, according to some example embodiments;

FIG. 23 is a block diagram showing a workflow for considering early retransmission of inflight packets, according to some example embodiments;

FIG. 24 is a diagram of a per-flow communication system implementation, according to some example embodiments;

**FIG. 25** is a diagram of a per-flow communication system implementation, according to some example embodiments;

**FIG. 26** is a diagram of a per-flow communication system implementation, according to some example embodiments;

**FIG. 27** is an example schematic diagram of computing device, according to example embodiments; and

**FIG. 28** is a diagram depicting a physical computer server rack, according to some example embodiments.

**FIG. 29** is a diagram depicting a practical variation using a reduced computing ability computing device, according to some example embodiments.

## DETAILED DESCRIPTION

Systems, methods and devices for transmitting data packets where multiple connections for transmission are available, alternatively referred to as a blended router or blended system, are described. The described approaches are extended upon below.

Existing solutions to transmitting data packets via multiple available connections for transmission are typically implemented as "pull" based architectures, wherein data packets are transmitted in response to an event generated or defined by the device or system, such as internal timers associated with the multiple available connections.

The internal timers can be responsive to various connection parameters (e.g., a timer duration configured to reduce the recovery time for retransmitted packets) but not to connection parameters of other available connections.

As a result of the independence of timer events, pull based systems can suffer from underutilization (e.g., where the timer value is too long, resulting in an idle connection), or overutilization (e.g., a less reliable connection may be assigned data packets despite poor performance), which may result in greater latency times in delivering data packets, reduced through put, less reliable data packet delivery, more expensive data packet delivery, and so forth.

Methods, systems and devices are proposed herein which transmit data packets according to a push based architecture to transmit data packets via multiple available connections. The disclosed methods, systems and devices include a scheduler configured to, in response to a monitored communication event, retrieve a subset of the operating characteristics (monitored characteristics) of each of the multiple connections, and iteratively assign data packets available for transmission to any of the connections determined, based on their monitored characteristics, to have transmission capacity. In example embodiments, other monitored characteristics of the networks may, in conjunction with transmission requirements associated with the data packets, be used to assign data packets to connections matching the transmission requirements of the data packets.

Scheduling data packets with a push based architecture where multiple connections are available has not been used previously. Typical multipath systems (alternatively referred to as blended connection systems) assign packets and flows to connections on a static basis because they do not take into account flow requirements or the operating characteristics of the connections. For example, a multihomed internet protocol (IP) router assigns packets to connections based purely on the destination IP address in the packet header, matching against its destination routing table. When the connection assignment does not change frequently, it is simpler to implement a pull based architecture. For example, there is no need to handle cases where a large queue of packets have been assigned to a connection by a push scheduler, but now must be recalled or reassigned because the connection has gone offline.

The proposed methods, systems and devices receive data flows, including one or more data packets, from an input network through an input connection.

The proposed methods, systems and devices include a three-stage data pipeline which transmits the data packets over a blended set of connections to a remote peer. New data destined for the multiple connections is passed to a first pipeline stage, where it is queued and subsequently passed to a second pipeline stage associated with each connection of the blended connections. The second pipeline stage compiles statistics on its underlying connection and passes packets to the third pipeline stage. The second stage may provide congestion control functionality and packet buffering to ensure that packets are available for the next pipeline stage. The third stage then writes the packets to the network interface, possibly according to pacing or timing hints provided by the second stage.

Another embodiment may have a single second stage instance which then provides packets to instances of a third stage, each of which manage transmission of packets on a set of network interfaces that share a physical interface card. Other embodiments may exist with different numbers of instances of each of the pipeline stages.

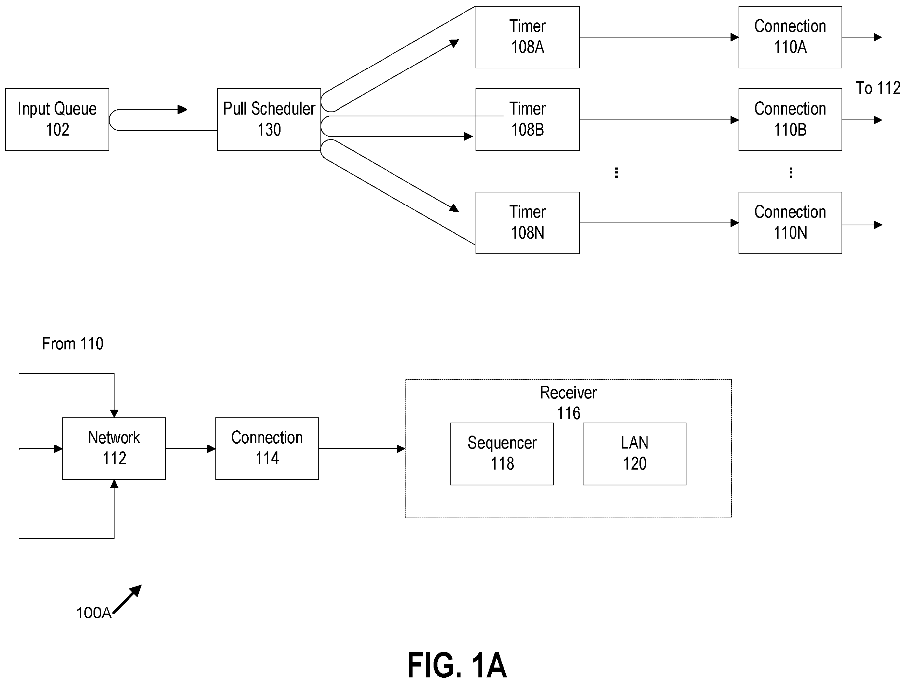

**FIG. 1A** is a schematic diagram of a pull communication system **100A,** according to some example embodiments.

As each connection timer (e.g., timers **108A, 108B,** and **108N** associated respectively with connections **110A, 110B,** and **110N)** wakes up, it calls the pull scheduler **130** and requests data packets for transmission from the input queue **102** of data packets. The data packets can be requested in bursts, with a burst size nominally reflecting 20ms (1/50 Hz) worth of bytes at the estimated bitrate of each timer's corresponding connection. A limitation associated with such a pull timer is that the number of bytes requested on each timer wakeup does not reflect the complete congestion window (representing, for example, the "capacity") of the connection.

Since each timer fires independently, the pull scheduler **130** does not have visibility into the overall transmission state to make globally optimal scheduling decisions. For example, connection **110A** may be a terrestrial broadband connection and connection **110B** may be a bandwidth on demand (BoD) satellite connection. Connection **110A** may be preferred over connection **110B** as a result of expense, latency, etc., however when the connection **110B** timer **108B** wakes and calls into the pull scheduler **130,** the pull scheduler **130** has no visibility into the next wakeup time of the connection **110A** timer **108A** (since timer **108A** fires independently). The pull scheduler **130** does not have the basis to determine whether connection **110A** will be able to handle all of the data packets in the input queue **102,** or whether connection **110B** should be allocated further data packets to complete the transmission.

If connection **110B** does help, pull scheduler **130** may not have means to determine which connection should be used to transmit which of the data packets available for transmission as it only includes visibility into the timers.

The data packets are transmitted across the connections, and subsequently received by a receiver **116** via connection **114.** The receiver **116** includes a sequencer **118** to assemble the transmitted data packets, and may further transmit the assembled data packets via a local area network (LAN) **120.**

In contrast to the pull based architectures, the proposed system in an embodiment is adapted to schedule data packets to specific connections to increase efficient connection utilization. However, not all architectures contemplated necessarily need to be pull based.

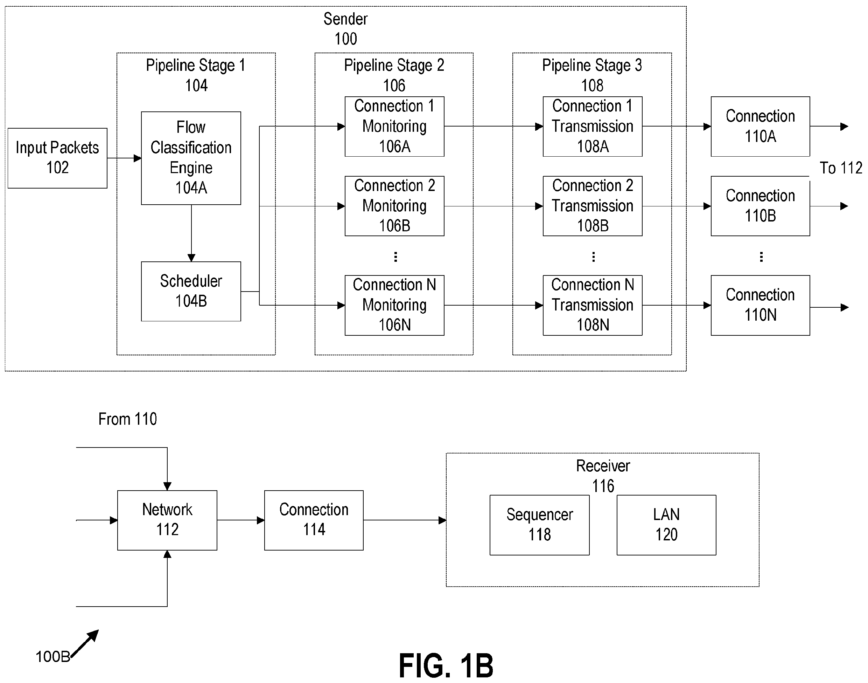

FIG. 1B is a schematic diagram of a push communication system **100B,** according to some example embodiments. In example embodiments, the system **100B** is designed to aggregate connection types that use multiplexing techniques to provide multiple access (MA) to a shared communication channel. For example, orthogonal codes assigned to each node in a Code-Division Multiple Access (CDMA) network allow those nodes to share a set of frequencies and transmit concurrently without interfering with each other.

A property of connection types that use these multiplexing techniques is that reallocation of the available capacity to nodes in the network is quick, typically on the order of tens to hundreds of milliseconds. In example embodiments, the system **100B** is designed with this property in mind, reallocating traffic among the available WAN connections on this time scale.

By contrast, connections that use Demand Assigned Multiple Access (DAMA) techniques, also known as Bandwidth on Demand (BoD), share a communication channel by having the nodes negotiate access to the channel for periods of time. Once allocated, the node has dedicated use of the negotiated portion. As such, sharing of the available capacity occurs through the nodes sequentially using negotiated portions of the channel.

With BoD connections, this negotiation and subsequent reallocation of capacity between nodes typically takes on the order of seconds (a reallocation time, typically mid single digits to low double digits) to complete. In example embodiments, the system **100B** will require changes (described herein) to make effective use of these types of connections.

The long reallocation time (with associated packet loss and / or latency increases) is interpreted as congestion in the current implementation, and typical congestion control methods, reduce usage on connections where congestion is detected to avoid overloading them. However, BoD connections actually require the opposite behaviour (at least temporarily), in order to request and possibly obtain an increased allocation of capacity.

System **100B** includes an input queue **102** receiving data flows, including one or more data packets, from an input network for transmission. Examples of data flows can be file transfers, video file transfers, audio file transfers, voice over internet protocol (VoIP) calls, or data packets associated with a virtual private network (VPN).

The input queue **102** is also responsible for applying a drop policy to packets, in the event that the scheduler (as described herein) is not able to service the input queue **102** at the same rate that new packets arrive from LAN-side clients. This typically occurs if the LAN clients are transmitting at a rate that is higher than the aggregate WAN transmission capacity.

System **100B** includes three stages, alternatively referred to as pipelines or pipeline stages, for transmitting data packets over a blended set of connections to a remote peer according to a push based architecture.

The first stage **104** includes a flow classification engine **104A,** a scheduler **104B** (referred to hereinafter in the alternative as the push scheduler **104)** and receives data packets from the input queue **102,** and queues the data packets for passing onto the second stage **106.** In example embodiments, the first stage **104** includes all of the input queue **102,** the flow classification engine **104A,** and the scheduler **104B.**

The input queue **102** buffers packets received from clients on the LAN-side of the Sender and is responsible for classifying the data packets into flows (alternatively referred to as mapping the data packets into flows), possibly by utilizing or collaborating with a flow classification engine **104A.** The input queue **102** ensures that data flows are fairly serviced by the Scheduler of the first stage **104.**

In example embodiments, the first stage **104,** or its assisting flow classification engine **104A,** monitors or is notified of changes to user-configured settings associated with assigning data packets to connections. User-configured settings include information about how connections should be assigned to priority levels, when those priority levels should become active, as well as user-configurable flow classification rules which may cause packets belonging to a flow to prefer connections with certain monitored characteristics (e.g. a packet belonging to a video stream class may prefer a connection with low latency, whereas a packet belonging to a file download class may prefer connections with a lower monetary cost).

The first stage **104** is regularly informed of the current metadata (e.g., operational characteristics) for each of the multiplicity of connection monitoring instances (as described herein) which correspond to the WAN connections comprising the blended link. This metadata is collected by the monitoring instances **106,** and may include the estimated bottleneck bandwidth of the connection, the estimated minimum round-trip time, recent actual round-trip times, the current congestion window for the connection, and the receipt/loss status for packets previously sent to the next stage. Using this metadata the first stage **104** may also extend the metadata to track the estimate of bytes it has scheduled as inflight on this connection, and further subdivide that total as new bytes, retransmit bytes, or dummy/probing bytes. All of the metadata collected and tracked by the first stage **104** is referred to as the monitored characteristics (e.g., the operational characteristics).

Using all available monitored characteristics, the first stage **104** will then determine if packets should be sent to the next stage, and if so, which connections should receive the packets. The set of packets provided to a connection monitoring instance may include duplicates of packets previously sent (either to that same connection monitoring instance or to a different connection monitoring instance). Alternately, the Scheduler may determine that a given connection monitoring instance is not currently eligible to receive packets, even if the connection for that instance currently has capacity. The assignment of packets to specific stage-3 instances is discussed elsewhere in this document.

The second stage **106** includes a connection monitoring instance for each connection of the multiple available connections (e.g., connection monitoring instance **106A, 106B,** and **106N** associated respectively with connections **110A, 110B,** and **110N).** The connection monitoring instances of the second stage **106** monitor the associated connections and determine or retrieve statistics associated with the performance of the connection (e.g., a latency) called the operating characteristics. The second stage **106** may provide congestion control functionality and packet buffering to ensure that packets are available for the next stage. The second stage **106** passes packets to the third stage **108,** which includes an output queue for each connection (e.g., output queues **108A, 108B,** and **108N).** The third stage **108** writes the packets to the network interface, possibly according to pacing or timing hints provided by the second stage **106.**

In some embodiments, the second stage **106** may implement one or more Router to Radio Interface (R2RI) protocols (e.g. PPPoE (RFC 5578), R2CP, DLEP (RFC 8175)) to better support the bandwidth allocation process for BoD connections.

The second stage **106** is responsible for receiving packets from the first stage **104,** queuing them locally, and providing groups of packets as bursts to the next pipeline stage. The second stage **106** also tracks the metadata for its associated connection, based on acknowledgements received from the peer or recipient.

The purpose of the queue in the second stage **106** is to ensure that there are always packets available to the next pipeline stage to write to the network device for transmission. Some embodiments may include priority metadata as part of each packet info, so that new packets which arrive from the first stage **104** may be re-ordered in the queue to provide preference to higher-priority packets.

In order that the second stage **106** has sufficient packets buffered to ensure packets can be provided to the third stage **108,** the second stage **106** may provide altered metadata to the first stage **104.** For example, according to some example embodiments, the second stage **106** may choose to report a larger congestion window (i.e., "over-advertise") so that the first stage **104** provides additional packets which can be buffered in the second stage **106** for when the third stage **108** completes writing the actual congestion window packets. In other words, in some embodiments, the second stage **106** over-advertises the congestion window to account for the processing overhead/delays incurred by the entire pipeline **104/106/108,** in order to ensure the network is always kept filled with inflight bytes.

In some embodiments, the pipeline stages or the network itself is known to employ compression techniques, which effectively increases the number of inflight bytes that can be supported by the network. "Over-advertising" the congestion window to the first stage **104** is also employed in this scenario to ensure that the network is always kept filled with inflight bytes.

The second stage **106** may also provide altered metadata to the first stage **104** in order to facilitate a change in allocation of capacity in a BoD connection (i.e., cause the first stage **104** to schedule packets on this connection as if it had a higher capacity in order to trigger the BoD connection to allocate the higher capacity). This altered metadata may include information that breaks down the higher capacity into different requested types/priorities. For example, the higher incremental capacity used to probe a BoD connection is typically comprised of redundant/dummy packets since the probe packets are likely to be dropped by the BoD connection until the DAMA reallocation process is completed.

The advertisement or over-advertisement of capacity from the second stage **106** to the first stage **104** does not necessarily need to immediately result in probing for higher incremental capacity. The first stage **104** ultimately still makes the decisions for how packets are assigned to connections. One embodiment might wait until the CWND on all non-BoD connections is fully consumed (or nearing full consumption) before instructing the second stage **106** to kick off the DAMA reallocation process.

The queue in the second stage **106** also enables fast notification of failure to the previous stage if something happens to the underlying network connection. Packets that have been provided to the third stage **108** and written to the network must be assumed to be in transit even if the network interface subsequently reports down, meaning that a timeout must occur before those packets can be marked as lost. However, packets still queued in the second stage **106** can be immediately marked as lost once the second stage **106** is notified that the connection is no longer available, which makes them immediately eligible for prioritized retransmission on alternative connections.

Before being passed to the third stage **108,** some embodiments may attempt to explicitly pace the rate of packet transmission by assigning a nominal timestamp to each packet that indicates when the next stage should attempt to send said packet over the connection. Such a timestamp could be determined based on an estimated bottleneck bandwidth of a connection (e.g., a connection to which the packet is being assigned to), and packet sizes in order to prevent network congestion at or before the network bottleneck link.

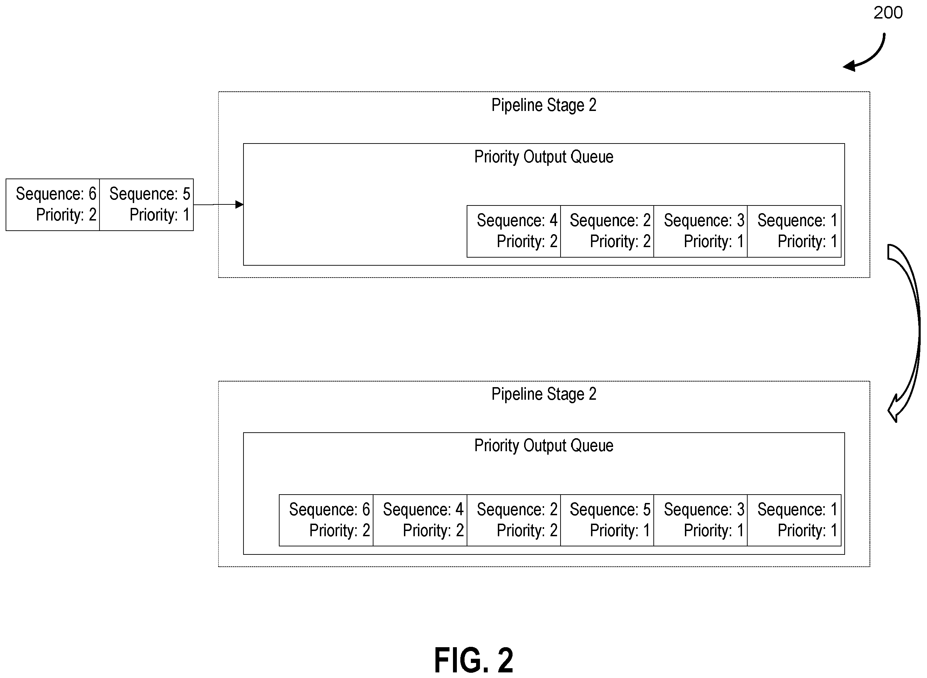

**FIG. 2** at **200** shows an example of an embodiment where the second stage **106** supports prioritized packets. In **FIG. 2,** the head of the queue appears to the right, and the tail of the queue appears on the left. In the top portion of the **FIG. 2,** (e.g., a first step), the first stage **104** provides the second stage **106** connection monitoring instance with a new list of prioritized packets. The bottom portion of **FIG. 2,** (e.g., a second step) shows that these new packets have been added to the priority queue in priority order so that all priority 1 packets will be dequeued before any priority 2 packets are dequeued. Packets at the same priority are kept in sequence order.

In example embodiments, not shown, the second stage **106** may have a single connection monitoring instance which then provides packets to instances of a third stage, each of which manage transmission of packets on a set of network interfaces that share a physical interface card. Other embodiments may exist with different numbers of instances of each of the pipeline stages.

Feedback in the form of metadata, or callbacks (which may be a mechanism used to send metadata, for example), may be sent from a stage to a previous stage, or a stage may receive notification from a different part of the system. Any of these actions may trigger (i.e., a push) a stage to send packets to the next stage.

The third stage **108** receives packets from the second stage **106** writes them to the network **112** via one or more connection transmission instances (e.g., connection transmission instances **108A, 108B,** and **108N** associated respectively with connections **110A, 110B,** and **110N).** In some embodiments all second stage **106** connection monitoring instances provide packets to a single connection transmission instance, or each connection monitoring instance may be associated with a connection transmission instance.

Some embodiments of the third stage **108** may use a queueing mechanism to allow the previous stage to provide hints about when packets should be sent. For example, hints could come in the form of a "nominal send time" associated with the packet as metadata. If the next packet to be sent has a nominal send time that is in the future, the third stage **108** will wait until that time before sending that packet. Urgent packets may be flagged with an immediate timestamp which may cause them to be sent ahead of other queued packets. In order to prevent starvation of non-urgent packets, some embodiments may queue urgent packets after non-urgent packets which have a nominal send time that is in the past.

Some embodiments may include a callback function as part of the packet metadata as the packets move through the pipeline from the second stage **106** to the third stage **108.** This callback can be used to trigger a notification on the second stage **106** to indicate that the third stage **108** has transmitted the packet. Such a notification may be used to trigger a new batch of packets to be pushed from the second stage **106** into the third stage **108.**

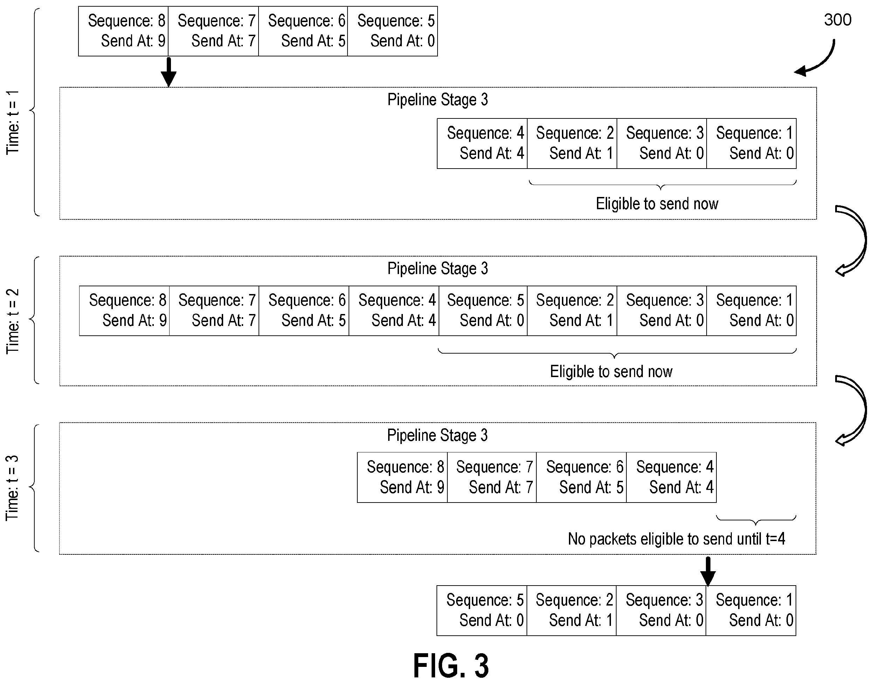

**FIG. 3** at **300** shows the progression over time of an embodiment where the packets provided by the second stage **106** contain a "Send At" hint (nominal send time) that requests that they not be sent before the specified time. Packets with a "Send At" time of 0 should be sent as soon as possible. **FIG. 3** illustrates an example for all of these cases (e.g. use of a nominal send time in past for urgent packets, and how the system avoids starvation of non-urgent packets).

In the state depicted at t = 1, the third stage **108** instance's packet queue contains 4 packets, three of which are currently eligible to be sent, and a second stage **106** instance is providing 4 new packets, the first of which has Seq 5 (sequence order 5) and should be sent immediately.

In the state depicted at t = 2, the new packets have been added to the third stage **108** priority queue. Note that this embodiment has chosen to queue the packet with Seq 5 for sending after the packet having Seq 2 because, at the time Seq 5 was queued, Seq 2 was already eligible to send. Freezing the order of packets at the head of the packet queue in this manner prevents starvation where a constant stream of new urgent packets which are to be sent immediately can prevent non-immediate packets from being sent, even though they may have become eligible to send long before the latest immediate send urgent packet arrived.

In the state depicted at t = 3, the third stage **108** has dequeued the first four packets from the output queue and has provided them to the network interface. There are currently no packets eligible to send until time t = 4, so the third stage **108** instance would need to wait to send more packets until either time advances to t = 4, or until new packets arrive that should be sent immediately or at time t = 3, even if there is currently write capacity on the network interface.

Packets may be passed from one stage to the next in order at the time that each stage determines is optimal.

Similar to **FIG. 1A,** the data packets are transmitted across the connections, and subsequently received by a receiver **116** via connection **114.** The receiver **116** includes a sequencer **118** to assemble the transmitted data packets, and may further transmit the assembled data packets via a local area network (LAN) **120.**

In contrast to system **100A,** the push communication system **100B:** does not include an independent timer associated with each connection - instead, scheduling of packets onto connections occurs in a centralized location; includes the push scheduler **104** having access to the monitored characteristics of each connection, and includes the push scheduler **104** which is activated in response to one or more monitored events occurring rather than based on a timer. For example, the one or more monitored communication events may include an acknowledgement / negative acknowledgement (ACK/NACK) from the recipient of previously transmitted data packets, or the arrival of new data packets at the input queue **102,** and so forth.

In example embodiments, rather than only 20ms of packets being transmitted, the entire connections (congestion window) CWND can potentially be consumed or allotted by the push scheduler **104.**

With access to the monitored characteristics of each connection, the push scheduler **104,** may be configured to optimize packet scheduling decisions. For example, data flows with specific transmission requirements can be preferentially assigned to connections able to satisfy the requirements associated with the data flow, rather than be subject to assignment largely based on the wake order of timers. In an illustrative example, a first data flow requires transmissions having less than 50ms latency.

Connections **110A, 110B** and **110N** have 5ms, 45ms, and 80ms latency, respectively. With the pull scheduler **130,** if the 50 Hz timer for connection **110B** (45ms latency) woke up first, said timer would have been allowed to schedule packets for this first data flow onto connection **110B.** With the push scheduler **104,** the data flow can be preferentially scheduled on connection **110A** (5ms latency) until connection **110A's** CWND is fully consumed before overflowing onto connection **110B** (45ms latency).

To enable bidirectional communication, a single instance of a multipath endpoint can include all components described in **FIG. 1B.** Specifically it may include one or more instances of Sender **100** to support upstream communication to other multipath endpoints, and one or more instances of Receiver **116** to support downstream communication from other multipath endpoints.

According to some embodiments, for example, one or more of the available connections is a BoD connection, and the push scheduler **104** can cause more data to be allocated to the BoD connection in order to request more capacity from the network, based on criteria such as, connection **110A's** CWND being fully consumed (or nearing full consumption); while more packets are available at the input queue **102** that are eligible to be transmitted on connection **110B** (e.g., based on per-flow rules).

In example embodiments, the push communication system **100B** can enable more accurate/fair quality of service (QoS) and Active Queue Management (AQM) packet dropping rules to be applied at the input queue **102.** Referring again to the previous example, the flow with the 50ms latency requirement will never be able to utilize a 80ms connection. Since the push scheduler **104** has a consistent snapshot of the entire system, it can calculate the flow's fractional usage and fair share of the total capacity excluding the 80ms connection.

A potential advantage of the push-based scheduling approach is that the full set of metadata for the plurality of connections comprising the blended links are available to the push scheduler **104** in order to optimally assign packets to target connections.

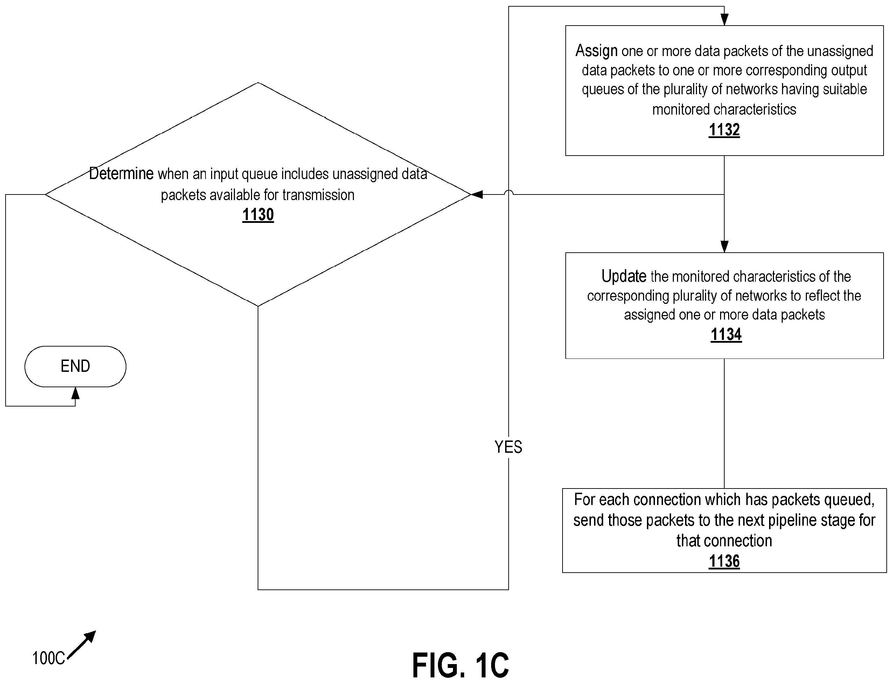

**FIG. 1C** is a flow chart of a method **110C** for transmitting data packets using system **100B** or other push communication systems, according to some example embodiments.

At block **1130,** the method **100C** senses when an input queue includes unassigned data packets available for transmission.

At block **1132** the method **100C** includes assigning one or more data packets of the unassigned data packets to one or more corresponding output queues of the plurality of networks having suitable monitored characteristics.

At block **1134** the method **100C** includes updating the monitored characteristics of the corresponding plurality of networks to reflect the assigned one or more data packets.

At block **1136** the method **100C** communicating the assigned data packets out of the output queues corresponding to each network of the plurality of networks to a destination device.

In example embodiments, a method for transmitting data packets with system **100B** includes a loop of the following steps each time the push scheduler **104** is triggered by an external event:

1. Request a data packet from the input queue **102;**
2. Assign the received packet to a connection for transmission; and
3. Repeat steps 1 to 2 until there are either: a) No more packets available at the input queue **102;** or b) There is no more available transmission capacity (e.g., as defined by the congestion window (CWND) metric) on any of the active connections.

The described method can be implemented such that the push scheduler **104** does not take into account any data flow specific requirements. In such an embodiment, the system **100B,** assigns the received packets based on an ordering of the connections.

The ordering can be based on monitored characteristics of the connection, which, for example, may include a subset of the operating characteristics estimated by a congestion control algorithm. In one embodiment, the BBRv1 algorithm is used, but other embodiments could include examples such as BBRv2, TCP Reno, TCP LEDBAT, proprietary implementations to handle specific connection types such as BoD, etc. In the subsequent discussion on operating characteristics specific to BBRv1, reference is made to a pipe analogy, wherein two endpoints are modelled as a series of interconnected pipes, where each pipe segment can have differing diameters and lengths, for illustrative purposes only.

The operating characteristic may be a measure of the minimum time required for a transmitted packet to reach the destination endpoint (e.g., receiver) and get acknowledged (e.g., via an ACK message from the receiver to the sender). This duration is termed the "Round-trip Propagation Delay" (abbreviated to "RtProp"), and is measured in units of time (e.g. milliseconds). In terms of the pipe analogy, this value represents the total length of all pipe segments from the sender to the receiver and back.

The operating characteristic may be maximum rate at which data can move between the endpoints along the pipe segment with the smallest diameter. The smallest pipe diameter, referred to as the "bottleneck" segment, determines the maximum rate at which data can move between the sender and receiver, which is also referred to as the "Bottleneck Bandwidth" (abbreviated as "BtlBw"). For example, an approach used to estimate BtlBw is described in IETF draft: https://tools.ietf.org/html/draft-cheng-iccrg-delivery-rate-estimation-00.

Table 1 shows an example set of WAN connections and their properties, an example subset of operating characteristics chosen by the scheduler **104** to become monitored characteristics, and the resulting sort order:

**Table 1: Example WAN connections and their sort order**

| Connection Operating/Monitored Characteristics | | | | | Resulting Sort Order |
|---|---|---|---|---|---|
| Interface Name | Administrator / User Preferred Priority Level | RtProp | BtlBw | Total CWND | |
| wan2 | Primary | 55 ms | 10 Mbps | 69 KB | 1 |
| cell1 | Secondary | 25 ms | 7 Mbps | 22 KB | 2 |
| cell0 | Secondary | 90 ms | 88 Mbps | 990 KB | 3 |
| wan0 | Tertiary | 500 ms | 3 Mbps | 188 KB | 4 |
| wan1 | Tertiary | 500 ms | 700 Kbps | 44 KB | 5 |
| wan3 | Tertiary | 500 ms | 700 Kbps | 44 KB | 6 |

This example method sorts the connections over the following dimensions, moving to the next dimension only if the current dimension compares as equal between the connections:

1. Increasing Preferred Priority Level;
2. Increasing RtProp;
3. Decreasing BtlBw; and
4. Increasing Interface Name.

Note how the result of the sort operation keeps the order of the connections relatively stable, since the sort dimensions are all parameters that are not expected to change frequently.

This stable sort order is intentional, so that packets arriving at the Input Queue will tend to be "sticky" on the same sets of connections (the ones sorted to the top of the list), only "overflowing" onto connections lower in the sort order if the input demand exceeds the total CWND of those sorted higher.

Note how the sort criteria in this example is not flow specific. For example, the Administrator or End User may only want high priority application flows to be transmitted over the metered cell1 and cell0 connections (an example of a transmission requirement), meaning those flows would want a resulting sort order that places cell1 and cell0 lower in the list. Similarly, there may be some flows that have a maximum latency limit, such as a VoIP call where the End User deems it unusable for interactive conversation if the latency exceeds 150 ms. For these flows, it may be desired to have a resulting sort order that uses RtProp as the primary sort dimension. Embodiments that extend the sort criteria to be flow specific will be discussed in subsequent paragraphs.

The Scheduler is also responsible for deciding the retransmission policy of packets. In example embodiments, system **100B** is configured so that if a packet is reported as missing by the Receiver, the Scheduler always marks the packet for retransmission. This is desirable for many flows, but others may not want this at all (because the additional latency or the packet potentially arriving out of order makes the packet unusable by the application), or may only want retransmission attempts within a certain time period.

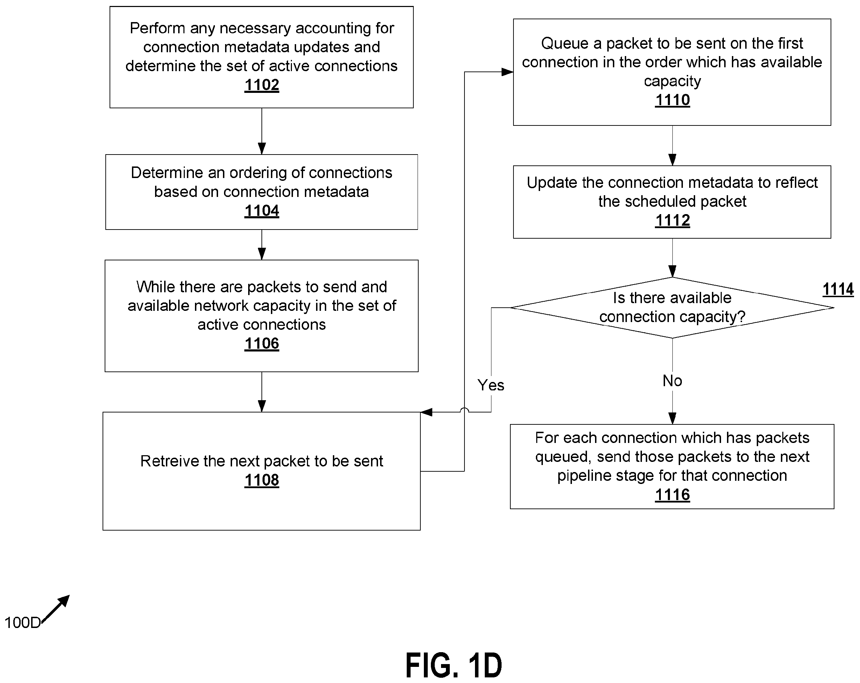

**FIG. 1D** is a flow chart of another method for transmitting data packets, according to some example embodiments.

One embodiment of a simple scheduling loop is as follows:

> 1. Perform any necessary accounting for connection metadata updates and determine the set of active connections.
> 2. Determine a preferred Ordering of connections based on connection metadata (monitored characteristics, such as monitored operating characteristics).
> 3. While there are packets to send and available network capacity in the set of active connections:
>
> > a. Get the next packet to be sent.
> > b. Queue a packet to be sent on the first connection in the Ordering which has available capacity.
> > c. Update the connection metadata (monitored characteristics) to reflect the scheduled packet.
> > d. Repeat.
>
> 4. For each connection which has packets queued, send those packets to the next pipeline stage for that connection.

Such an embodiment treats all packets as being equivalent for the purposes of the preferred ordering of the connection. In this case, the packets can be thought of as belonging to the same class of flow (even though separate packets may belong to logically separate flows, from the Scheduler's perspective, there is no distinction between these flows for the purpose of connection assignment).

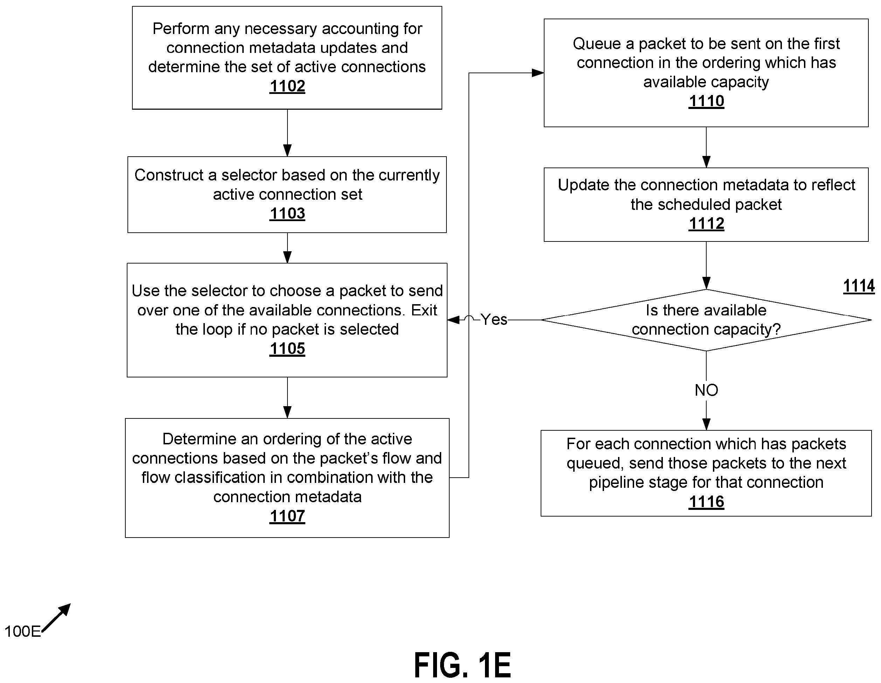

**FIG. 1E** is a flow chart of a further method transmitting data packets, according to some example embodiments.

An embodiment of the scheduler which is able to distinguish between different classes of flow (i.e., ICMP echo request/response vs. video stream vs. file transfer) and even between individual flows within the same class (video stream between hosts A and B vs. video stream between hosts A and C) might be provided as follows.

> 1. At block **1102,** perform any necessary accounting for connection metadata updates (monitored characteristics) and determine the set of active connections.
> 2. While the active connection set has capacity (block **1114):**
>
> > a. At block **1103,** construct a Selector based on the currently active connection set.
> > b. At block **1105,** use the Selector to choose a packet to send over one of the available connections. Exit the loop if no packet is selected.
> > c. At block **1107,** determine an Ordering of the active connections based on the packet's flow and flow classification in combination with the connection metadata (monitored characteristics).
> > d. At block **1110,** queue a packet to be sent on the first connection in the Ordering which has available capacity.
> > e. At block **1112,** update the connection metadata to reflect the scheduled packet.
> > f. Repeat.
>
> 3. At block **1116,** for each connection which has packets queued, send those packets to the next pipeline stage for that connection.

These two sample methods (the methods shown in **FIGS. 1D** and **1E**) are similar, with the method shown in **FIG. 1D** being a simplified and optimized version of the more general method in **FIG. 1E**.

The first method could be converted to the second method by defining a single flow class and defining a selector that matches all packets. Given this, the second method **(FIG. 1E)** will be discussed in more detail, and the same discussion will be applicable to the first method **(FIG. 1D)**, subject to the limitations noted above.

The first step is to update any pending metadata accounting (monitored characteristics) in order to determine the set of active connections. In one embodiment, the set of active connections are the connections which are not subject to unreliable connection backoff (i.e., connections whose usage is being restricted because of recent failures to reliably deliver packets).

Other embodiments may further restrict the set of active connections by, say, eliminating connections whose metadata (monitored characteristics) do not match any of the currently defined flow class requirements (i.e. assuming all packets must match one defined flow class then if a connection would never be selected by any flow class then it could be considered inactive; for example, if all flow classes specified a maximum RTT of 500ms, connections with RTT > 500ms could be considered inactive).

The set of active connections has capacity to send packets if at least one connection in the set has available CWND (congestion window), meaning that the number of inflight bytes currently tracked by the Scheduler for this connection does not exceed the CWND that has been determined for this connection. In one embodiment, the CWND for the connection may be the CWND as reported by the next pipeline stage, or the Scheduler may choose to reduce the reported CWND if throttling or priority routing are in effect.

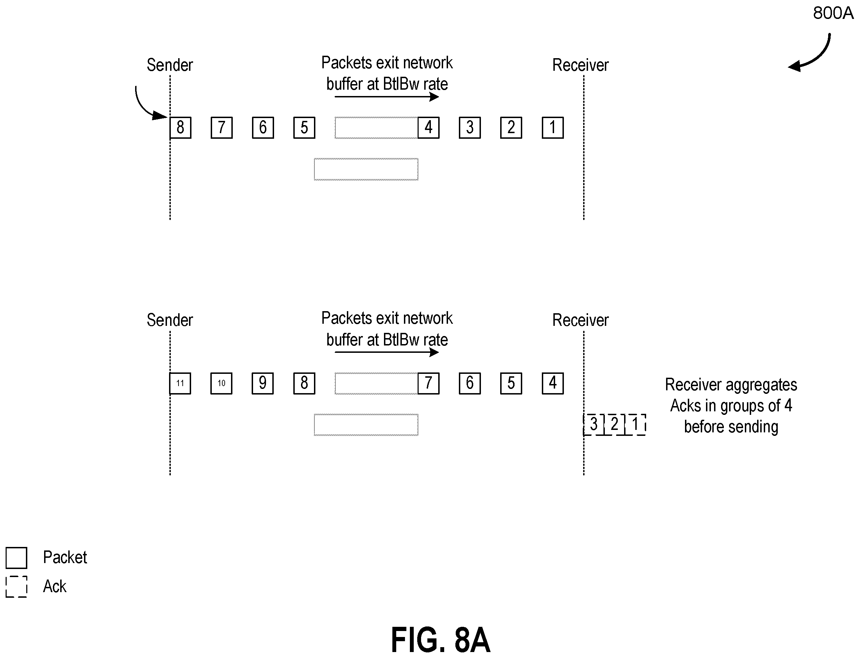

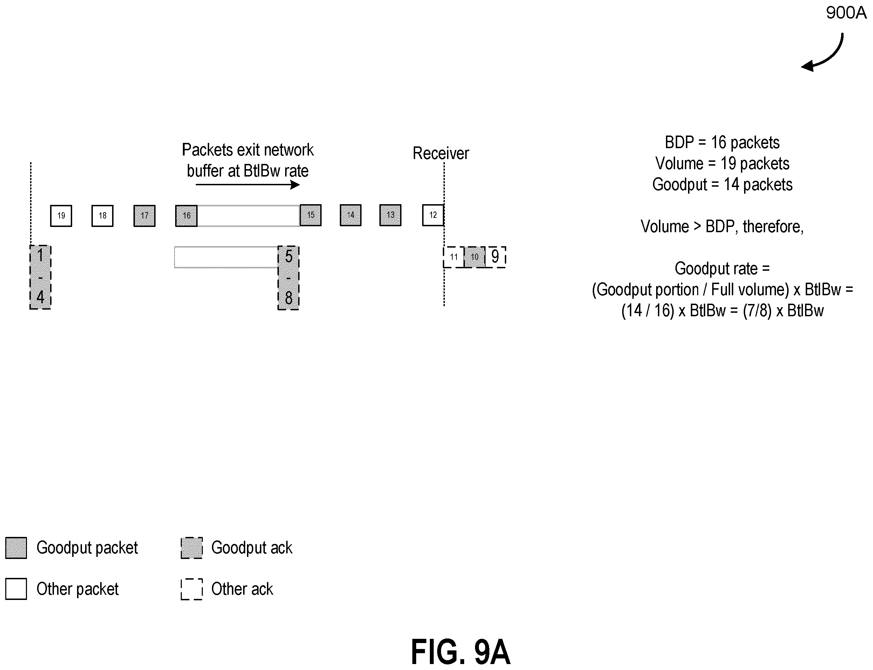

In one embodiment, a connection that is being throttled to a certain rate has its CWND reduced by the same factor as the throttle rate over the bottleneck bandwidth (or the CWND is unchanged if the throttle rate is higher than the bandwidth estimate). Similarly, a connection's CWND may be reduced if it is subject to priority routing (where the embodiment supports connection grouping into priority levels which are activated when total goodput (throughput excluding overhead such as protocol headers, control packets, and retransmits) of all connections in higher-priority levels drops below the configured threshold for the level to be activated). Various methods for determining the CWND reduction in these scenarios will be described subsequently in relation to **FIGS. 8A-8C** and **9A-9C.**

Connections assigned to priority levels which are inactive (the total goodput plus unused bitrates for all connections in higher priority levels meets or exceeds the activation bitrate for the priority level) have an effective CWND of zero, and connections in priority levels which are non-primary have their CWND set to zero if the estimated total goodput bitrate of all connections in the currently active set of priority levels meets or exceeds the activation threshold for the lowest active priority.

In other embodiments using priority routing, connections in the non-primary levels can be capped at a rate lower than their bottleneck bandwidth, such that they only contribute enough to close the gap to the configured activation threshold. This can be done, for example, for cost saving, when the non-primary connections are more expensive connections meant to be used only during emergencies. Similar to throttling, the CWND is reduced to reflect the capped rate these connections should be sending at.

The loop in step 2 of the method can execute so long as a connection in the active set has capacity.

Step 2a (block **1103** shown in **FIG. 1E**) constructs a Selector to be used to find packets which are eligible to be sent on one of the active connections with active capacity. In some embodiments, a Selector consists of the set of flow classes which are compatible with the current set of active connections with capacity.

For example, if a flow class requires a connection to have a maximum latency of 500ms, and the active connections with available capacity all have latencies above 500ms, then that flow class would be excluded from the Selector. Some embodiments may choose to include flow classes in the Selector that would not normally match the criteria for the active connections with capacity if the embodiment can determine that there is currently no connection (active or inactive, with or without available capacity) that meets the criteria for such a packet. In that case, the embodiment may choose to violate the match criteria in favour of sending the packet rather than holding the packet until it times out and is dropped. Other embodiments may choose to enforce a strict matching policy where packets matching flow classes which have no eligible connections are never sent.

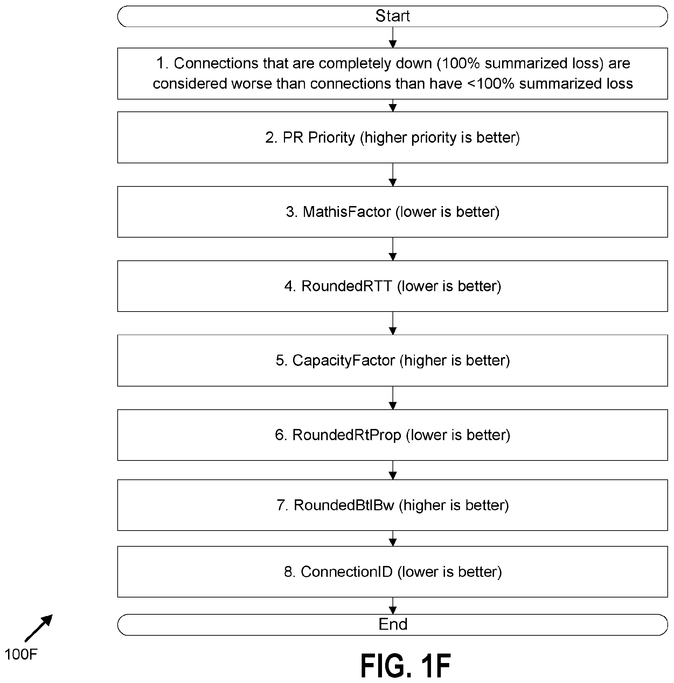

In another embodiment, shown in an example sort order in process flow of **FIG. 1F**, an alternate approach can be utilized for computationally determining or establishing the sort order for controlling the routing of data packets to the various network connections.

Some or all of the input parameters can be rounded/bucketed before being used in the sort order determinations. The technical improvement from rounding and bucketing is to keep the sort order as "stable" as possible so that changes in sort order are not constantly occurring (e.g., without the rounding and bucketing, two close values may cause "jitter" by having the sort change continuously as their values fluctuate over time.

The factors that influence its decisions include: keeping the sort order as "stable" as possible, so that packets do not get unnecessarily split over multiple WAN connections (splitting increases the chances for self-induced out-of-order and jitter events); and taking into account both measured properties of the connection, and external directives that are not measured.

Values for rounding can include the following:

Latency-related values (RtProp, RTT) are rounded to the nearest multiple of 50ms, subject to a floor of 1ms after rounding.
Throughput-related values (BtlBw) are rounded to the "nearest order of magnitude".

Packet loss (worst value over the 3 sliding windows) is rounded to the nearest order of magnitude. Note that the raw values here are limited to the range [0,100], so the output values are limited to the set (0,1,2,3,4,5,6,7,8,9,10,20,30,40,50,60,70,80,90,100).

An example of rounding to the nearest order of magnitude is provided in the below table. The raw value is shown, its computed order of magnitude, then the resulting rounded value.

| Raw Value (Range) | Order of Magnitude | Rounded Value |
| --- | --- | --- |
| 0 | 1 | 0 |
| 1 | 1 | 1 |
| 2 | 1 | 2 |
| 10-14 | 10 | 10 |
| 15-24 | 10 | 20 |
| 85000-94999 | 10000 | 90000 |
| 95000-99999 | 10000 | 100000 |
| 100000-149999 | 100000 | 100000 |
| 150000-200000 | 100000 | 200000 |

A specific improvement based on improving a networking routing order for controlling the use of network interfaces is described in some embodiments wherein a composite property for round-trip time (RTT) and packet loss is utilized to predict throughput based upon the Mathis Equation for establishing an upper bound for TCP throughput given RTT, packet loss, and MSS. The Mathis factor can be utilized to modify the sort order for routing networked packets.

Measured properties can include: packet loss over 3 separate sliding windows (500ms, 3s, 30s), which is further summarized as the worst value over the three windows; current network round trip time (RTT); bandwidth round trip propagation time (BBRv1) parameters: RtProp (network propagation delay); and BtlBw (throughput estimate). External directives, can include priority routing (PR) rules, among others, but can also include flow-specific rules/requirements.

In some embodiments, the BBRv1 measured properties differ from their design in the original BBRv1 IETF draft. For example, to consider embodiments that might run on systems that are less consistent in their execution time, the size of the sliding window used to compute BtlBw may be increased to cover a long duration of time (hiding the variability due to execution inconsistency), but the window duration may also be immediately shortened if network loss or latency increase events occur, since those indicate that the BtlBw may have actually changed and any long history in the sliding window must be forgotten.

For similar execution inconsistency reasons, the input parameters used to measure RtProp may be changed to include more than the network propagation delay, adding portions of the execution/processing time, since that time can be non-trivial, and consistently contributes to the actual delay experienced when transmitting packets and waiting for a response. In some embodiments, this is referred to as "System RtProp", as opposed to "Network RtProp" which only consists of the network propagation delay. In these embodiments, "System RtProp" and "Network RtProp" may be used for varying computations, depending on the intended purpose. For example, in calculating CWND, "System RtProp" is appropriate, so that the pipeline contains enough data inflight to account for processing delays. However, when sorting network connections for determining packet routing, "Network RtProp" is more appropriate, since the preferred routing decision is independent of system execution delay.

Packet loss, latency, and throughput are not completely independent variables. The three of them combined influence each other depending on the application's congestion control behaviour. This is because for example, with TCP, higher packet loss results in longer periods of over-the-air "silence" (underutilized channel) as the sender waits for duplicate acknowledgements (DUP ACKs) or retransmit timeouts (RTOs) to occur.

As such, some composite properties are determined and used in the final sort approach. Specifically:

**Mathis Factor:** This composite property takes into account RTT and packet loss to predict throughput, and is based on the Mathis Relation that gives an upper bound for TCP throughput given RTT, packet loss, and MSS. When comparing the properties of any two network connections to determine their sort order, MSS can be considered a constant, so this relation indicates that expected throughput is proportional to the inverse of (RTT * sqrt(PacketLoss)). The relation is utilized in this example as a practical implementation to establish a factor that is utilized in directly controlling the operation of a network controller or a router. For each connection, the system determines the MathisFactor as: MAX(RoundedRtt,1ms) * sqrt(RoundedSummarizedPacketLoss). Connections with smaller MathisFactor values are considered better. The calculation is a function of two independently measured properties, so the relationship between them determines how connections will compare to each other. The Mathis Factor can be maintained and stored in a data object, such as a corresponding Mathis Factor data value associated with each connection, and stored, for example, in an array of data values alongside other monitored characteristics.

For example, at one extreme, two connections with 0% packet loss will always have the same MathisFactor - their actual RTT values do not matter. In this scenario the MathisFactor does not influence the sort order - it will be determined through comparison of subsequent measured and composite properties.

At the other extreme, if two connections have 100% packet loss (RoundedSummarizedPacketLoss=1.0), only their RoundedRtt values will determine how they compare to each other. In some embodiments, this is not desirable, so connections with 100% packet loss are filtered from the available choices at an earlier stage.

Between the two extremes, connections with both low RTT and low packet loss will compare better than those with higher values. However, a connection with high percentage loss can still compensate by having a low RTT and have a same Mathis Factor as a connection with a low percentage loss. For example:

Connection A: 100ms RTT, 0.01 (1%) loss => MathisFactor=10
Connection B: 19ms RTT, 0.25 (25%) loss => MathisFactor=9.5

In this example, even though Connection B has significantly higher loss (25% vs 1%), its lower RTT compensates and causes it to compare with a better MathisFactor than Connection A. The explanation for this is that Connection B's lower RTT allows it to exchange packet acknowledgements (positive and negative) for the lost packets, and complete any necessary packet retransmissions faster than Connection A can with its higher RTT, even though it has a smaller percentage loss.

**Capacity Factor:** This composite property takes into account BtlBw and RtProp and is determined as: RoundedBtlBw / MAX(RoundedRtProp, 1ms). The units are "bytes per second per millisecond", which has no physical meaning, but provides a way to normalize the bandwidth that the connection can achieve per unit of RtProp. In other words, a connection that is able to achieve more bandwidth per millisecond of its RtProp is considered more efficient than one that achieves less. Efficient transmission in this context means a connection that achieves more bandwidth per millisecond of propagation delay (RtProp).

Once all of the raw inputs have been processed and composite properties calculated as described above, the actual sort mechanism can execute serially as follows:

Moving from one comparison to the next only occurs if all of the previous lines compare as equal. If a comparison is unequal, the remainder of the comparisons are irrelevant and are skipped. The choice of comparison, in some embodiments, is conducted on a flow classification basis (e.g., VPN vs. VoiP vs. ping packets vs. FEC packets), and for each different flow, the comparison criterion list could be different (e.g.. each could have different pre-defined most important characteristic, second most important characteristic, third most important characteristic, and so on). Each of these characteristics can be iterated through from most important and so on, until the connections themselves can be sorted and put into an order sequence. In some embodiments, depending on flow classification, a first pre-step is to select a subset of connections that are suitable for sending the type of data packet in the flow classification, and then an order is imparted to them before packet assignment is carried out.

1. Connections that are completely down (100% summarized loss) are considered worse than connections than have <100% summarized loss.
2. PR Priority (higher priority is better)
3. MathisFactor (lower is better)
4. RoundedRTT (lower is better)
5. CapacityFactor (higher is better)
6. RoundedRtProp (lower is better)
7. RoundedBtlBw (higher is better)
8. ConnectionID (lower is better)

A rendering of the sort mechanism is shown in **FIG. 1F.** In an example sort mechanism, a real-time flow includes a comparison of RTT/RtProp first, and then if equal, it would then compare reliability, and then if also equal, then compare transmission rate, etc. Depending on a flow type, there may be different sort orders. For example, a flow that wants throughput might compare transmission rate first. If equal, then compare at reliability. If also equal, it might decide to assess nothing else and then simply choose arbitrarily.

In some embodiments, flow requirements (e.g., real-time vs throughput) can dictate the order and number of comparisons. For example, a real-time flow might prefer to compare RoundedRTT and RoundedRtProp only, ignoring all other properties. A throughput flow may decide to only compare the MathisFactor and CapacityFactor.

The above described approach relates to explicit sort dimensions. There are also implicit sort dimensions that tend to occur as a by-product of typical application traffic patterns.

Most application traffic tends to be bursty or adaptive, so it does not require the use of all WAN connections. This means that the connections that are currently at the bottom of the sort order may not have traffic transmitted on them. If they don't, their explicit sort dimensions don't get updated, so they tend to maintain their position near the bottom of the sort order.

In some embodiments, over a period of time, the push scheduling can also be configured to implicitly cause a sort order along one or more implicit sort dimensions. The implicit sort dimension forces the connections that have experienced periodic bad events (e.g. latency spikes due to congestion) to bubble to the bottom of the list. The connections that are consistent in their behaviour naturally bubble to, and remain near the top.

This is generally considered a good property of the algorithm, but may be modified in the future to be influenced by external factors. For example, if a flow has specific requirements that cannot be satisfied by the connections currently near the top of the sort order, it may make sense to generate probing traffic on the connections near the bottom to refresh their explicit sort dimensions.

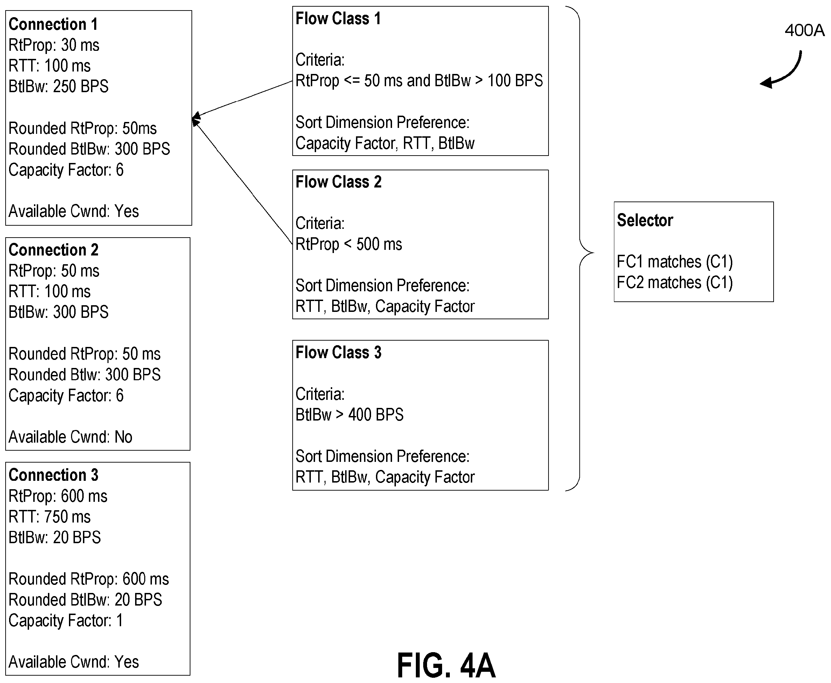

**FIG. 4A** at **400A** depicts an embodiment where a selector is generated using the predefined Flow Classes and the current Connection states.

In this example, there are 3 Connections each having a set of monitored characteristics, and there are 3 predefined Flow Classes each of which defines a match criteria and a preference for sorting the connections that meet the match criteria.

In this embodiment, the Selector consists of the set of Flow Classes whose match criteria match at least one connection with available capacity. In this example, Flow Class 1 and Flow Class 2 both have match criteria that match Connection 1 and Connection 2, while Flow Class 3 matches no connections and is not included in the Selector.

Even though both Connection 1 and Connection 2 are matched, Connection 2 is excluded from the Selector because it has no available congestion window and cannot currently send a packet. In constructing the Selector, a Flow Class can be included as soon as a matching Connection with available congestion window can be found, so an embodiment may only examine Connection 1 to determine that Flow Class 1 and Flow Class 2 can be included in the Selector, without having to check that Connection 2 matches.

Step 2b (block **1105** shown in **FIG. 1E**) uses the Selector from step 2a to find a packet on the retransmit queue or the send queue which is eligible to be (re)sent on an active connection with capacity. If no such packet can be found, then the loop exits. It is possible for this to occur even if some active connection has capacity and there exist packets on the input or retransmit queues.

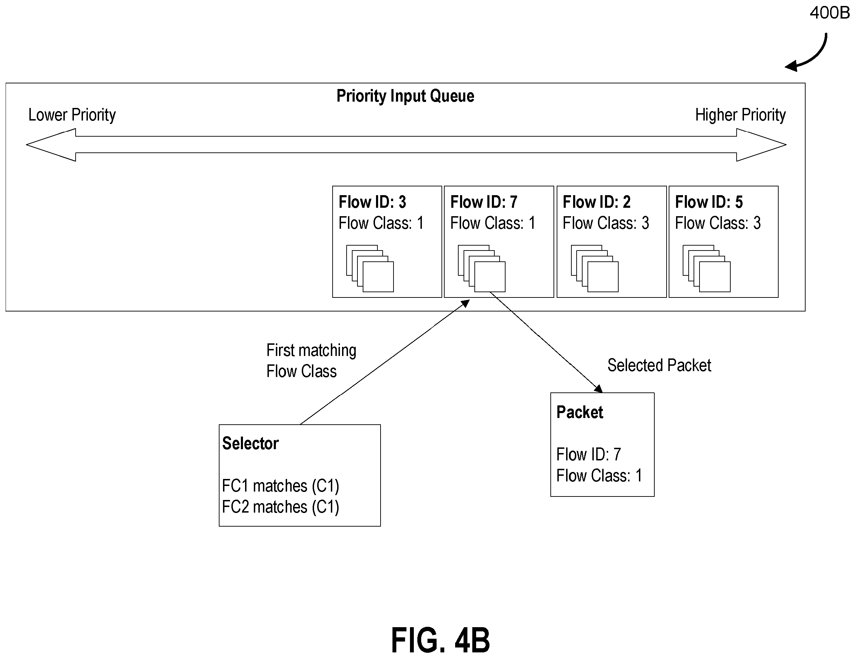

**FIG. 4B** at **400B** shows an embodiment with a priority input queue which is an ordered set of Flows, where Flows on the right side of the queue should send packets before Flows on the left side. Each Flow has a Flow ID, and each Flow belongs to one of the predefined Flow Classes. Each Flow also contains an ordered queue of Packets, such that if the Flow is chosen, then the packet at the head of the queue is removed.

In this example, the Selector from **FIG. 4A** is used to evaluate the Flows in the input queue from right to left, and it chooses the first Flow having a Flow Class that is listed in the Selector. In this case Flows with ID 5 and 2 are evaluated and rejected because they both have Flow Class 3, which is not one of the Flow Classes from the Selector. Flow 7 is then evaluated and is a match because it belongs to Flow Class 1, which is one of the Flow Classes in the Selector. A packet is then extracted from the head of Flow 7's packet queue and is stamped with the Flow metadata.

Once a packet has been selected, step 2c (block **1107** shown in **FIG. 1E**) constructs an Ordering of the active connections. The Ordering chosen will be based on rules provided in the definition of the flow class, if the embodiment supports that, or on a generally acceptable ordering otherwise. Some embodiments may use the same ordering for all flows matching a flow class, and some embodiments may make the ordering flow-dependent (for example, to make all packets in flow sticky to a given connection, without requiring that all flows be sticky to the same connection). Orderings may be constructed as necessary on each iteration of the loop in step 2, or some embodiments may choose to cache the Ordering and clear the cache if the criteria used to construct the ordering has changed (i.e. on a metadata update).

One embodiment constructs the Ordering ignoring whether or not a connection currently has capacity, since capacity may be reduced to zero by scheduling packets on the connection, or increased above a current value of zero if scheduling a packet on a different connection happens to change the metadata mix sufficiently to activate a set of connections in a previously unused priority level. Constructing the Ordering in this manner allows it to be cached and reused if the only items that change are the effective CWND and inflight byte counts for the connections.

A flow which traverses system **100B** tends to behave better when the packets for that flow traverse the same WAN connection whenever possible. As such, an embodiment should construct an Ordering using stable sort criteria so that Orderings created for the same flow are consistent unless the monitored characteristics of one or more of the connections has changed significantly. Thus, operating characteristics such as RTT and RtProp, and bandwidth are poor choices because they may fluctuate over short periods of time, making the sort order unstable.

Conversion from "noisy" raw operating characteristics to monitored characteristics can occur using statistical filtering methods. They can range from traditional measures such as mean, variance, and ANOVA, to the field of (quantized) rank order statistics (rank order filtering). For example, the monitored characteristics may be ranges of the raw operating characteristics, which ranges may be defined by a specific value (e.g., 1 - 100ms), or an order of magnitude, and so forth. Specific examples follow in subsequent paragraphs, including the example shown in Table 2.

Some embodiments could use machine learning techniques to convert from operating to monitored characteristics. For example, a trained model could be developed to predict imminent failure of a connection, and as a result construct an Ordering that sorts matching connections to the end of the list. Another example model could be used to detect the type of connection (e.g. wired, cellular, WiFi, satellite, BoD, etc.), and use that to form the basis for a new monitored statistic (e.g. susceptibility to buffer bloat) that cannot be easily measured in real time.

One embodiment uses the following Ordering for all packets (later criteria are used only if all previous criteria are equal):

"Bucketed" drop probability. Connections can be grouped in buckets defined by ranges of packet count-based or size-based (e.g. in bytes) drop probability. Connections in a bucket with a smaller drop probability range appear first in the ordering, and connections in a bucket with a larger drop probability range appear later in the ordering.

Connection priority group (as provided by the Administrator or End User). Higher priority connections are ranked earlier (primary > secondary > tertiary, etc.)

"Bucketed" RTT. Latency rounded to the nearest multiple of 50ms. Bucketing of the latency value allows normal variation in latency to be hidden from the ordering, while still allowing a significant change in latency to be reflected in the Ordering.

As noted above, "Capacity Factor", is an aggregate value which is measured in "bytes per second per millisecond" and is calculated by rounding the bottleneck bandwidth estimate to the nearest order of magnitude or integer multiple of the nearest order of magnitude (for example, 1 rounds to 1, 10 and 11 round to 10, 15 rounds to 20, 86000 rounds to 90000) and dividing it by the RtProp bucketed to the nearest 50ms, for example. Connections which achieve a higher bandwidth per ms of RtProp are considered to be better than connections with lower bandwidth per ms of RtProp.

Determining the capacity factor on the raw BtlBW and RtProp values is highly variable, but stabilizing it by rounding BtlBW to the nearest order of magnitude or integer multiple of the nearest order of magnitude and bucketing the RtProp stabilizes the value over time unless large changes are observed. Table 2 shows several examples of bucketing, rounding and Capacity Factor calculations. Note that in this embodiment, the Capacity Factor is rounded to the nearest integer, and for the purposes of the Capacity Factor calculation, bucketed RtProp values of 0 are treated as 1.

"Bucketed" RtProp. Lower values of RtProp bucketed to the nearest 50ms are preferred over higher values.

"Rounded" BtlBW. Higher values of BtlBW rounded to the nearest order of magnitude or integer multiple of the nearest order of magnitude are preferred over lower values.

If all of the aforementioned criteria compare as equal, Connection IDs (assigned at the time connections are enumerated) are used to break ties deterministically. Other embodiments could use more complicated tie breaking mechanisms, for example, hashing properties of the flow to an integer modulo the number of tied connections.

**Table 2: Bucketing, Order of Magnitude Rounding, and Capacity Factor example**

| Raw RtProp | Bucketed RtProp | Raw BtlBW | Order of Magnitude Rounded BtlBW | Capacity Factor |
|---:|---:|---:|---:|---:|
| 0 | 0 | 0 | 0 | 0 |
| 24 | 0 | 2 | 2 | 2 |
| 25 | 50 | 13 | 10 | 0 |
| 83 | 100 | 17 | 20 | 1 |
| 114 | 100 | 9400 | 9000 | 90 |
| 240 | 250 | 9800 | 10000 | 40 |
| 270 | 250 | 13500 | 10000 | 40 |
| 272 | 250 | 17850 | 20000 | 80 |

An embodiment which distinguishes between flow types may for example, modify the above ordering to prefer high capacity factor connections over lower latency connections for file transfer flows, and lower latency connections over high-bandwidth connections for video streams, depending on the transmission requirements of the flow type.

An embodiment which performs strict flow pinning to a connection (or set of connections) may choose to only allow an exact match on connection ID (possibly excluding other connections entirely from the Ordering). Such pinning rules are typically provided by an Administrator or End User and are intended to override all Ordering decisions determined by monitored characteristics. As such, even if the monitored characteristics indicate that a connection is unusable or has failed, the flow will continue with the same Ordering and will thus no longer have connectivity through the multipath system **100B.**

Some embodiments could create monitored characteristics that are a composite of other monitored or operating characteristics, using these composites to determine an Ordering. For example, a composite reliability metric could be created that combines bucketed drop probability, (running) latency (RtProp) variance and (running) throughput into a weighed metric that represents overall reliability for a connection. Connections that rank high on this metric would be reserved for flows that require high reliability (which may not mean high speed).

In general, if a Selector is generated that allows a packet to be chosen, then that packet should generate an Ordering that allows the packet to be scheduled on some connection that was used to generate the Selector.

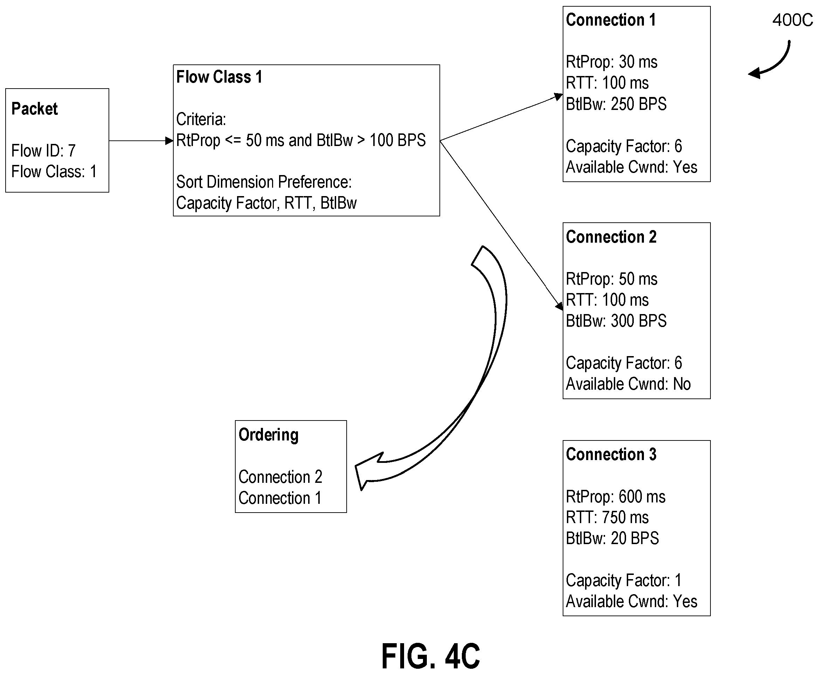

**FIG. 4C** at **400C** shows an example of how a packet's flow class ("Flow Class") can be used to construct an ordering of connections. In the depicted embodiment, the Flow Class in the Packet's metadata is used to look up the Flow Class definition. The match criteria of the Flow Classes are used to choose which connections should be included in the constructed Ordering (alternatively stated, the Flow Class defines a set of transmission requirements which may be associated with the particular flow class), in this case Connection 1 and Connection 2 both match, while Connection 3 does not. Note that Connection 2 is included despite it having no available congestion window (i.e., it is currently ineligible to send packets). This facilitates caching the ordering and allowing it to be reused even if the state of the available congestion window should change (for example if the Scheduler is initially preventing sending on the connection because it has a lower priority, but then decides to re-enable the connection because the current mix of data on the enabled connections does not meet minimum system throughput).

Once the set of connections has been chosen, the ordering criteria from the Flow Class (e.g., a subset of transmission requirements associated with the flow class) is used to sort the matched Connections into an ordered list. In this example, the first criterion is the Capacity Factor. Both Connections have the same Capacity Factor. The second criterion is the RTT, and both Connections have the same RTT. The third criterion is the BtlBW (bottleneck bandwidth), and Connection 2 has a higher value, so appears before Connection 1 in the ordering.

The set of ordering criteria in the Flow Class (e.g., the transmission requirements) allows packets to be scheduled on available connections which are most optimal for the types of flows to which they belong. For instance, packets belonging to a "video encoder" flow class can preferentially use connections having the lowest latency, while packets belonging to a "file transfer" flow may prefer high-throughput connections even if the latency is high or highly variable.

Once an ordering has been determined for a connection, step 2d (block **1110** shown in **FIG. 1E**) uses the Ordering to assign the packet to a connection with available bandwidth. The packet is placed on a send queue for the connection.

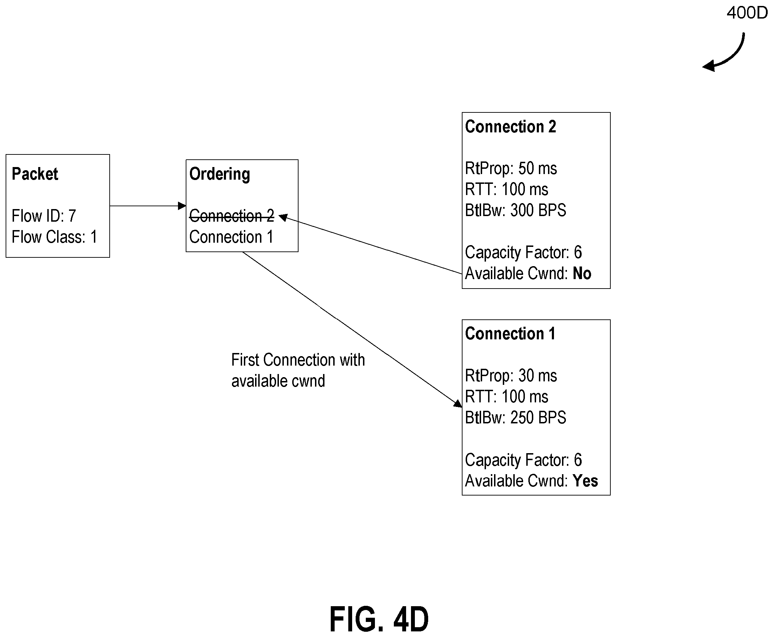

**FIG. 4D** at **400D** shows the ordering from **FIG. 4C** being used to choose a connection for the given Packet. In this example, the first connection in the ordering is Connection 2, but it has no available congestion window, so it is not currently eligible to send a packet. Connection 1 is then checked and is able to send a packet, so it is selected and the packet is queued to send to the Stage 3 pipeline for Connection 1.

Connection metadata (monitored characteristics) for inflight bytes is then adjusted as part of step 2e (block **1112** shown in **FIG. 1E).** In some embodiments this includes distinguishing between goodput bytes and retransmit/dummy/-probing bytes when tracking CWND consumption for the connection. Such an adjustment may affect the goodput and/or potential goodput for a priority group which may cause connections in the next priority level to be activated in the next iteration of the loop in step 2. Various methods for conversion from units of volume (CWND bytes) to rate (goodput) are discussed subsequently in the descriptions for **FIGS. 8A-8C** and **9A-9C.**

Once step 3 has been reached, either the available CWND for each connection has been filled, or there are no more packets eligible for transmission. The packets queued to the per-connection output queues in step 2 are then sent to the appropriate instances of the next stage of the pipeline.

In some embodiments, an explicit goal function can be used to determine the desired trade off when there are multiple Flows with the same priority, but belong to Flow Classes with conflicting requirements.

The embodiment described in **FIG. 4A-4D** shows a goal function that implements fairness between the flows at the same priority. The Selector services each of the flows that match its Flow Classes in a round-robin manner.

The fair implementation in this embodiment uses the Deficit Round Robin scheduling algorithm described in RFC 8290. A brief summary of this algorithm is that it utilizes a "byte credit" scheme, assigning a quantum of byte credits to each queue in each round of its iteration over the queues.

The number of bytes that can be retrieved for transmission from each queue in each round is nominally limited to the number of credits it has available. When the byte credit quantum is equal for each queue, fairness naturally occurs.

In some embodiments, the goal function might allow intentional unfairness to be configured by an Administrator or End User. For example, a weight could be configured on a matching flow, which could ultimately result in unequal byte credit quantums given to the queues on each iteration.

For example, there might be 5 different weight levels:

- Highest (5)
- High (4)
- Normal (3)
- Low (2)
- Lowest (1)

The value assigned to each weight would represent the ratio between their byte credit quantums. For example, if the quantum corresponding to Normal is 30KB, a flow marked as Low would receive a quantum of (2/3)*30KB = 20KB in each round. A flow marked at Highest would receive (5/3)*30KB = 50KB.

Note that the absolute numbers in this example are not significant. If the Normal quantum was 5KB instead of 30KB, the weights would still scale the relative quantums for the other priority levels appropriately, and the end result would be the same in terms of overall fairness.

Other embodiments might allow the weights to be arbitrary integers, rather than the 5 fixed values in the example above. This would allow the Administrator or End User to configure even greater unfairness between Flows in the goal function, should it be required.

Also note that as with all quality of service (QoS), these weight settings only matter when there is contention for the available WAN capacity. If there is no contention it means that the data within all of the queues completely fits within the available capacity, so the ratios between their usages are the natural ratios from the applications generating different volumes of data.

Other embodiments might have completely different goal functions that do not take fairness into account at all. For example:

Ensuring the largest number of flows are satisfied by the available WAN capacity;
Maximizing the total throughput achieved by the serviced flows; or
Minimizing changes to the current bandwidth allocation on BoD connections.

In some embodiments, the way a WAN connection is used can alter its properties, making it ineligible to service certain Flow Classes. For example, some types of connections can achieve high throughput, but at the expense of causing a higher RTT.

An embodiment with a goal function that seeks to maximize throughput would choose to service flows with a high throughput requirement, which would cause the WAN connection RTT to increase and make it ineligible to service Flow Classes with a low latency requirement.

Conversely, an embodiment with a goal function seeking to service the largest number of flows might choose the opposite trade-off, such that the low latency Flow Classes could continue to be serviced by this WAN connection.

In some embodiments, a distinct Scheduler connection sort order is maintained on a per-flow basis rather than globally for all flows.

This allows flow-specific requirements to influence the sort order so that the flow's packets are assigned to connections in a way that meets its needs.

For example, a VoIP flow that has a preferred maximum latency tolerance of 150ms will want sort criteria that places connections with an RTT greater than 150ms at the bottom of the list. Conversely, a TCP flow with no specific latency requirement will want to prioritize connection throughput in its sort criteria instead, either completely ignoring RTT, or only using it as one of many secondary criteria.

In some embodiments, these flow requirements and preferences are configured in the form of rules that consist of a Match Criteria and a consequent Behaviour.

For example, Match Criteria could take the form of an IP 3-tuple (Protocol, Source IP, and Destination IP) or IP 5-tuple (Protocol, Source IP, Source Port, Destination IP, and Destination Port). A Behaviour could take the form of an explicit preference for latency or throughput, with target preferred values for either.

Examples of other heuristic-based Match Criteria could include:

  ◦ DSCP tags
  ◦ Any of the other header fields available in the IP (v4 or v6) header
  ◦ Any of the other header fields in TCP or UDP headers
  ◦ Cumulative volume of data transmitted - e.g. a TCP flow that exceeds a volume threshold could be matched as a "bulk data transfer", whereas one that does not could be matched as an interactive SSH/telnet session
  ◦ Cumulative duration of the flow
  ◦ Regular expression match against packet payloads
  ◦ Cleartext parameters extracted from a TLS handshake (e.g., SNI, CN, SubjectAltName)

Examples of other Behaviours that could affect Scheduler sort order include:

  ◦ Specific preferences for connection order (e.g. the user may prefer to sort an expensive connection to the bottom of the list for low priority flows)
  ◦ Jitter tolerance
  ◦ Maximum latency tolerance
  ◦ Amount of desired redundancy (e.g., FEC)
  ◦ Whether retransmissions of lost packets are desired, and if so, if there is a maximum time limit after which retransmissions attempts should stop
◦ Whether explicit packet pacing is desired

i. For example, a real-time video app transmitting video at 30 frames per second might transmit its video frames exactly 33.3ms apart, and would not want the multipath system **100B** to change the pacing
ii. In contrast, a bursty application might benefit from having the Scheduler explicitly pace its bursts at the aggregate WAN rate.

o Desired throughput (e.g. minimum, target, maximum)

Rules (both Match Criteria and Behaviour) could be generated automatically using machine learning techniques that analyze traffic patterns.
Inputs (Features) to the ML method could include:

i. Cumulative volume of data transmitted
ii. Size distribution of packets (histogram)
iii. Inter-packet spacing (both pacing and jitter)
iv. Frequency and grouping of packets
v. Packet header fields (Ethernet, IP, TCP, UDP, etc.)
vi. Contents (payload) of packets
vii. Intended destination of packets, beyond just IP addressing (e.g. the SNI, CN, and SubjectAltName fields in a TLS handshake and exchanged certificates)
viii. Cumulative duration of the flow
ix. Time of day
x. Number of concurrent flows to the same destination or from the same source
xi. Current or historical Predictions (Labels) for any concurrent flows to the same destination or from the same source (e.g. some applications open multiple flows, one as a control plane, another as a data plane - knowing that an existing control plane flow exists could help in predicting a data plane flow)

Predictions (Labels) from the ML method would include any of the aforementioned Behaviours, determined based on the Behaviours of the training corpus.
In some embodiments, Rules can have the concept of dependent Rules that apply further Match Criteria and more specific Behaviours, while still being governed by their parent Rule. For example:

◦ A VPN flow identified by an IP 5-tuple could have a Rule defined with Match Criteria and Behaviours. This would be considered the "parent" rule.
◦ The VPN will carry within it many inner flows from the applications being protected by the VPN. Normally these inner flows would be completely hidden from the Match Criteria (encrypted by the VPN).
◦ However, some VPNs might choose to expose a limited set of information about the inner flows, through setting DSCP tags on the encrypted packets that correspond to the preferences of the inner (cleartext) packets.

A dependent rule could be created that matches on DSCP tags, but the resulting available behaviour would still be governed by the parent rule. For example:

a. Generally, VPNs require packets to be delivered in-order (they can tolerate mis-ordering, but only up to a small window).
b. Behaviours configured on a dependent Rule that match DSCP tags must not result in the parent Rule delivering packets significantly out of order.

For example, a dependent rule that requests a maximum latency limit of 150 ms, and a second dependent rule that requests maximum throughput could violate the ordering requirements of the parent Rule, since interleaved packets from these two dependent Rules could be assigned to connections with drastically different latencies.

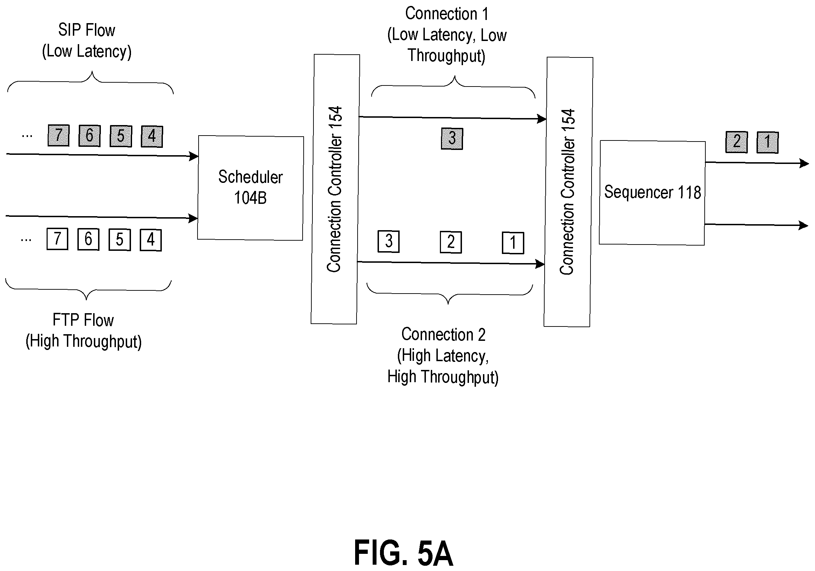

**FIG. 5A** illustrates two independent flows, where the Rules and Behaviours on each one are completely independent. In this example, the SIP Flow requires low latency, so the Behaviour causes Scheduler **104B** to only transmit its packets on Connection 1. Conversely, the FTP Flow requires high throughput, so Scheduler **104B** only transmits its packets on Connection 2.
As the packets for these two flows are transmitted over the air and arrive at Sequencer **118**, they are put back in order and transmitted to the final destination independently. In this example, Sequencer **118** is transmitting packets belonging to the SIP Flow that have already arrived and are in the correct order, irrespective of the state of the FTP Flow, where its packets are still in transit over the air.

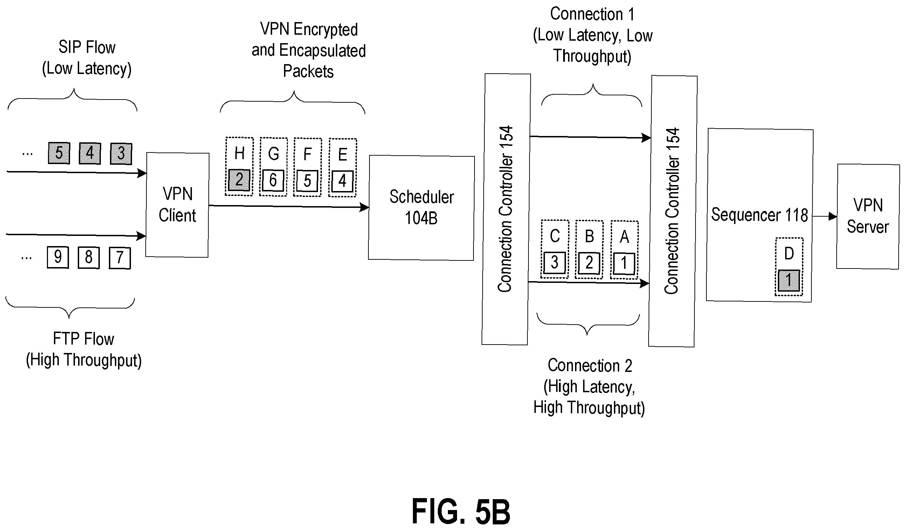

**FIG. 5B** illustrates the concept of dependent flows. In this example, the same SIP Flow and FTP Flow are present, but they pass through a VPN client for encryption and encapsulation before Scheduler **104B** sees them.

Coming out of the VPN client, the packets from both flows have the same IP 5-tuple, so Scheduler **104B** and Sequencer **118** treat this as the parent flow, and are constrained by its requirements.

The existence of the dependent flows (SIP and FTP) are communicated using DSCP tags, and they control how Scheduler **104B** assigns the packets to Connection 1 and 2 for transmission. In this example, the assignment is the same as in **FIG. 5A.**

However, the parent flow constraint requires the packets to be transmitted from Sequencer **118** in the same order that they arrived at Scheduler **104B.** As such, in this example, even though the packet belonging to the dependent SIP flow has already arrived at Sequencer **118,** it cannot be transmitted until the packets belonging to the dependent FTP flow arrive and are transmitted first.

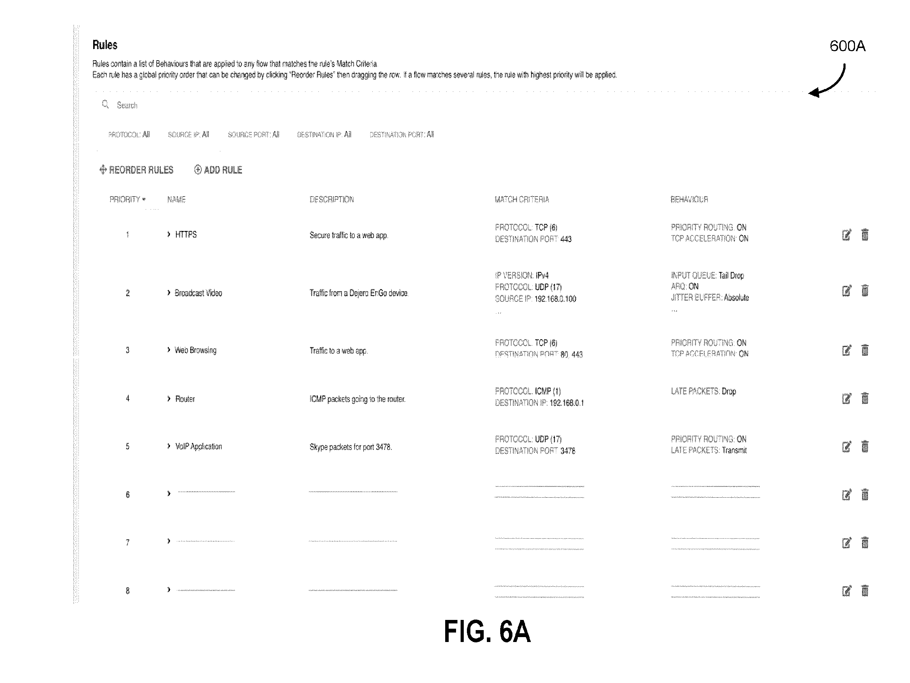

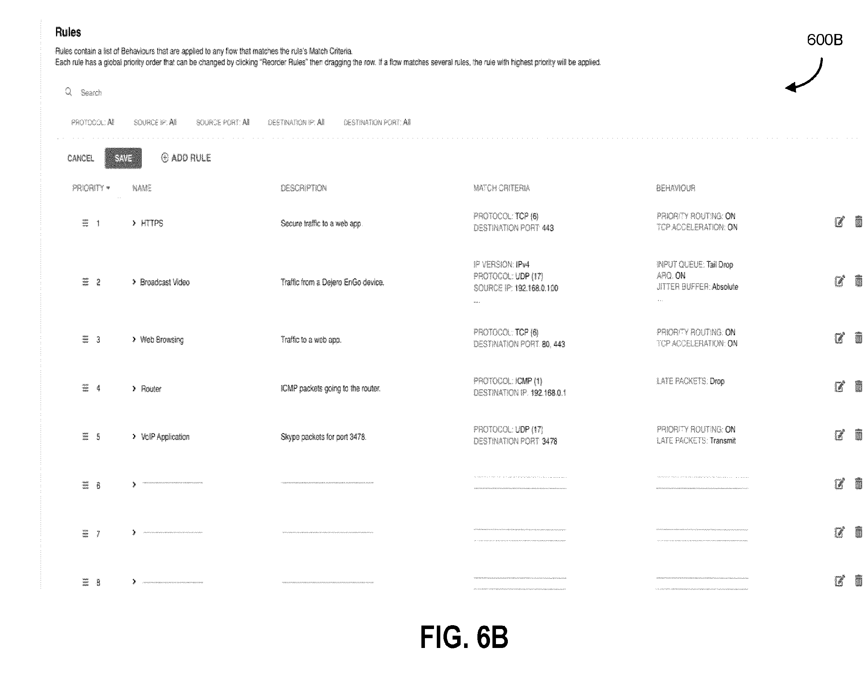

**FIG. 6A** at **600A** is a sample embodiment of a Rule Management page. The configured Rules are displayed in a table, with each row summarizing the Match Criteria and Behaviour. The order in which the Rules are listed is the order in which packets are matched against them. **FIG. 6B** at **600B** shows the workflow for changing the order of the rules.

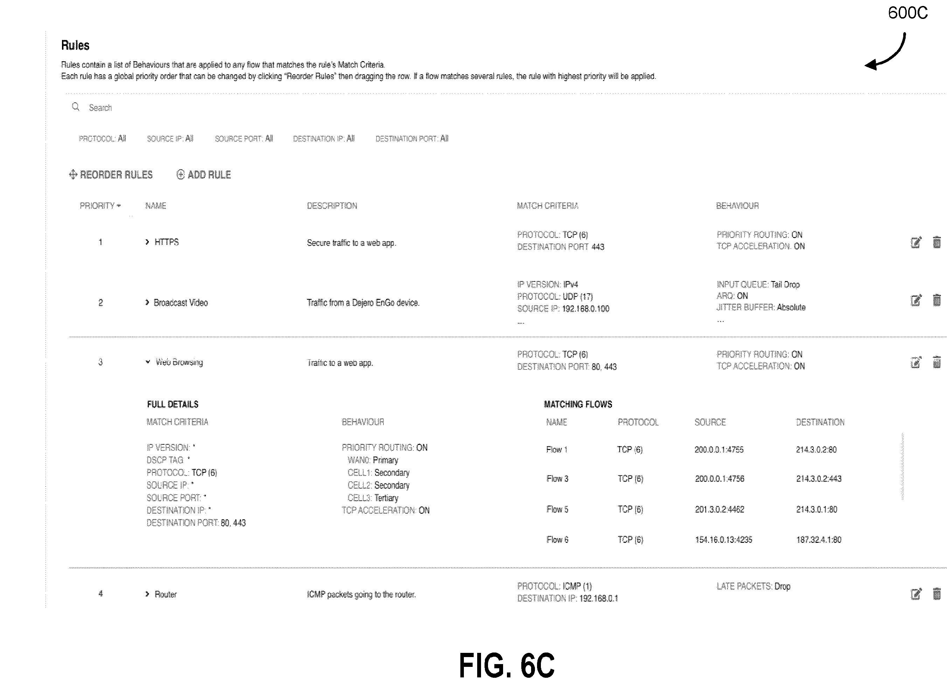

**FIG. 6C** at **600C** shows how each row in the table can be expanded to show the details of the Match Criteria and Behaviour, as well as the currently active flows passing through the system that match this Rule.

Each rule in the table includes an Edit and Delete icon.

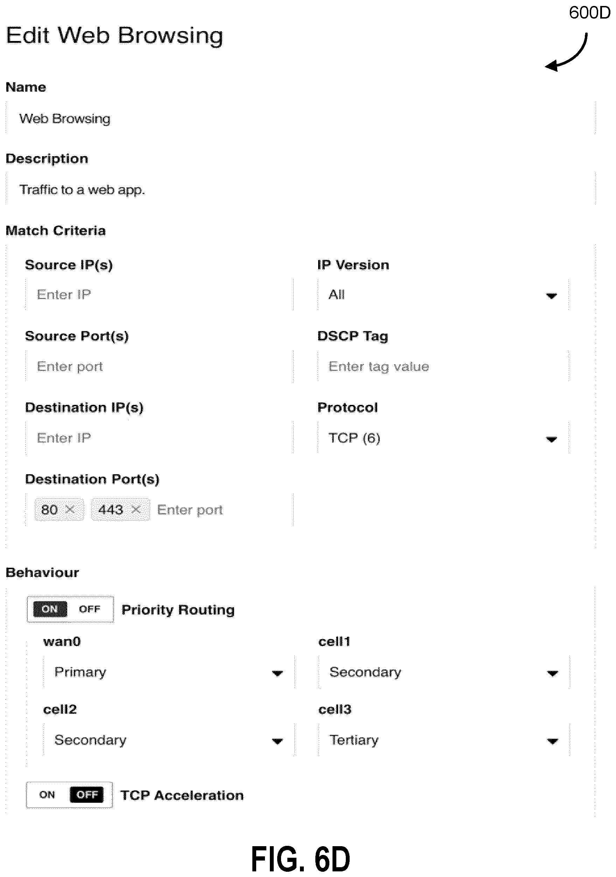

**FIG. 6D** at **600D** shows the dialog window that appears when the Edit button is clicked. The Match Criteria and Behaviour for the rule can be changed in this dialog.

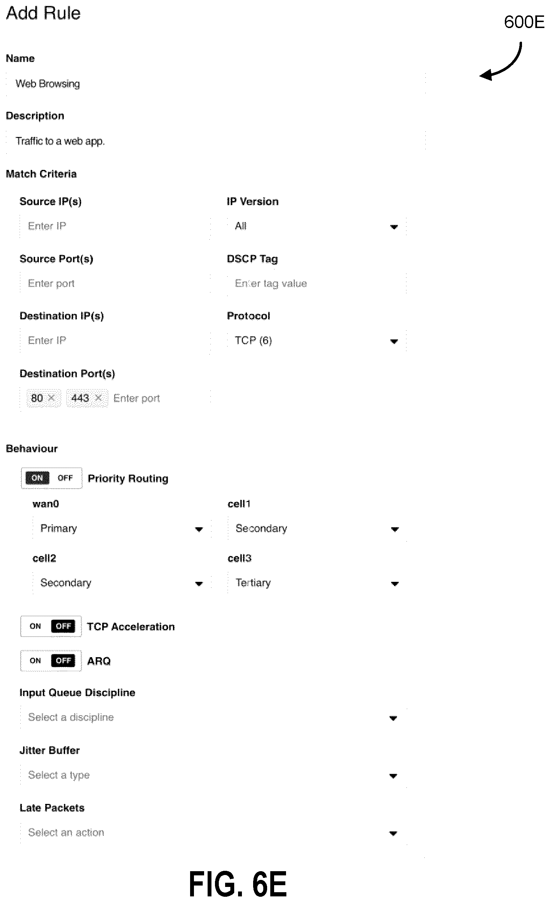

On the main Manage Rules screen, there is a separate "Add Rule" link, and **FIG. 6E** at **600E** shows the modal dialog that appears when it is clicked.

In some embodiments, the Rules will be configured on the transmitter side, and will be automatically pushed to the receiver. By default, rules will be symmetric and bi-directional. Meaning, when a Rule is added and its Behaviours configured, a matching paired Rule will be transparently added, but the source and destination Match Criteria will be swapped. It will be possible to add asymmetric rules (different Behaviour for either direction of the same flow) through an advanced configuration screen.

In one embodiment, the Scheduler probes various network characteristics of a plurality of connections (to determine the measured characteristics for each connection) and uses the measured characteristics in combination with the transmission requirements to make decisions about packet transmission.

For example, one such decision is determining how many packets to transmit on a particular connection and when to transmit these packets.

Some embodiments are volume-based. Such embodiments operate by determining a limit on the volume of data (for example, in units of bytes or packets) that can be transmitted on a particular connection. Once enough packets have been transmitted in the amount of that volume, transmission stops until some feedback is received about these packets. If feedback is received before the full volume limit has been transmitted, the transmission can continue without stopping, as long as the volume of data sent for which no feedback has been received does not exceed the determined volume limit.

In one embodiment, the volume of data is chosen to be the congestion window (CWND) of the connection. Briefly, the CWND is the maximum volume of data that can be sent on a connection, before receiving any feedback, without causing significant congestion on that connection. A multitude of methods exist to estimate the CWND. It is assumed that the Scheduler has access to one such method and is able to receive a CWND estimate through it.

In some embodiments, the Scheduler is required to determine the rate at which data is being transmitted (for example, in units of bytes per second). The rate can be then used to make other decisions about packet transmission.

For example, in one embodiment, if the rate of data being transmitted on the currently active network connection(s) is less than the rate of data being received from the source application for transmission, the Scheduler can decide to activate more connections to increase the aggregate transmission rate to accommodate the application rate.

In another example, an embodiment might have to satisfy a Quality of Service (QoS) requirement, which can be expressed in terms of a guaranteed rate of transmission. If the aggregate rate drops below the required level, the Scheduler can decide to activate more connections to increase the aggregate transmission rate to satisfy the QoS requirement.

In yet another example, an embodiment might be required to measure the goodput (i.e. the rate of application data getting across the network successfully) for purposes of guaranteeing an application performance level, optimizing performance, reporting, etc.

In one embodiment, TCP performance can be optimized by pacing the transmitted packets at the aggregate rate achieved by a plurality of connections. See, for example PCT Application No. PCT/CA2020/051090.

In embodiments where rates are required for some functions, a volume-based Scheduler requires a method to transform the transmitted volume of data into a rate.

Trivial approaches that convert the volume to a rate by dividing it by the duration of time over which it was transmitted generally yield inaccurate results. Such approaches measure that transmission rate at the sender, rather than the actual rate data is moving across the network. The actual rate at which data is moving across the network is truly determined by the rate at slowest link of a multi-link network, commonly referred to as the bottleneck of the network.

The characteristics of the bottleneck link of a network are not available to the sender or receiver, especially knowing that multi-link networks can change the combination of used links at any time and in a transparent fashion to the sender and receiver. However, congestion control methods are capable of generating estimates based on the observed performance at the sender and receiver.

In some embodiments, the congestion control method can provide an estimate of the transmission rate of the bottleneck link. This is sometimes referred to as the bottleneck bandwidth *BtlBw* of the network.

In some embodiments, the round-trip propagation time *RtProp* of a network can be estimated by sampling the time between when a packet is sent and when feedback about the packet is received.

The combination of *BtlBw* and *RtProp* can be used to determine a network property referred to as the Bandwidth Delay Product, *BDP*, as follows:

$$BDP = BtlBw \times RtProp$$

The most common unit for *BDP* is bytes. Moving forward the following units are assumed for these quantities: (i) bytes per second for the *BtlBw,* (ii) seconds for the *RtProp,* and accordingly (iii) bytes for the *BDP.*

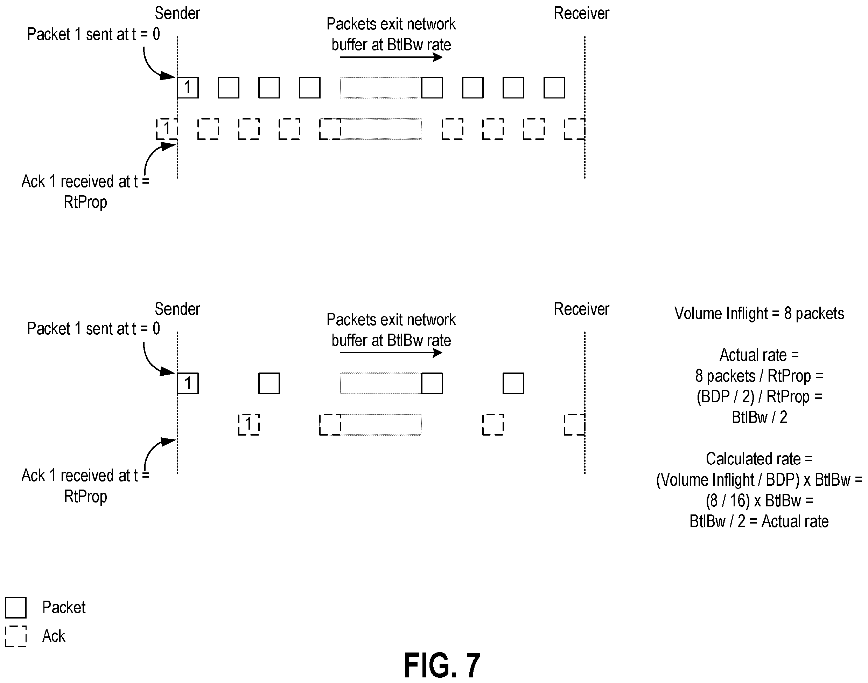

The *BDP* signifies the amount of data that will be in the network (inflight) when it is operating under ideal conditions, assuming data is always available for sending. The network would be transferring data at its nominal rate, *BtlBw,* and providing feedback about every packet exactly after *RtProp* time from sending that packet. **FIG. 7** shows two examples at **700.** The top half of **FIG. 7** illustrates this aspect using an example where the *BDP* consists of 16 equally sized packets. In practice, the amount and size of packets can differ as long as the total size is equal to the value calculated using the *BDP.*

In some volume-based embodiments, the *BDP* can be used to estimate various data transfer rates, some examples of which were described previously.

For an inflight volume of data under consideration, if the volume is smaller than the BDP, assuming ideal conditions, then only a fraction of the network's nominal rate, *BtlBw,* can be achieved. This fraction can be calculated as the ratio of the volume to the *BDP*. The resulting achieved rate is determined as:

$$\text{Achieved rate corresponding to inflight volume} = \text{volume} / BDP \times BtlBw$$

In practice, networks seldom operate under ideal circumstances. For example, packets may be buffered temporarily before being delivered to the receiving end, or the feedback might be delayed at the receiver or by the network. In some cases, packets might be lost and never make it to the receiving end, thereby not triggering any feedback. In other cases, the feedback itself might be lost. The loss can, for example, be deduced when feedback of newer packets is received, or based on timers expiring.

Waiting for delayed feedback (that may or may not arrive) to trigger the next transmission event can artificially limit the achievable rate on a network.

**FIG. 8A** at drawing **800A,** shows an example of a receiver that aggregates feedback and sends acknowledgements back to the sender once for every 4 packets received.

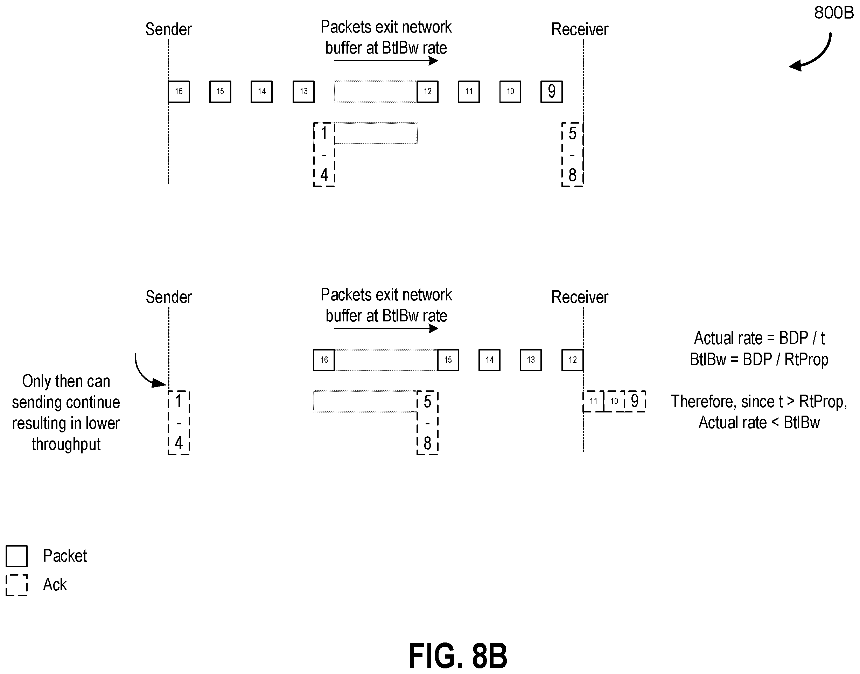

**FIG. 8B,** at drawing **800B,** continues to demonstrate how, for example, the aggregation of acknowledgements results in the overall throughput being less than the capability of the network. The sender waits for a longer time to start sending the next group of packets. Overall, the sender ends up sending the same amount of packets as the ideal case in **FIG. 7** but over a longer period of time, resulting in lower throughput.

In one embodiment, this artificial limitation is overcome by specifying an additional allowance of data to send even when feedback for previously transmitted packets has not been received yet. This implies that the volume of data inflight might exceed the *BDP*. In such cases however, the network is not actually transferring data at a higher rate, as application of the achieved rate equation above might suggest. The additional allowance simply allows the sender to maintain a constant rate that is equal to the *BtlBw* over a longer period of time. Accordingly, the estimated transfer rate for the volume at hand is capped at *BtlBw.*

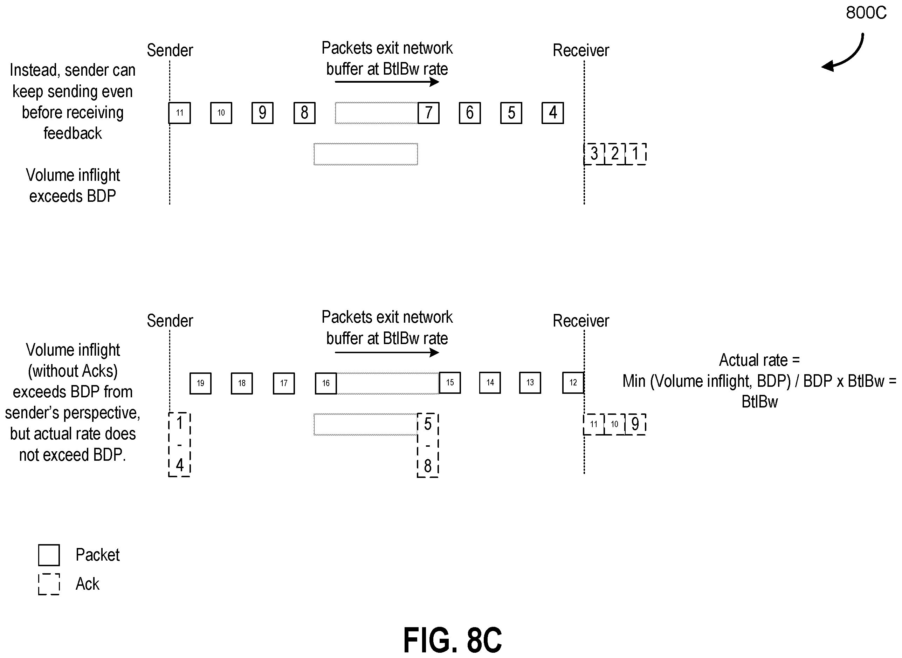

**FIG. 8C,** at drawing **800C,** continues to demonstrate how, for example, the sender uses such an additional sending allowance to continue sending packets before acknowledgements are received. The volume of data inflight, 19 packets, exceeds the *BDP,* 16 packets. However, the actual rate matches the capability of the network, and the capping of the calculated rate, by using the minimum of the volume inflight and the *BDP*, achieves the same result. In some embodiments, a similar approach can be used to estimate the goodput that could possibly be achieved on the network, referred to as the potential goodput from here on.

A particular volume of data can be split into a goodput portion and the other portion. The goodput portion contains newly transmitted application data. The other portion contains data that cannot be counted as newly transmitted application data, for example, retransmissions of previously lost data, control data, probing data, etc.

If the full volume of data is larger than the BDP, packet and/or feedback delay are assumed as above. No extra space is assumed to be available for additional goodput. The resulting (potential) goodput rate is estimated as follows:

$$\text{Goodput rate} = \text{Goodput portion} / \text{Full volume} \times \text{BtlBw}$$

For example, **FIG. 9A** at **900A** shows a network with a *BDP* of 16 packets. The volume put inflight is 19 packets in order to achieve a throughput that is equal to the capability of the network. However, only 14 packets are goodput, resulting in a goodput rate of $\frac{7}{8}$ of the capability of the network. If the volume of data is smaller than the *BDP,* the difference is considered to be the extra space assumed available for additional goodput.

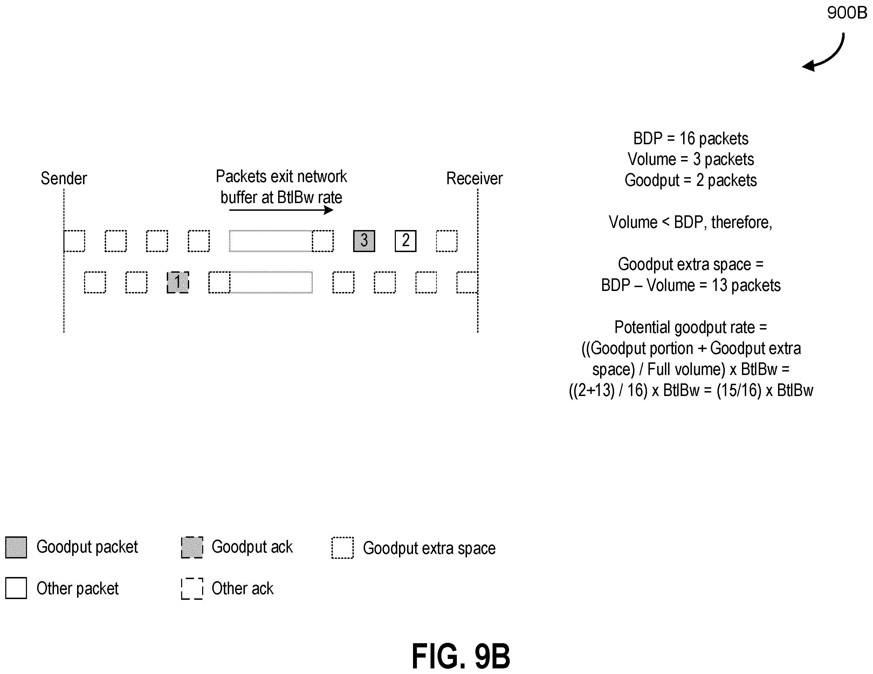

**FIG. 9B** at **900B** shows an example where only 3 packets are inflight, resulting in an extra space of 13 packets that can be assumed to be goodput when calculating the potential goodput rate. This extra space has to be limited by the CWND that the congestion control method determines. At any point, the additional volume that congestion control allows is the difference between the CWND and the full volume. If the goodput extra space exceeds this congestion control allowance, it is simply limited to it.

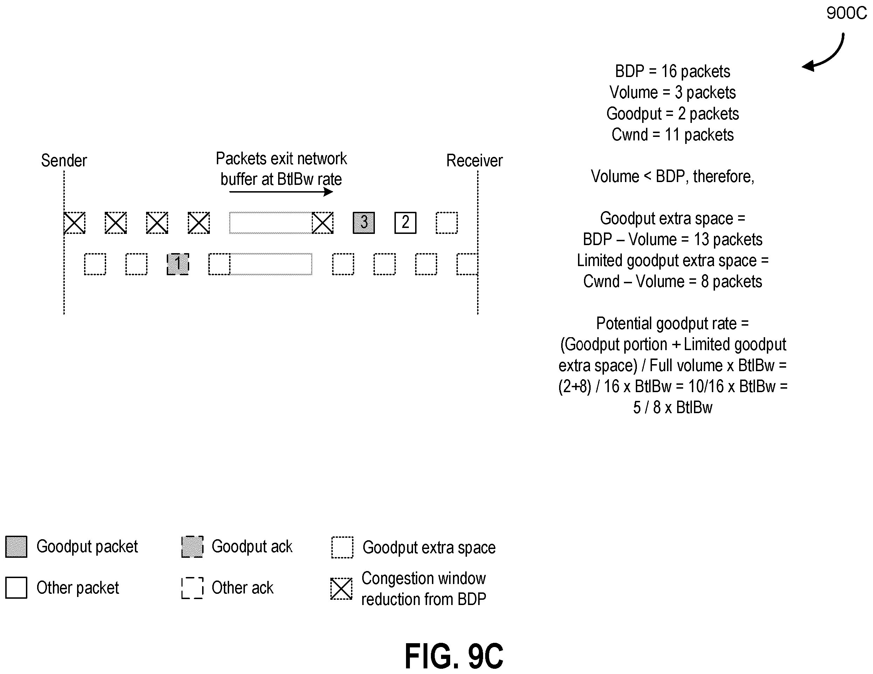

**FIG. 9C** at **900C** shows an example where the CWND has been reduced to 11 packets, which limits the extra space assumed available for additional goodput to 8 packets.

The resulting potential goodput rate is estimated as follows:

$$\text{Potential goodput rate} = (\text{Goodput portion} + \text{Limited goodput extra space}) / \text{BDP} \times \text{BtlBw}$$

Continuing the above examples, **FIG. 9B** and **FIG. 9C** show how above potential goodput equation results in a lower potential goodput rate for the scenario in **FIG. 9C,** which is as expected given the CWND reduction enforced by the congestion control method.

While the above approach is described for goodput and potential goodput rates, it can be easily modified to calculate the rate or potential rate of any type of data that partially makes up the full volume.

The following is a numerical example applying the previously described equations on a network with properties typical to those experienced over LTE cellular networks.

$$\text{BtlBw} = 10 \text{ Mbps}$$

$$\text{RtProp} = 60 \text{ ms}$$

$$\text{BDP} = 10 \text{ Mbps} * 60 \text{ ms} = 75 \text{ KB}$$

$$\text{CWND} = 60\text{KB}$$

$$\text{Goodput portion} = 25 \text{ KB}$$

$$\text{Other portion} = 10 \text{ KB}$$

$$\text{Full volume} = 25 \text{ KB} + 10 \text{ KB} = 35 \text{ KB}$$

$$\text{Goodput extra space} = \text{BDP} - \text{Full volume} = 75 \text{ KB} - 35 \text{ KB} = 40 \text{ KB}$$

$$\text{Congestion control allowance} = \text{CWND} - \text{Full volume} = 60 \text{ KB} - 35 \text{ KB} = 25 \text{ KB}$$

$$\text{Limited goodput extra space} =$$
$$\text{Min(Goodput extra space, Congestion control allowance)} =$$
$$\text{Min(40 KB, 25 KB)} = 25 \text{ KB}$$

$$\text{Potential goodput rate} =$$
$$\text{(Goodput portion + Limited goodput extra space)} / \text{BDP} \times \text{BtlBw} =$$

$$\text{(25 KB + 25 KB)} / 75 \text{ KB} \times 10 \text{ Mbps} = 50 / 75 \times 10 \text{ Mbps} = 6.67 \text{ Mbps}$$

Systems that communicate over IP networks often implement a congestion control mechanism that attempts to achieve fair network utilization by all network nodes employing similar congestion control mechanisms.

Congestion control mechanisms often operate by monitoring the communication happening over the network, possibly probing the network when needed, and deriving network properties based on the results. A model representing the network is created and future communication is guided based on this model. For example, the model can track network properties such as the current and maximum throughput achieved, the current and minimum round-trip time of packets, packet loss events, etc.

Based on the created model and the tracked information, the congestion control mechanism can determine when the network is underperforming, indicating that the network is possibly experiencing congestion. The congestion control mechanism may then take corrective action that aims to reduce or remove the network congestion and restore desirable network performance.

In traditional congestion control embodiments (e.g., TCP), packet loss is used as an indication of network congestion, and corrective action (e.g., reducing CWND) occurs in response to loss.

In one embodiment, the latency of packets, i.e. the time required for packets to traverse the network from the sender to the receiver, is an indication of network performance. Packets with high latency can possibly be of no use to the receiver and get discarded, making their transmission wasteful. For example, a real-time VoIP application requiring low conversational delay between the participants will have no use for packets carrying voice data that is older than the maximum acceptable conversational delay.

In such an embodiment, a congestion control mechanism may monitor the latency of packets and attempt to control it, such that it does not exceed the acceptable level.

In one embodiment, the lowest latency measured for packets can form a baseline value, and future measurements can be compared to it. If the future measurements exceed a threshold value that is a function of the baseline value, the congestion control mechanism considers the network to be experiencing congestion.

In another embodiment, a similar approach uses the round-trip time of packets that is the time elapsed between sending a packet and receiving acknowledgement about it, instead of the latency.

In one embodiment, when the congestion control mechanism determines that the network is experiencing congestion based on increased packet delay, the congestion window (CWND) is reduced to limit the volume of data that can be sent on the network without receiving any feedback. The intent is to reduce the volume of data that will be or currently is being buffered by the network, which is a common cause of increased packet delay.

In one embodiment, the congestion window is reduced to the Bandwidth Delay Product (BDP) of the network. Theoretically, the BDP represents that volume of data that the network should be able to deliver without forming a standing queue of packets in its buffer, assuming that the packets are transmitted by the sender at a constant pace that reflects the throughput (BtlBw) of the network. Accordingly, this is expected to allow the network to recover, at least partially, and reduce the packet delay back to an acceptable level.

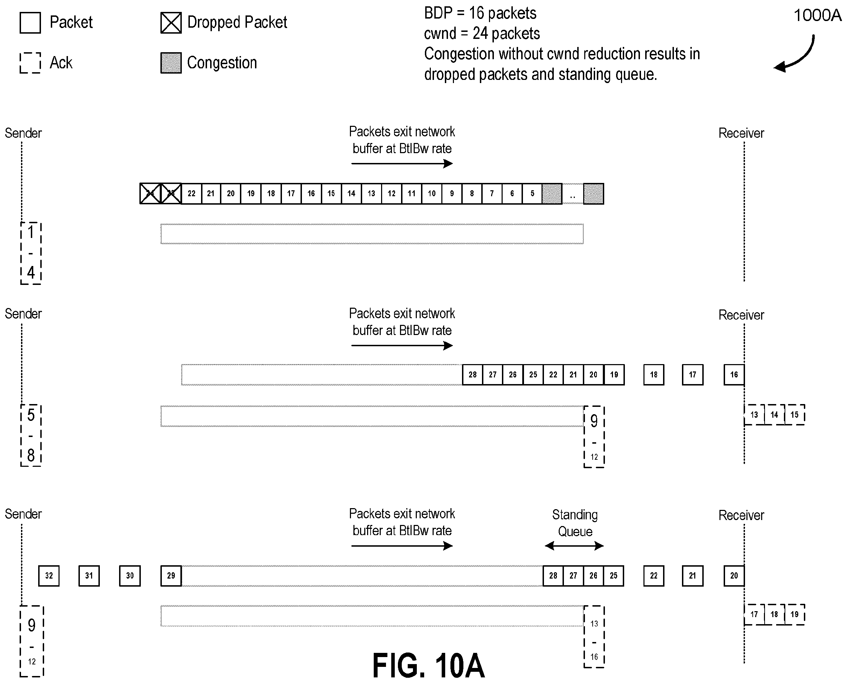

For example, assume a network with a BDP of 16 packets and a congestion control mechanism that determined a CWND of 24 packets to account for acknowledgement aggregation. **FIG. 10A** illustrates at **1000A** how congestion from other network nodes can cause the sender to overwhelm the network. The sender in this case does not reduce its congestion window and puts the full amount inflight. This fills the network buffer and extra packets that cannot be buffered get dropped. Even after the congestion is cleared and normal draining of the network buffer continues, **FIG. 10A** illustrates how a standing queue would have formed inside the network buffer, which increases the round-trip time of all future packets and makes it easier to fill the network buffer.

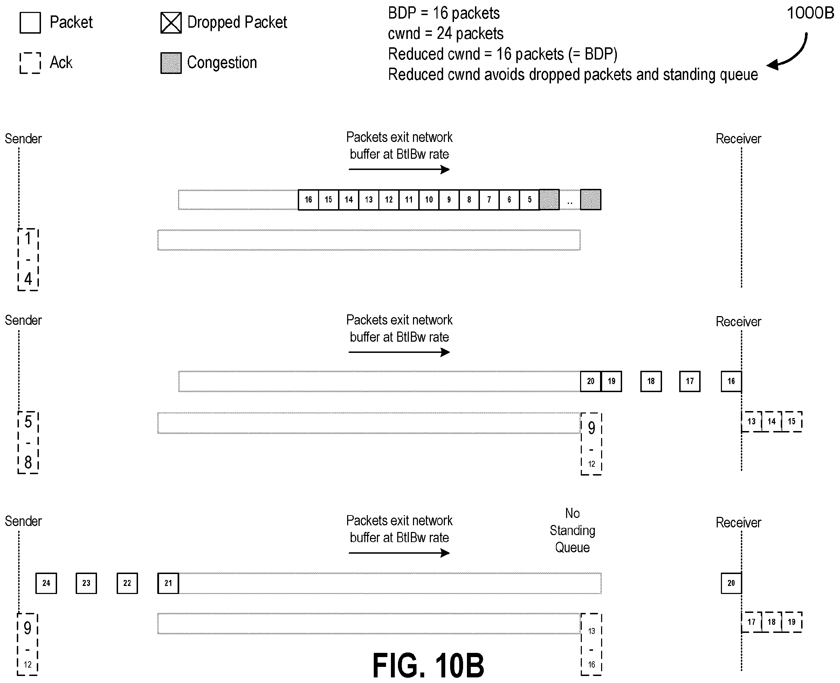

Continuing the example, **FIG. 10B** at **1000B** illustrates how a sender that reduces its congestion window to the BDP avoids both packet drops and formation of a standing queue. The sender can, for example, determine that congestion is occurring by detecting that feedback has not been received for a period of time that exceeds the baseline duration for feedback that it has measured in past transmissions. In another example, the sender can determine that congestion is occurring by receiving feedback that indicates that an amount of previously sent packets that exceeds the baseline loss experienced in past transmissions has not been delivered to the receiver. Responsive to this determination of congestion, the reduction of the congestion window to match the BDP reduces the amount of packets that will be put inflight. This consequently reduces the chance of filling the network buffer which previously led to packet drops. Moreover, putting only BDP packets inflight allows the network to drain its buffer completely (assuming the network properties have not changed) before new packets from the sender reach its buffer again.

In another embodiment, the congestion window is reduced to equal the volume of packets currently inflight.

The network is considered as no longer experiencing congestion when the congestion control mechanism determines that an acceptable level of performance has been restored.

In one embodiment, the reduction of the packet delay below a threshold value is an indication that network performance has been restored.

In one embodiment, that threshold value is determined as a function of the baseline delay value.

In another embodiment, transmitting a particular volume of data without incurring any loss is an indication that network performance has been restored.

In one embodiment, that volume of data is equal to the BDP.

In another embodiment, that volume of data is equal to the original value of the congestion window before it was reduced by the congestion control mechanism in reaction to congestion.

A push based architecture improves system performance on non-BoD connections for the most common application types. Table 3 summarizes the improvements that have been experimentally observed.

**Table 3: Application performance improvements due to Push based Scheduler**

| Application/Flow | Experimentally Observed Performance Improvements |
| --- | --- |
| Single ping flow | • No more random RTT spikes due to packets being unnecessarily scheduled onto more than one connection, some of which may experience a latency spike when transitioning from idle to active (common for LTE connections)<br>• Ping packets stay sticky to the same WAN connection due to stable sort order |
| Non-accelerated TCP | • Poorly performing WAN connections are sorted to the end of the list<br>• When the TCP sender ramps up bitrate such that its packets must overflow onto the poorly performing connections, it will see loss/latency, then pull back<br>• Average throughput oscillates around the aggregate throughput of the good connections |
| TCP inside VPN | • Similar performance to non-accelerated TCP |
|  | • Also observed a reduction in the number of out-of-order packets since bad WAN connections are sorted to end and seldom used. As a result, a large VPN replay window is no longer required. |
| Video chat (e.g., Zoom™, etc.) | • App uses a smaller jitter buffer (resulting in lower two-way chat latency), since in the common case its traffic will stay sticky to the good WAN connections |

The push based scheduling methods also makes Priority Routing behaviour more intuitive. For example, in one embodiment, the decision of whether or not to engage lower priority connections depends only on how their BtlBw compares to the configured thresholds.

For example, consider the following scenario:

wan0

> Priority: Primary
> Target Threshold: N/A
> BtlBw: 10 Mbps

wan1

> ◦ Priority: Secondary
> ◦ Target Threshold: 15 Mbps
> ◦ BtlBw: 30 Mbps

With the pull based Scheduler, each time the 50 Hz timer of wan1 wakes up and requests packets, the Scheduler provides it with packets for transmission since it finds that the desired target threshold (15 Mbps) is larger than what can be supplied by wan0 alone (10 Mbps).

# EP 4 523 395 B1

However, it does this irrespective of the rate that packets arrive at the input. For example, if the input rate does not exceed 10 Mbps, it would be more optimal if wan1 was not engaged since the traffic can fit entirely on wan0 alone.

With the push based Scheduler, wan0 will be sorted to the top of the list, and even if the thresholds indicate that wan1 should be active, packets will be scheduled onto it only after the wan0 CWND is completely consumed. As a result, there will be less unexpected use of lower priority connections, improving performance.

In summary, the Scheduler of a multipath system can be implemented as either pull based **(100A)** or push based **(100B)**. Push based is superior because the Scheduler is able to make packet scheduling decisions at a self-determined cadence, rather than be driven by the rate at which the target connections are ready to transmit. This self-determined cadence allows it to account for all factors that are important to the application that generated the packet, and/or the user of the system.

For example, a packet generated by a TCP-based application that requires maximum throughput would prefer that its packets be scheduled onto connections ordered from best to worst Mathis factor.

Also consider a more complicated example with the same TCP-based application, but where the user has configured the multipath system **100B** with priority routing rules, preferring Connection **110B** over all other connections **110N,** unless the goodput achievable on **110B** drops below 5 Mbps. In a hypothetical scenario where **110B** has high throughput, low latency, but high packet loss, **110B** would have a worse Mathis factor than all other connections **110N,**

The push based scheduler **100B** would be able to make a complex scheduling decision to respect the user preference for using Connection **110B** first, but also calculate the goodput achievable on **110B** by converting its inflight CWND to a bitrate and using that to estimate its available goodput. If this availability drops below the configured 5 Mbps threshold, it can schedule packets onto the remaining connections **110N,** ordered from best to worst Mathis factor.

As described above, measured properties of a connection can include: packet loss over 3 separate sliding windows (500ms, 3s, 30s), which is further summarized as the worst value over the three windows; current network round trip time (RTT); bandwidth and round trip propagation time (BBRv1) parameters: RtProp (network propagation delay); and BtlBw (throughput estimate). External directives, can include priority routing (PR) rules, among others, but can also include flow-specific rules/requirements.

In some embodiments, the BBRv1 measured properties differ from their design in the original BBRv1 IETF draft. For example, to consider embodiments that might run on systems that are less consistent in their execution time, the size of the sliding window used to compute BtlBw may change, either statically or dynamically. For similar execution consistency reasons, the input parameters used to compute RtProp may also be slightly modified.

Some or all of the input parameters can be rounded/bucketed/quantized before being used in the sort order determinations. The technical improvement from rounding and bucketing is to keep the sort order as "stable" as possible so that changes in sort order are not constantly occurring (e.g., without the rounding and bucketing, two close values may cause "jitter" by having the sort change continuously as their values fluctuate over time.

The factors that influence its decisions include: keeping the sort order as "stable" as possible, so that packets do not get unnecessarily split over multiple WAN connections (splitting increases the chances for self-induced out-of-order and jitter events); and taking into account both measured properties of the connection, and external directives that are not measured.

Values for rounding can include the following:

Latency-related values (RtProp, RTT) are rounded to the nearest multiple of 50ms, subject to a floor of 1ms after rounding.
Throughput-related values (BtlBw) are rounded to the "nearest order of magnitude".

Packet loss (worst value over the 3 sliding windows) is rounded to the nearest order of magnitude. Note that the raw values here are limited to the range [0,100], so the output values are limited to the set (0,1,2,3,4,5,6,7,8,9,10,20,30,40,50,60,70,80,90,100).

An example of rounding to the nearest order of magnitude is provided in the below table. The raw value is shown, its computed order of magnitude, then the resulting rounded value.

| Raw Value (Range) | Order of Magnitude | Rounded Value |
| --- | --- | --- |
| 0 | 1 | 0 |
| 1 | 1 | 1 |
| 2 | 1 | 2 |
| 10-14 | 10 | 10 |
| 15-24 | 10 | 20 |

(continued)

| Raw Value (Range) | Order of Magnitude | Rounded Value |
|---|---|---|
| 85000-94999 | 10000 | 90000 |
| 95000-99999 | 10000 | 100000 |
| 100000-149999 | 100000 | 100000 |
| 150000-200000 | 100000 | 200000 |

A specific improvement based on improving a networking routing order for controlling the use of network interfaces is described in some embodiments wherein a composite property for round-trip time (RTT) and packet loss is utilized to predict throughput based upon the Mathis Equation for establishing an upper bound for TCP throughput given RTT, packet loss, and MSS. The Mathis factor can be utilized to modify the sort order for routing networked packets.

Measured properties can include: packet loss over 3 separate sliding windows (500ms, 3s, 30s), which is further summarized as the worst value over the three windows; current network round trip time (RTT); bandwidth round trip propagation time (BBRv1) parameters: RtProp (network propagation delay); and BtlBw (throughput estimate). External directives, can include priority routing (PR) rules, among others, but can also include flow-specific rules/requirements.

In some embodiments, the BBRv1 measured properties differ from their design in the original BBRv1 IETF draft. For example, to consider embodiments that might run on systems that are less consistent in their execution time, the size of the sliding window used to compute BtlBw may be increased to cover a long duration of time (hiding the variability due to execution inconsistency), but the window duration may also be immediately shortened if network loss or latency increase events occur, since those indicate that the BtlBw may have actually changed and any long history in the sliding window must be forgotten.

For similar execution inconsistency reasons, the input parameters used to measure RtProp may be changed to include more than the network propagation delay, adding portions of the execution/processing time, since that time can be non-trivial, and consistently contributes to the actual delay experienced when transmitting packets and waiting for a response. In some embodiments, this is referred to as "System RtProp", as opposed to "Network RtProp" which only consists of the network propagation delay. In these embodiments, "System RtProp" and "Network RtProp" may be used for varying computations, depending on the intended purpose. For example, in calculating CWND, "System RtProp" is appropriate, so that the pipeline contains enough data inflight to account for processing delays. However, when sorting network connections for determining packet routing, "Network RtProp" is more appropriate, since the preferred routing decision is independent of system execution delay.

Packet loss, latency, and throughput are not completely independent variables. The three of them combined influence each other depending on the application's congestion control behaviour. This is because for example, with TCP, higher packet loss results in longer periods of over-the-air "silence" (underutilized channel) as the sender waits for DUP ACKs or RTOs to occur.

As such, some composite properties are determined and used in the final sort approach. Specifically:

**Mathis Factor:** This composite property takes into account RTT and packet loss to predict throughput, and is based on the Mathis Relation that gives an upper bound for TCP throughput given RTT, packet loss, and MSS. When comparing the properties of any two network connections to determine their sort order, MSS can be considered a constant, so this relation indicates that expected throughput is proportional to the inverse of (RTT * sqrt(PacketLoss)). The relation is utilized in this example as a practical implementation to establish a factor that is utilized in directly controlling the operation of a network controller or a router. For each connection, the system determines the MathisFactor as: MAX(RoundedRtt, 1ms) * sqrt(RoundedSummarizedPacketLoss). Connections with smaller MathisFactor values are considered better. The calculation is a function of two independently measured properties, so the relationship between them determines how connections will compare to each other. The Mathis Factor can be maintained and stored in a data object, such as a corresponding Mathis Factor data value associated with each connection, and stored, for example, in an array of data values alongside other monitored characteristics.

For example, at one extreme, two connections with 0% packet loss will always have the same MathisFactor - their actual RTT values do not matter. In this scenario the MathisFactor does not influence the sort order - it will be determined through comparison of subsequent measured and composite properties.

At the other extreme, if two connections have 100% packet loss (RoundedSummarizedPacketLoss=1.0), only their RoundedRtt values will determine how they compare to each other. In some embodiments, this is not desirable, so connections with 100% packet loss are filtered from the available choices at an earlier stage.

Between the two extremes, connections with both low RTT and low packet loss will compare better than those with higher values. However, a connection with high percentage loss can still compensate by having a low RTT and have a same Mathis Factor as a connection with a low percentage loss. For example:

Connection A: 100ms RTT, 0.01 (1%) loss => MathisFactor=10
Connection B: 19ms RTT, 0.25 (25%) loss => MathisFactor=9.5

In this example, even though Connection B has significantly higher loss (25% vs 1%), its lower RTT compensates and causes it to compare with a better MathisFactor than Connection A. The explanation for this is that Connection B's lower RTT allows it to exchange packet acknowledgements (positive and negative) for the lost packets, and complete any necessary packet retransmissions faster than Connection A can with its higher RTT, even though it has a smaller percentage loss.

**Capacity Factor:** This composite property takes into account BtlBw and RtProp and is determined as: RoundedBtlBw / MAX(RoundedRtProp, 1ms). The units are "bytes per second per millisecond", which has no physical meaning, but provides a way to normalize the bandwidth that the connection can achieve per unit of RtProp. In other words, a connection that is able to achieve more bandwidth per millisecond of its RtProp is considered more efficient than one that achieves less. Efficient transmission in this context means a connection that achieves more bandwidth per millisecond of propagation delay (RtProp).

Once all of the raw inputs have been processed and composite properties calculated as described above, the actual sort mechanism can execute serially as follows:

Moving from one comparison to the next only occurs if all of the previous lines compare as equal. If a comparison is unequal, the remainder of the comparisons are irrelevant and are skipped. The choice of comparison, in some embodiments, is conducted on a flow classification basis (e.g., VPN vs. VoIP vs. ping packets vs. FEC packets), and for each different flow, the comparison criterion list could be different (e.g. each could have different pre-defined most important characteristic, second most important characteristic, third most important characteristic, and so on). Each of these characteristics can be iterated through from most important and so on, until the connections themselves can be sorted and put into an order sequence. In some embodiments, depending on flow classification, a first pre-step is to select a subset of connections that are suitable for sending the type of data packet in the flow classification, and then an order is imparted to them before packet assignment is carried out.

1. Connections that are completely down (100% summarized loss) are considered worse than connections than have <100% summarized loss.
2. PR Priority (higher priority is better)
3. MathisFactor (lower is better)
4. RoundedRTT (lower is better)
5. CapacityFactor (higher is better)
6. RoundedRtProp (lower is better)
7. RoundedBtlBw (higher is better)
8. ConnectionID (lower is better)

A rendering of the sort mechanism is shown in **FIG. 1F.** In an example sort mechanism, a real-time flow includes a comparison of RTT/RtProp first, and then of equal, it would then compare reliability, and then if also equal, then compare transmission rate, etc. Depending on a flow type, there may be different sort orders. For example, a flow that wants throughput might compare transmission rate first. If equal, then compare at reliability. If also equal, it might decide to assess nothing else and then simply choose arbitrarily.

In some embodiments, flow requirements (e.g., real-time vs throughput) can dictate the order and number of comparisons. For example, a real-time flow might prefer to compare RoundedRTT and RoundedRtProp only, ignoring all other properties. A throughput flow may decide to only compare the MathisFactor and CapacityFactor.

Most application traffic tends to be bursty or adaptive, so it does not require the use of all WAN connections. This means that the connections that are currently at the bottom of the sort order may not have traffic transmitted on them. If they don't, their explicit sort dimensions don't get updated, so they tend to maintain their position near the bottom of the sort order.

This is generally considered a good property of the algorithm, but may be modified to be influenced by external factors. For example, if a flow has specific requirements that cannot be satisfied by the connections currently near the top of the sort order, it may make sense to generate probing traffic on the connections near the bottom to refresh their explicit sort dimensions.

For example, as explained in further detail below, in some embodiments these connections may be given a score of 0 in Tier groupings, so that these connections can be used to send packets regardless and can continue scheduling. For instance, sending early retransmits on stale connections and unreliable connections to refresh the connections, and check if they have become reliable.

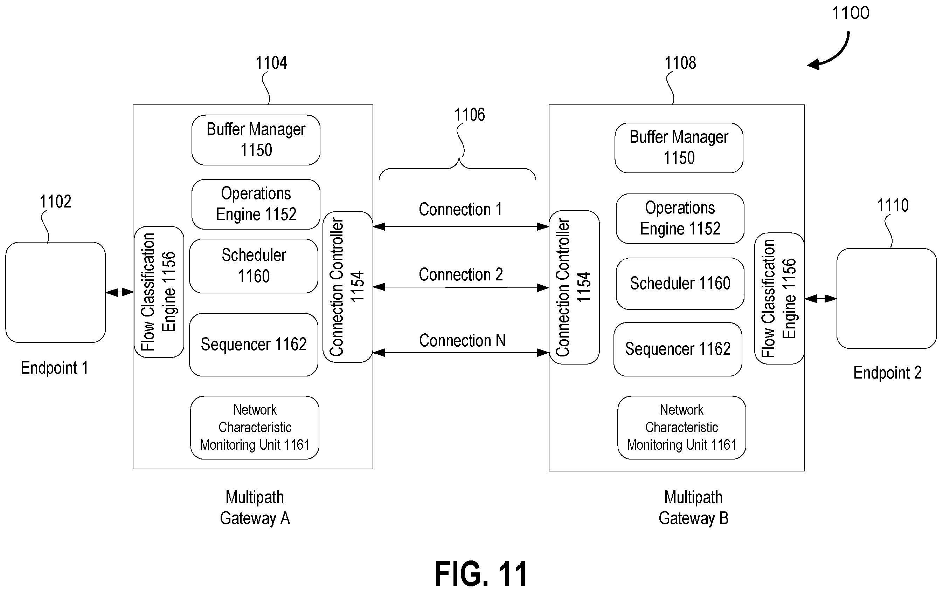

**FIG. 11** illustrates a blended connection aggregation system **1100** that is configured to utilize an improved scheduling approach on the transmitting portion of the system and a buffering system on the receiving end with sequencing of packets. The components in the system as illustrated, in an embodiment, are hardware components that are configured for interoperation with one another. In another embodiment, the hardware components are not discrete components and more than one of the components can be implemented on a particular hardware component (e.g., a computer chip that performs the function of two or more of the components).

In some embodiments, the hardware components reside on the same platform (e.g., the same printed circuit board), and the system **1100** is a singular device that can be transported, connected to a data center / field carry-able device (e.g., a rugged mobile transmitter), etc. In another embodiment, the components are decentralized and may not all be positioned in close proximity, but rather, communicate electronically through telecommunications (e.g., processing and control, rather than being performed locally, are conducted by components residing in a distributed resources environment (e.g., cloud)).

Providing blended connectivity is particularly desirable in mobile scenarios where signal quality, availability of networks, quality networks, etc. are sub-optimal (e.g., professional newsgathering / video creation may take place in locations without strong network infrastructure). Accordingly, in some embodiments, the device described herein is a ruggedized network controller device that is adapted for operation in remote or mobile scenarios, which, for example, can be man-portable (e.g., worn by a journalist technologist in a backpack), cart-portable (e.g., pushed along on a media cart), or vehicle-portable (e.g., coupled to a media van, truck, boat, helicopter, or airplane).

Alternatively, the device can located in a communication hub or other type of centralized communication facility that coordinates connections to further endpoints. For example, in this example, the device can be located, coupled to, or residing in a communications installation, such as a communications relay site (e.g., satellite station, relay transmitter, broadcast translator, re-broadcaster, repeater, complementary station), which can coordinate communications across a number of different channels to various endpoints, which can be television stations, radio stations, data communication stations, personal computers, mobile devices, among others.

A number of different data connections **1106** (e.g., "paths") representing one or more networks (or network channels) are shown, labelled as Connection 1, Connection 2.. Connection N. There may be multiple data connections / paths across a single network, or multiple data connections that may use one or more networks.

These data connections can include various types of technologies, and each can face different communication circumstances, such as having different types of available communication power, array architectures, polarizations, multipath propagation mechanisms, spectral interference, frequency ranges, modulation, among others, and accordingly, the connections may all have different levels of communications reliability.

The system **1100** may be configured to communicate to various endpoints **1102, 1110** or applications, which do not need to have any information about the multiple paths / connections **1106** used to request and receive data (e.g., the endpoints **1102, 1110** can function independently of the paths or connections **1106).** The received data, for example, can be re-constructed such that the original transmission can be regenerated from the contributions of the different paths / connections **1106** (an example use scenario would be the regeneration of video by way of a receiver that is configured to slot into a server rack at a data center facility, integrating with existing broadcast infrastructure to provide improved networking capabilities).

The system **1100** receives input (data flows) from a source endpoint **1102** and schedules improved delivery of data packets across various connections **1106,** and then sequences the data packets at the other end of the system **1108** prior to transmission to the destination endpoint application **1110**. In doing so, the system **1100** is configured to increase bandwidth to approach the sum of the maximum bandwidth of the various paths available. Compared to using a single connection, the system **1100** also provides improved reliability, which can be an important consideration in time-limited, highly sensitive scenarios, such as newsgathering at live events as the events are taking place. At these events, there may be high signal congestion (e.g., sporting event), or unreliability across one or more of the paths (e.g., reporting news after a natural disaster).

Multiple connections can be bonded together to operate as a single connection, and different approaches can be utilized to coordinate routing such that a connection can be used multiple times to send a same packet, among others.

In various embodiments, both the scheduler **1160** and the sequencer **1162** could be provided from a cloud computing implementation, or at an endpoint (prior to the data being consumed by the application at the endpoint), or in various combinations thereof.

The system **1100** may be tuned to optimize and or prioritize, performance, best latency, best throughput, least jitter (variation in the latency on a packet flow between two systems), cost of connection, combinations of connections for particular flows, among others (e.g., if the system **1100** has information that a transmission (data flow) is of content type X, the system **1100** may be configured to only use data connections with similar latency, whereas content type Y may allow a broader mix of data connections (or require greater net capacity which can only be accomplished with a combination of data connections)). This tuning may be provided to the system generally, or specific to each flow (or set of flows based on location, owner of either starting point or endpoint or combination thereof, time of transmission, set of communication links available, security needed for transmission etc.).

The system **1100** may be generally bidirectional, in that each gateway **1104, 1108,** will generally have a scheduler **1160** and sequencer **1162** to handle the TCP traffic (or UDP traffic, or a combination of TCP and UDP traffic, or any type of general internet protocol (IP) traffic), though in some embodiments, only one gateway may be required.

The system **1100** may be utilized for various scenarios, for example, as a failover (e.g., for disaster recovery) or supplement for an existing Internet connection (e.g., a VoIP phone system, or corporate connection to web), whereby additional networks (or paths) are seamlessly added to either replace a dropped primary Internet connection, or supplement a saturated primary Internet connection by bonding it with costlier networks. In a failover situation, there could be a coordinated failure across many communication channels (e.g., a massive denial of service attack or a major solar storm / geomagnetic storm), and the system **100** would then require an efficient use of communication resources as available communication resources are at a premium.

Another use of the system **1100** is to provide a means of maximizing the usage of a high cost (often sunk cost), high reliability data connections such as satellite, by allowing for the offloading of traffic onto other data connections with different attributes.

In some embodiments, the system **1100** is a network gateway configured for routing data flows across a plurality of network connections.

**FIG. 11** provides an overview of a system with two gateways **1104** and **1108,** each containing a buffer manager **1150,** an operations engine **1152,** a connection controller **1154,** a flow classification engine **1156** (responsible for flow identification and classification), a scheduler **1160,** a sequencer **1162,** and a network characteristic monitoring unit **1161** and linked by N data connections **1106,** with each gateway connected to a particular endpoint **1102, 1110.** The reference letters A and B are used to distinguish between components of each of the two gateways **1104** and **1108.**

Each gateway **1104** and **1108** is configured to include a plurality of network interfaces for transmitting data over the plurality of network connections and is a device (e.g., including configured hardware, software, or embedded firmware), including processors configured for: monitoring time-variant network transmission characteristics of the plurality of network connections; parsing at least one packet of a data flow of packets to identify a data flow class for the data flow, wherein the data flow class defines or is otherwise associated with at least one network interface requirement for the data flow; and routing packets in the data flow across the plurality of network connections based on the data flow class, and the time-variant network transmission characteristics.

The buffer manager **1150** is configured to set buffers within the gateway that are adapted to more efficiently manage traffic (both individual flows and the combination of multiple simultaneous flows going through the system). In some embodiments, the buffer manager **1150** is a discrete processor. In other embodiments, the buffer manager **1150** is a computing unit provided by way of a processor that is configured to perform buffer management **1150** among other activities.

The operations engine **1152** is configured to apply one or more deterministic methods and/or logical operations based on received input data sets (e.g., feedback information, network congestion information, transmission characteristics) to inform the system about constraints that are to be applied to the bonded connection, either per user/client, destination/server, connection (e.g., latency, throughput, cost, jitter, reliability), flow type/requirements (e.g., FTP vs. HTTP vs. streaming video). For instance, the operations engine **1152** may be configured to limit certain types of flows to a particular connection or set of data connections based on cost in one instance, but for a different user or flow type, reliability and low latency may be more important. Different conditions, triggers, methods may be utilized depending, for example, on one or more elements of known information. The operations engine **1152,** for example, may be provided on a same or different processor than buffer manager **1150.**

The operations engine **1152** may be configured to generate, apply, or otherwise manipulate or use one or more rule sets determining logical operations through which routing over the N data connections **1106** is controlled.

The flow classification engine **1156** is configured to evaluate each data flow received by the multipath gateway **1104** for transmission, and is configured to apply a flow classification approach to determine the type of traffic being sent and its requirements, if not already known. In some embodiments, deep packet inspection techniques are adapted to perform the determination. In another embodiment, the evaluation is based on heuristic methods or data flows that have been marked or labelled when generated. In another embodiment, the evaluation is based on rules provided by the user/administrator of the system. In another embodiment, a combination of methods is used. The flow classification engine **1156** is configured to interoperate with one or more network interfaces, and may be implemented using electronic circuits or processors.

The scheduler **1160** is configured to perform a determination regarding which packets should be sent down which connections **1106.** The scheduler **1160** may be considered as an improved QoS engine. The scheduler **1160,** in some embodiments, is implemented using one or more processors, or a standalone chip or configured circuit, such as a comparator circuit or an FPGA. The scheduler **1160** may include a series of logical gates confirmed for performing the determinations.

While a typical QoS engine manages a single connection - a QoS engine (or in this case, the scheduler **1160**) may be configured to perform flow identification and classification, and the end result is that the QoS engine reorders packets before they are sent out on the one connection.

In contrast, while the scheduler **1160** is configured to perform flow identification, classification, and packet reordering, the scheduler **1160** of some embodiments is further configured to perform a determination as to which connection to send the packet on in order to give the data flow improved transmission characteristics, and/or meet policies set for the flow by the user/administrator (or set out in various rules). The scheduler **1160** may, for example, modify network interface operating characteristics by transmitting sets of control signals to the network interfaces to switch them on or off, or to indicate which should be used to route data. The control signals may be instruction sets indicative of specific characteristics of the desired routing, such as packet timing, reservations of the network interface for particular types of traffic, etc.

For example, 2 connections with the following characteristics are considered:

Connection 1: 1 ms round trip time (RTT), 0.5 Mbps estimated bandwidth; and
Connection 2: 30 ms RTT, 10 Mbps estimated bandwidth.

The scheduler **1160** could try to reserve Connection 1 exclusively for Domain Name System (DNS) traffic (small packets, low latency). In this example, there may be so much DNS traffic that Connection 1's capacity is reached - the scheduler **1160** could be configured to overflow the traffic to Connection 2, but the scheduler **11160** could do so selectively based on other determinations or factors (e.g., if scheduler **1160** is configured to provide a fair determination, the scheduler **1160** could be configured to first overflow traffic from IP addresses that have already sent a significant amount of DNS traffic in the past X seconds).

The scheduler **1160** may be configured to process the determinations based, for example, on processes or methods that operate in conjunction with one or more processors or a similar implementation in hardware (e.g., an FPGA). The scheduler **160** may be configured for operation under control of the operations engine **152,** disassembling data streams into data packets and then routing the data packets into buffers (managed by the buffer manager **150)** that feed data packets to the data connections according to rules that seek to optimize packet delivery while taking into account the characteristics of the data connections.

The scheduler **1160,** in some embodiments, need not be configured to communicate packets across in the correct order, and rather is configured for communicating the packets across the diverse connections to meet or exceed the desired QoS/QoE metrics (some of which may be defined by a network controller, others which may be defined by a user/customer). Where packets may be communicated out of order, the sequencer **162** and a buffer manager may be utilized to reorder received packets.

A sequential burst of packets is transmitted across a network interface, and based on timestamps recorded when packets in the sequential burst of packets are received at a receiving node, and the size of the packets, a bandwidth estimate of the first network interface is generated. The estimate is then utilized for routing packets in the data flow of sequential packets across a set of network connections based on the generated bandwidth of the first network interface. As described below, in some embodiments, the bandwidth estimate is generated based on the timestamps of packets in the burst which are not coalesced with an initial or a final packet in the burst, and a lower bandwidth value can be estimated and an upper bandwidth value can be estimated (e.g., through substitutions of packets). The packets sent can be test packets, test packets "piggybacking" on data packets, or hybrid packets. Where data packets are used for "piggybacking", some embodiments include flagging such data packets for increased redundancy (e.g., to reinforce a tolerance for lost packets, especially for packets used for bandwidth test purposes).

In some embodiments, the sequential packets may be received in order, or within an acceptable deviation from the order such that sequencer **1162** is capable of re-arranging the packets for consumption. In some embodiments, sequencer **1162** is a physical hardware device that may be incorporated into a broadcasting or networking infrastructure that receives signals and generates an output signal that is a reassembled signal. For example, the physical hardware device may be a rack-mounted appliance that acts as a first stage for signal receipt and re-assembly.

The sequencer **1162** is configured to order the received packets and to transmit them to the application at the endpoint in an acceptable order, so as to reduce unnecessary packet re-requests or other error correction for the flow. The order, in some embodiments, is in accordance with the original order. In other embodiments, the order is within an acceptable margin of order such that the sequencer **1162** is still able to reassemble the data flows. The sequencer **1162** may include, for example, a buffer or other mechanism for smoothening out the received flow, and in some embodiments, is configured to control the transmission of acknowledgements and storage of the packets based on monitored of transmission characteristics of the plurality of network connections, and an uneven distribution in the receipt of the data flow of sequential packets.

The sequencer **1162** may be provided, for example, on a processor or implemented in hardware (e.g., a field-programmable gate array) that is provided for under control of the operations engine **1152,** configured to reassemble data flows from received data packets extracted from buffers.

The sequencer **1162,** on a per-flow basis, is configured to hide differences in latency between the plurality of connections that would be unacceptable to each flow.

The Operations Engine **1152** is operable as the aggregator of information provided by the other components (including **1154),** and directs the sequencer **1162** through one or more control signals indicative of how the sequencer **1162** should operate on a given flow.

When a system configured for a protocol such as TCP receives packets, the system is generally configured to expect (but does not require) the packets to arrive in order. However, the system is configured to establish a time bound on when it expects out of order packets to arrive (usually some multiple of the round trip time or RTT). The system may also be configured to retransmit missing packets sooner than the time bound based on heuristics (e.g. fast retransmit triggered by three DUP ACKs).

Where packets are arriving at the sequencer **1162** on connections with significantly different latencies, the sequencer **1162** (on a per flow basis), may be configured to buffer the packets until they are roughly the same age (delay) before sending the packets onward to the destination. For example, it would do this if the flow has requirements for consistent latency and low jitter.

The sequencer **1162,** does not necessarily need to provide reliable, strictly in-order delivery of data packets, and in some embodiments, is configured to provide what is necessary so that the system using the protocol (e.g., TCP or the application on top of UDP) does not prematurely determine that the packet has been lost by the network.

In some embodiments, the sequencer **1162** is configured to monitor (based on data maintained by the operations engine **1152)** the latency variation (jitter) of each data connection, along with the packet loss, to predict, based on connection reliability, which data connections are likely to delay packets beyond what is expected by the flow (meaning that the endpoints **1102** and **1110** would consider them lost and invoke their error correction routines).

For an out of order situation, the sequencer **1162** may, for example, utilize larger jitter buffers on connections that exhibit larger latency variations. For packet re-transmission, the sequencer **1162** may be configured to request lost packets immediately over the "best" (most reliable, lowest latency) connection.

In some embodiments, a network controller device (e.g., a router) is described, the device including a processor coupled to computer memory and data storage, the processor configured to: receive one or more data sets indicative of monitored network communications characteristics; maintain, in a data structure stored on the data storage, a tiered representation of a plurality of connections segregated into a plurality of groups, each group established based at least on a minimum probability associated with a successful communication of a data packet across one or more connections of the plurality of connections residing within the group; and control a plurality of communications of a data packet such that the data packet is sent at least once across one or more connections of the plurality of connections such that, in aggregate, the plurality of communications causes the transmission of the data packet to satisfy a target probability threshold.

In some embodiments, in respect of the target probability threshold, it is the reception of the data packet defines reliability, and in such aspects, the plurality of communications causes the reception of the data packets to satisfy the target probability threshold.

In another aspect, the plurality of groups are organized into a plurality of corresponding Tiers, each Tier representing a number of times the data packet would have to be transmitted across any corresponding connections of the Tier to achieve the target probability threshold.

In another aspect, the plurality of communications include re-transmissions across connections of a Tier of the plurality of Tiers, wherein a number of re-transmissions are based on the number of times the data packet would have to be transmitted across corresponding connections of the Tier to achieve the target probability threshold for the corresponding Tier. In variant embodiments, retransmission may be conducted on the same connection, but at different times (i.e., separate bursts) to prevent loss of all retransmissions due to a temporary reduction in network reliability (i.e., burst loss due to buffer saturation on an intermediate host in the path).

In another aspect, the re-transmissions are conducted across different connections of the Tier.

In another aspect, the plurality of communications includes re-transmissions across connections of different Tiers of the plurality of Tiers.

A connection may not be participating in transmission events due to configured priority routing preferences, which can deactivate lower priority connections because higher priority ones have sufficient bandwidth to handle the priority data flow. In the absence of other traffic, this limits the system's knowledge about the lower priority connections, and scheduler **1160** or connection manager **1154** must take into account the stale observations of the connection properties.

Herein, embodiments are described which may extend upon the methods and systems described above.

In some embodiments, new scheduling approaches (e.g., algorithms) may be introduced to address the following three issues that arise when sorting connections by their Properties into an absolute preferred order (as was described above): These algorithms are implemented on physical computing controllers and/or circuits.

A) Connections are used in the same order by every flow that has the same preferences. The flows can unnecessarily compete with each other on each connection, increasing the probability that they will have their traffic split between multiple connections. Whenever possible, the preference is to keep a flow's traffic sticky to a single connection only, to avoid unnecessary work to recombine its packets at the other side.

B) Connections further down in the absolute preferred order are used less often, so they are more likely to have stale Properties.

C) Connections with very similar Measured / Composite Properties, even after rounding / bucketing) could end up frequently swapping places in the absolute preferred order, causing packets from flows to be unnecessarily split between the connections.

Additionally, technically challenging situations which are difficult to satisfy are real-time applications with real-time deadlines, such as, video chats, voice calls, where due to the deadlines, it may be necessary to receive the packets on time and with minimal jitter / loss. In some embodiments, both latency and jitter requirements can be mandated. For example, for voice and video to be smooth, they need to come in at a particular frame rate, otherwise a user may experience freezes and pauses.

In a non-limiting example, flow types for consideration can include those generated by streaming video applications. With these applications, the sender captures and encodes video at a given framerate which is typically constant (e.g. 50 frames per second), but in some cases could be variable. The sender packetizes these encoded video frames for transporting to a receiver, typically into UDP packets that include timestamps representing the relative capture time of each video. For example, for a 50 fps framerate, if the very first video frame has a timestamp of t=0, the next video frame would have a timestamp of t=20ms (1 second divided by 50 frames per second).

In these streaming video applications, the sender then transmits the UDP packets to a receiver, which needs to receive them in a time-critical manner. This is because the moment the receiver begins playback of the first video frame, all subsequent frames (consisting of one or more UDP packets) must be received within 20ms of the previous frame, otherwise playback to the viewer will be perceived to have artifacts (choppy or stuttering video), providing for a poor viewing experience.

From a networking perspective, delivery of UDP packets typically occurs on a best effort basis, meaning there is sufficient variability such that the UDP packets composing each video frame may not be consistently delivered to the receiver within 20ms of the previous video frame. This for example, may be due to queuing delays arising from contention for the available capacity at the one or more network links between the sender and receiver. The receiver typically attempts to handle this by storing the video frames in a jitter buffer that is sized large enough to handle the predicted variation in the delivery times. For example, a jitter buffer that stores two 50 fps video frames would be able to hide network variability in the delivery times of the UDP packets by up to 40ms. However, a larger jitter buffer results in a longer glass-to-glass latency (the delay between when a video frame was captured to when it is played back). In sizing its jitter buffer, the receiver must make a trade-off decision to balance the perceived smoothness of playback (rendering the video frames exactly 20ms apart), versus the overall latency experienced by the viewer.

An opportunity and a challenge that presents itself in respect of having multiple connections for this streaming video example is that there are multiple network paths between the sender and receiver. The queuing delays and resulting variability in UDP packet delivery times on each connection will typically be uncorrelated, so it is possible for the sender to use scheduling techniques to transmit each UDP packet on one or more connections to result in the video frames consistently arriving at the receiver before their respective deadlines, allowing the receiver to use a smaller jitter buffer and reduce the overall latency experienced by the viewer.

Throughput based applications, such as bulk data delivery including FTP, and large file download, may pose different challenges, because there is less emphasis on latency and jitter. There may be no issue with latency, as long as the connection provides throughput. For example, for file transfer, if there is an initial pause before the transfer begins, this may often be acceptable.

Previous schedulers may have sorted connections in an absolute order from the best to worst, which presents a technical problem because every application using the connections in the same order is not necessarily good, especially if they have competing requirements (e.g. throughput versus real-time). For real-time purposes, the best connection may be different than the best connection for throughput purposes. Using the connections in a different order allows splitting the load to reduce contention for the first connection, making it more likely to meet real-time flow requirements. Treating some connections as "functionally equivalent" may be good in some embodiments, and described embodiments consider keeping flows sticky to one of several "functionally equivalent" connections. For example, if sticky, there may be less need to shift between connections or reorder packets / put them back in order at the other (receiving) side.

Consider, real-time applications with constraints and a multiple WAN connection blending router needing to route their packets to meet the constraints set by the applications. There may be multiple applications running at the same time, having varying requirements. There is a need to achieve high performance, while balancing various issues. This technical challenge is further compounded when many applications are running and competing for bandwidth, where all the applications different needs must be satisfied. In many situations, some applications will be real-time, some will require throughput, and because WAN capacity is constrained, it is technically challenging to balance the various trade-offs (e.g. bandwidth, latency, jitter).

An improvement, according to some embodiments, is to group the connections into Tiers, where every connection in a Tier is "functionally equivalent" from the perspective of the flow preferences.

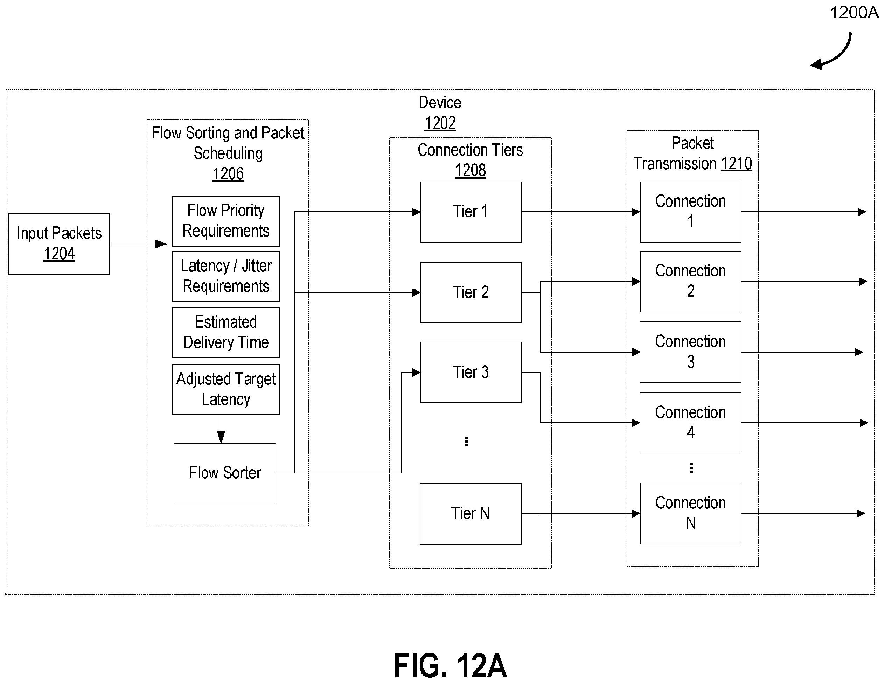

**FIG. 12A** is a schematic diagram of a per-flow communication system, according to some example embodiments. The per-flow communication system is

In the shown embodiment of diagram **1200A,** device **1202** may receive input packets **1204,** which may then be sorted into flows and prioritized based on their requirements in **1206.** The available connections may then be sorted into the connection Tiers **1208** based on a combination of the flow requirements, the measured/composite connection properties, and any pre-determined rules (for example, connection priority rules specified by an administrator). As shown, connection Tiers **1208** include Tier 1, Tier 2, Tier 3, up to Tier N. Variations are possible of the connection Tiers **1208,** and in a variant embodiment, the Tiers are further subdivided into sub-Tiers. Other, different, alternate, more, less Tiers are possible. The input packets **1204** may then be transmitted on the determined connection **1210,** corresponding to the appropriate Tiers and parameters.

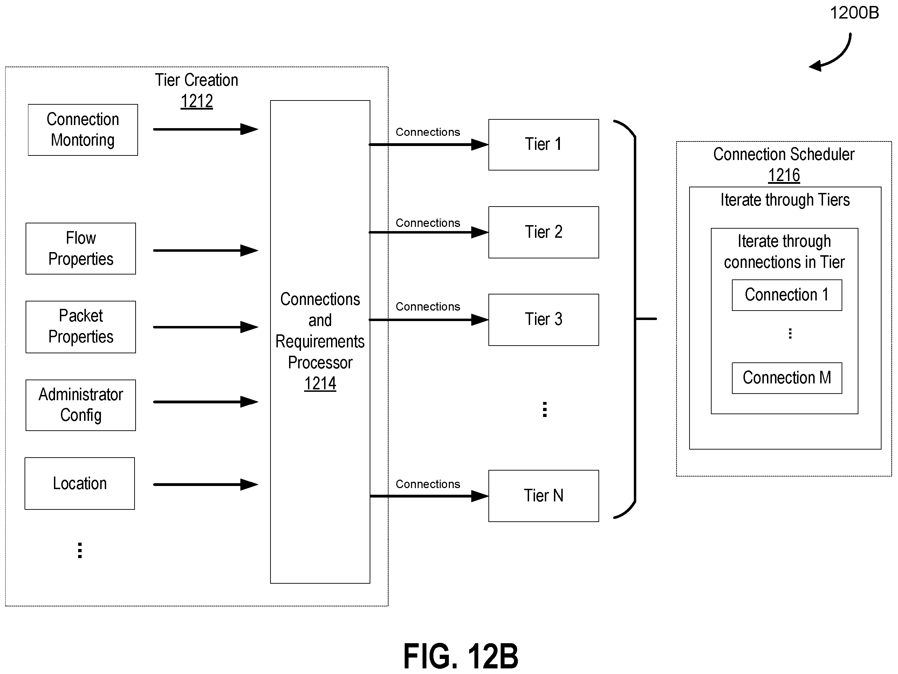

**FIG. 12B** is a schematic diagram of a per-flow communication system **1200B,** according to some example embodiments. At Tier Creation **1212,** various requirements, such as but not limited to connection monitoring, flow properties, packet properties, administrator configuration, location, among others, as well as multiple connections, are considered by a connections and requirements processor **1214.**

The connections and requirements processor **1214** may, in some embodiments, group the multiple connections into Tiers, shown in **1200B** as Tier 1, Tier 2, Tier 3, ..., Tier N. Tier Creation **1212** may occur at any point prior to flow sorting, shown in **FIG. 12A** at **1206.** In some embodiments, communication system **1200B** may be included in communication system **1200A,** for example, Tier creation **1212** occurring in flow sorting and packet scheduling **1206.**

Connections sorted into Tiers during Tier creation **1212** by connections and requirements processor **1214** may then transmit flows of packets, for example. A connection scheduler **1216** may schedule packet transmission by iterating through the Tier levels, as well as iterating through the connections sorted into a single Tier level. Packet transmission and scheduling approaches are described further herein.

Functionally, a Tier may be as described above as grouping connections that are "functionally equivalent", however in these described embodiments, "functional equivalence" has been expanded. From a systems perspective, the Tiers can be managed through the usage of database records or metadata that is dynamically updated or appended. For example, each connection can have Tier assignments that are tracked and updated through a corresponding database value stored in a database table, such as a routing table, stored on coupled computer memory, such as non-transitory computer readable media, which is referenced or traversed to obtain Tier information which is then used for connection control approaches described herein.

The following definition may describe "functional equivalence", according to some embodiments:

For flows that have throughput preference, the Tiers may be based on identical (Mathis Factor, Capacity Factor) Composite Property pairs, calculated from raw or rounded / bucketed / quantized Measured Properties. In some embodiments, the Composite Properties may be rounded / bucketed as well. In some other embodiments, additional rounding / bucketing / filtering of Measured Properties and Composite Properties may be introduced to account for edge cases. For example, without this additional filtering, a connection with a very high drop probability (98+%) and low latency, might result in a better Mathis Factor compared to a connection with lower loss but much higher latency.

An explanation for grouping/tiering connections based on unique (Mathis Factor, Capacity Factor) pairs for flows with a throughput preference is that these factors measure the throughput capabilities of connections and how efficiently they are able to use that throughput. Recall that the Mathis Factor predicts throughput based on the connection RTT and packet loss (high packet loss means the connection will have to retransmit lost packets and retransmits take longer if the RTT is larger). Recall that the Capacity Factor is a measure of the transmission rate a connection can achieve per millisecond of its RTT (the idea being that generally speaking, higher throughput and lower RTT is preferred). Given the following table describing the properties of several example connections:

| Connection | Throughput | RTT | Packet Loss | Rounded / Bucketed Mathis Factor | Rounded / Bucketed Capacity Factor |
|---|---|---|---|---|---|
| A | 10 Mbps | 10 ms | 0% | 50 | 100,000 |
| B | 100 Mbps | 125 ms | 0% | 50 | 100,000 |
| C | 100 Mbps | 125 ms | 30% | 300 | 100,000 |

A "functional equivalence" grouping/tiering of these 3 connections is that A and B belong in the same Tier because they are both reliable, high performing connections. Both have no loss (so can efficiently use their throughput since retransmits won't be required), and both achieve similar throughput per millisecond of latency. They are "functionally equivalent" in that if a flow preferring throughput was scheduled on either connection, it would be able to take full advantage of the connection's capacity. C intuitively belongs in a different "functionally equivalent" Tier because of its high loss rate compared to B. The actual throughput achieved on C will be much lower than B since many packets will need to be retransmitted.

For flows that have a real-time preference, the Tiers may be based on grouping connections based on the probability that they will be able to deliver the flow's packets prior to each packet's deadline.

An explanation for how and why different connections can be categorized as "functionally equivalent" for these types of flows can be observed by comparing the characteristics of the available connections to the flow's real-time requirements. For example, say a real-time video chat application has a target latency requirement of 150ms, meaning that the video sender desires to have each of its UDP packets delivered to the video receiver prior to the age of each packet reaching 150ms, where the age is measured from when the sender originally transmitted each packet. This is common requirement for video chat applications, where the overall round-trip latency must remain 300ms or less for the chat to be perceived as interactive by human participants. Given the following table describing the properties of several example connections:

| Connection | One-Way Latency | Packet Loss |
|---|---|---|
| A | 50ms | 0% |
| B | 80ms | 0% |
| C | 50ms | 10% |
| D | 80ms | 5% |
| E | 200ms | 0% |
| F | 300ms | 0% |

A "functional equivalence" grouping/tiering of these 6 connections is that A and B belong in the same Tier because they both have a one-way latency that is less than the application target of 150ms, and since they experience 0% packet loss, every packet transmitted will arrive with their measured one-way latencies. They are "functionally equivalent" from the perspective of the application because regardless of which connection is used to transmit its UDP packets, they will arrive prior to the application's 150ms deadline.

Similarly, it is clear that E and F belong in the same "functionally equivalent" Tier, because their one-way latencies although different, are both greater than the application target of 150ms. Regardless of which one is used to transmit the UDP packets, it is impossible for them to arrive in time to meet the deadline.

Finally, it is less intuitively obvious where C and D belong, other than it being clear they do not necessarily belong in either of the other two functionally equivalent Tiers. Their one-way latencies are less than the application target of 150ms, but since they experience significant packet loss, many of the transmitted packets will be lost, requiring them to be retransmitted, which may result in missing the deadline. A more detailed and formal method of grouping/tiering connections by "functional equivalence" for real-time application flows follows.

The probability that a connection will be able to deliver a packet prior to its deadline is computed based on a Composite Property termed "Estimated Delivery Time" (EDT) for a packet transmitted on the connection, which is defined as: the expected value of the delivery time of the packet after retransmissions due to dropped packets.

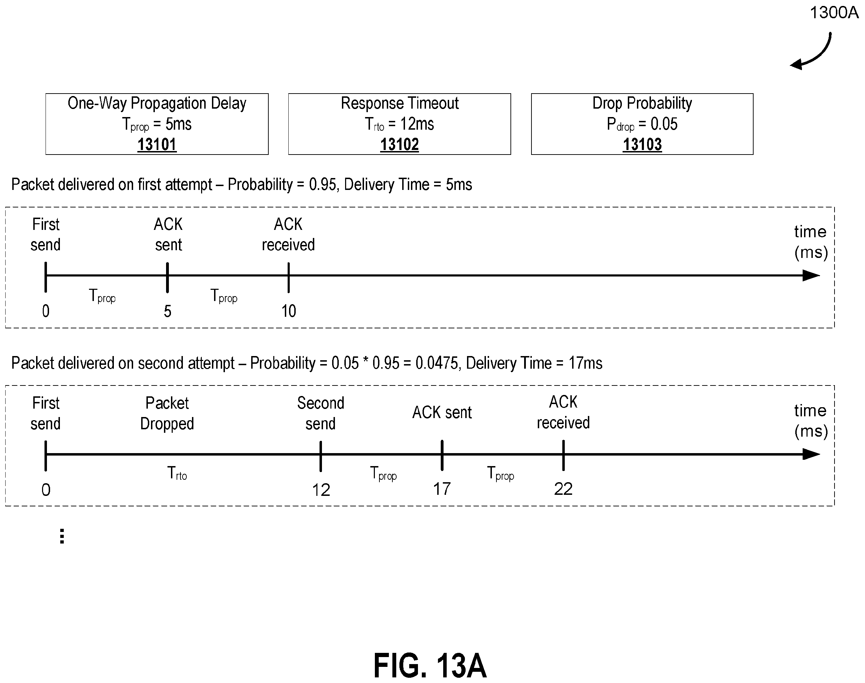

FIG. 13A is a diagram **1300A** showing computation of EDT, according to some example embodiments. In some embodiments, this may be computed as the sum of the probability of successful delivery on a retransmit multiplied by the time of delivery of that retransmit, as shown in **FIG. 13A.** This may be determined, assuming uniform probability that the packet is dropped on each retransmit, $P_{drop}$ 13103, a constant one-way propagation delay, $T_{prop}$ 13101, a response timeout after which an unacknowledged packet is retransmitted, $T_{rto}$ 13102, as shown in FIG. 13A, as:

$$EDT = \left(1 - P_{drop}\right)T_{prop} + P_{drop}\left(1 - P_{drop}\right)\left(T_{rto} + T_{prop}\right) + P_{drop}^2\left(1 - P_{drop}\right)\left(2 \cdot T_{rto} + T_{prop}\right) + \dots$$

$$= \left(1 - P_{drop}\right)\sum_{i=0}^{\infty} P_{drop}^i\left(i \cdot T_{rto} + T_{prop}\right)$$

$$= \left(1 - P_{drop}\right)\left[T_{prop}\left(\sum_{i=0}^{\infty} P_{drop}^i\right) + T_{rto}\left(\sum_{i=0}^{\infty} i \cdot P_{drop}^i\right)\right]$$

$$= \left(1 - P_{drop}\right)\left(\frac{T_{prop}}{1 - P_{drop}} + \frac{T_{rto} \cdot P_{drop}}{\left(1 - P_{drop}\right)^2}\right)$$

$$= T_{prop} + T_{rto}\frac{P_{drop}}{1 - P_{drop}}$$

Other variations are possible.

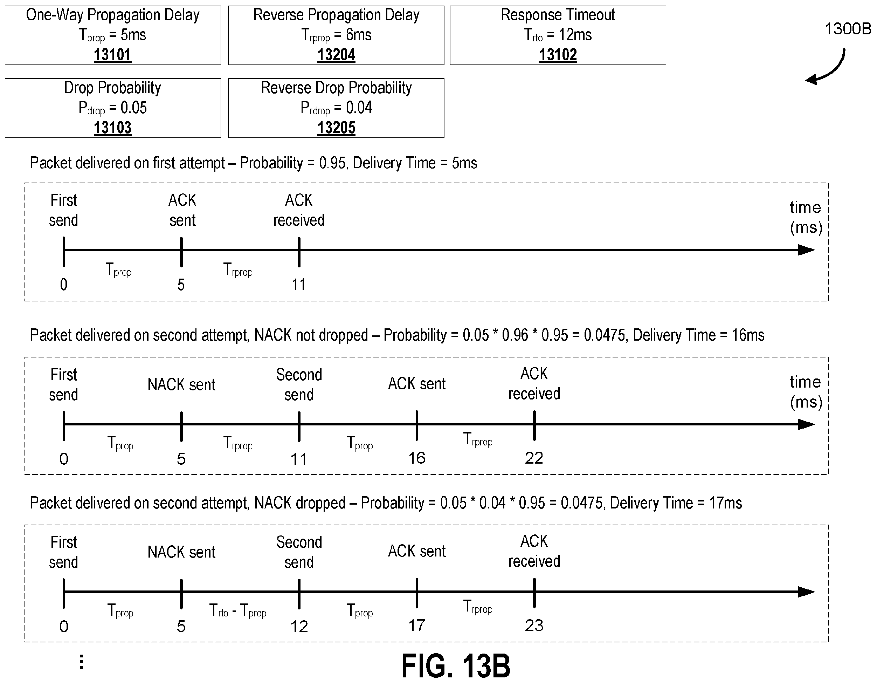

In some embodiments, it may be possible for the receiver to quickly identify when packets are lost and transmit a NACK. **FIG. 13B** is a diagram **1300B** showing computation of estimated time delivery, according to some example embodiments. A variation is shown at **FIG. 13B,** where there may be a different duration, $T_{rprop}$ **13204,** the propagation delay of ACK or NACK packets, and $T_{rtprop}=T_{prop}+T_{rprop}$ the total round-trip propagation delay of packets and responses. The ACK or NACK may be lost with a different probability, $P_{rdrop}$ **13205,** the probability that a packet is dropped in the reverse direction. Taking these into account, $T_{rto}$ in the above equation can be replaced with

$$P_{rdrop}T_{rto} + \left(1 - P_{rdrop}\right)T_{rtprop}$$, resulting in an EDT calculated as:

$$EDT = T_{prop} + \left(P_{rdrop}T_{rto} + \left(1 - P_{rdrop}\right)T_{rtprop}\right)\frac{P_{drop}}{1 - P_{drop}}$$

In some embodiments, EDT may be estimated with the simplifying assumption that $T_{prop} = T_{rprop}$ and that $P_{drop} = P_{rdrop}$.

In some embodiments, EDT may be estimated by observing the actual times that elapse from the time that a packet is first scheduled for delivery on a connection until that packet is successfully delivered, but only for packets that are retransmitted exclusively on one connection. Variations on the EDT derivation are also possible, reflecting a more complex or more simple approach. For example, in a variant, there are different $P_{drop}$ in forward and reverse direction, $T_{prop}$ and $T_{rprop}$ may not be symmetric, and/or ACK packets are also potentially being dropped.

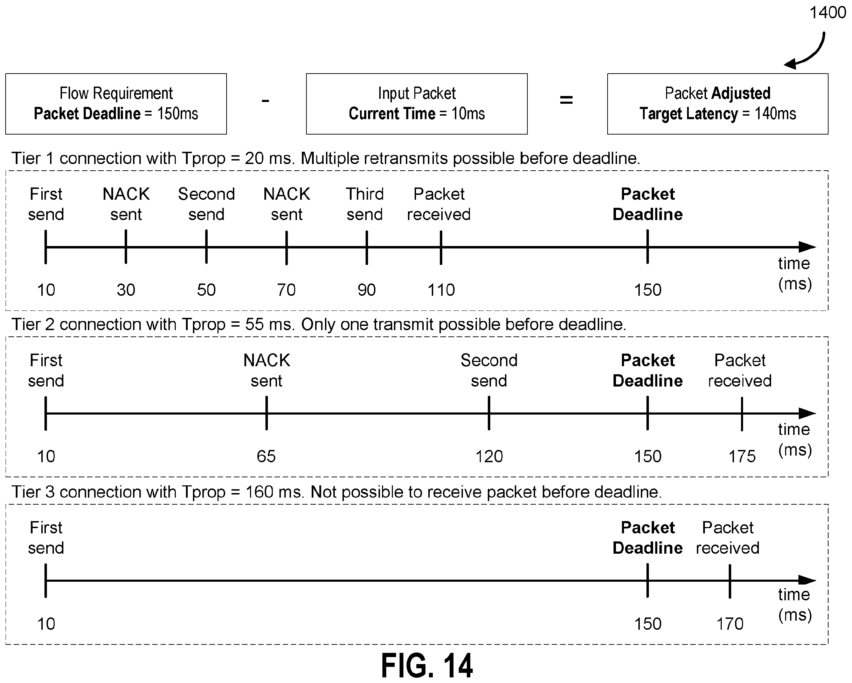

**FIG. 14** is a schematic diagram **1400** showing wide area network connections in different tiered groupings based on the estimated time delivery, according to some example embodiments. In diagram **1400,** given specific packet properties, connections may be grouped into appropriate Tiers given the approach described below.

For real-time flows (those that have latency / jitter preference, expressed as a nominal "Target Latency"), Tiers may be based on the relationship between the flow's per-packet deadlines (referred to as Adjusted Target Latency or ATL) and the connection's EDT and $T_{prop}$ Properties. For example:

- Tier 1: $T_{prop} \leq ATL$ && $EDT \leq ATL$
- Tier 2: $T_{prop} \leq ATL$ && $EDT > ATL$
- Tier 3: $T_{prop} > ATL$ && $EDT > ATL$

An explanation for each of these Tiers is:

- Tier 1: Connection's one-way latency is low enough to meet the deadline, even when taking into account packet loss and retransmits
- Tier 2: Connection's one-way latency is low enough to meet the deadline, but not when taking into account packet loss and retransmits
- Tier 3: Connection's one way latency is not low enough to meet the deadline, with and without retransmits.

ATL may be a dynamic value that changes per-packet, and changes as the packet ages: *ATL = PacketDeadline - CurrentTime,* where: *PacketDeadline = $T_{PacketReceived}$ + NominalTargetLatency.*

In some embodiments, there may be fewer than 3 Tiers depending on the total number of connections and the relationship between their properties and the flow deadlines. For example, $T_{prop}$ and $P_{drop}$ for all connections might be very small, meaning their EDT composite property is also very small. Alternatively, ATL might be very large because the real-time application is not interactive. For instance, unlike a Video over Internet Protocol (VoIP) call that is interactive and has an ATL of <150 ms, a broadcast video application might have an ATL of <8 seconds. In both of these scenarios, all connections could be categorized as Tier 1 because they are all "functionally equivalent" in terms of the EDT being small enough to meet the ATL, but they may not be equivalent in terms of efficiency.

Conversely, there may be some embodiments where there are more than 3 Tiers, where for example efficiency is taken into account. Consider two connections where both their EDTs satisfy the relation required for Tier *1 ($T_{prop} \le ATL$ && $EDT \le ATL$)*, but one connection has a large $P_{drop}$, meaning it might require several retransmits per packet to attain its EDT. If the other connection has a zero $P_{drop}$, it can attain its EDT with only a single transmit per packet.

In this example scenario where it is desirable to optimize for efficiency, further constraints on Tier membership can be added to include measured properties such as $P_{drop}$:

- Tier 1: $T_{prop} \le ATL$ && $EDT \le ATL$ && $P_{drop} < 0.02$
- Tier 2: $T_{prop} \le ATL$ && $EDT \le ATL$ && $P_{drop} \ge 0.02$
- Tier 3: $T_{prop} \le ATL$ && $EDT > ATL$ && $P_{drop} < 0.1$
- Tier 4: $T_{prop} \le ATL$ && $EDT > ATL$ && $P_{drop} \ge 0.1$
- Tier 5: $T_{prop} > ATL$ && $EDT > ATL$ && $P_{drop} < 0.35$
- Tier 6: $T_{prop} > ATL$ && $EDT > ATL$ && $P_{drop} \ge 0.35$

In some embodiments, Tiers may be re-computed based on events that occur. For example if a WAN connection has updated measured properties, its corresponding Tier membership may be adjusted based on the new properties. The adjustment may include updating a corresponding record or data value on a stored reference table or database table that is being used for routing control.

For real-time flows, in some embodiments, re-computing Tiers may be done on a per-packet basis, because each packet can have a different ATL.

There may be more than two types of flow preferences (other than throughput and latency), and accordingly, there may be more than two ways of tiering / sorting. In some embodiments, a combination of both may be used (high throughput flow that also needs low latency, for instance, high-resolution real-time video).

In some embodiments, tiering may only incorporate a subset of the available connections. In one embodiment, Time of Day is taken into account because it affects the anticipated usage or demand on some connections. For example, during regular business hours, a connection can get congested with high probability and provide poor performance. Such a connection would be excluded from tiering for mission critical connectivity. In another embodiment, Administrator Configuration is taken into account because there can be factors that are not automatically detectable or measurable that can affect tiering, and must be configured manually. For example, a network administrator might exclude a connection due to scheduled maintenance at the connection provider, due to high overage fees, or due to other administrative reasons.

In another embodiment, advanced or complex connection properties are taken into account. For example, if a connection is determined to have a directly proportional relation between its throughput and latency (e.g. the connection can send at a very high throughput but the latency will substantially increase, or the connection can maintain very low latency as long as a certain throughput is not exceeded), the connection can be excluded from tiering for a real-time flow that has strict latency requirements if it is known that this connection is currently servicing a high throughput flow.

In another embodiment, location is taken into account due to functional or policy requirements. For example, data residency requirements may mandate that particular data only be transmitted within networks with a specified region.

Connections that are able to route to networks outside of the region can then be excluded from the tiering. In another example, services with geolocking restrictions may only provide service to requests received from particular geographical locations. Connections known to route/egress through locations outside of these locations (e.g. Concentrator providing bonded connection is installed in such locations) can then be excluded from tiering. In another embodiment, Security Requirements can be taken into account. For example, unencrypted network connections, such as those not provided through VPN, can be excluded from tiering.

In some embodiments, tiering may be expanded by intentionally incorporating more connections into one or more Tiers. This can be achieved in more than one way, including, but not limited to, relaxing the tiering requirements such that more connections are eligible to belong to the same Tier, combining subsets of the resulting Tiers after tiering is complete, moving connections from one Tier into other Tiers, and so on. In some embodiments, Security/Obfuscation Requirements that may originate from Administrator Configuration (administrative configuration) are taken into account when expanding Tiers. For example, obfuscation may be achieved by including more connections in the first Tier so that the packets and/or the flows of a user are distributed among multiple networks, preventing a man-in-the-middle attacker that is able to eavesdrop on a single network from intercepting all of the packets and/or flows of that user.

In some embodiments, tiering may be completely manual based on administrator policy. In one embodiment, tiering is based on the cost of using connections, such that similar cost connections are grouped in the same Tier, and the Tiers are traversed from least costly to most costly. For example, an administrator may use Connection Priority (also known as Priority Routing), where the low cost connections are designated as Primary, medium cost connections are designated as Secondary, high cost connections are designated as Tertiary, and throughput activation thresholds are configured such that extra cost is justifiable when the aggregate service drops below a particular bitrate. In another example, a modified version of Connection Priority may use different types or combinations of activation or deactivation thresholds, such as total usage in a billing period, total cost in a billing period, number of connected users, priority of connected users, etc.

In some embodiments, determination of functionally equivalent WAN connections and the resulting tiering / grouping of them is based on machine learning or other similar classes of pattern recognition techniques. For example, a model trained with attributes/features that include the connection Measured/Composite Properties, with the labels provided directly or indirectly by feedback from applications or users.

According to some embodiments, when finding a connection onto which to schedule packets for a flow, iteration may occur over each Tier from best to worst. Within a Tier, iteration may occur over every connection, but the starting connection may be pseudo-randomly chosen for each flow (for example, based on a hash of the flow tuples). The initial connection chosen in each Tier may be persisted, so if a Tier's members change (e.g. new connections added or removed), the starting connection may remain the same (the flow stays sticky to the first connection selected).

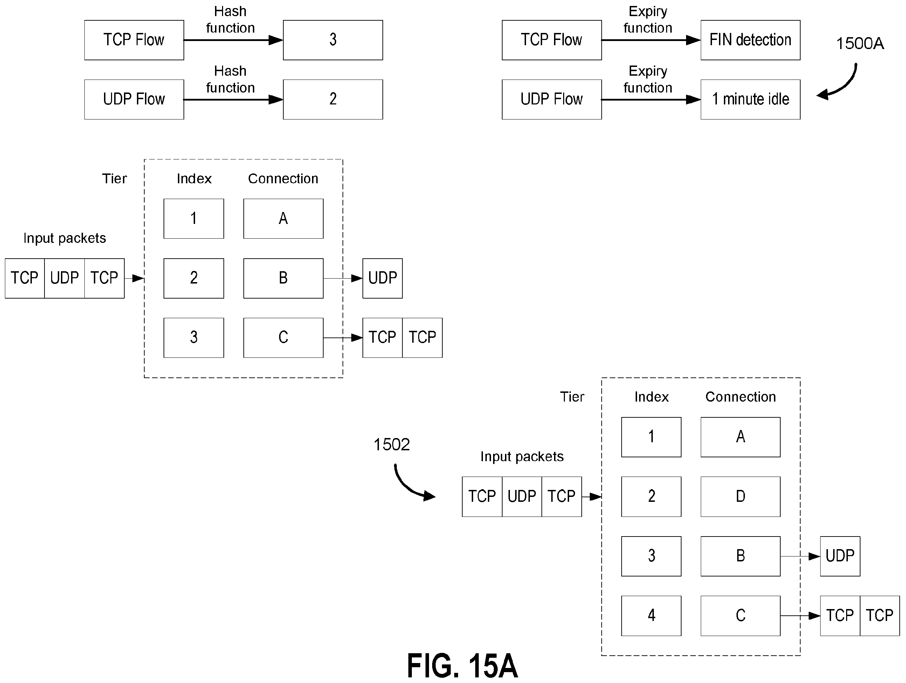

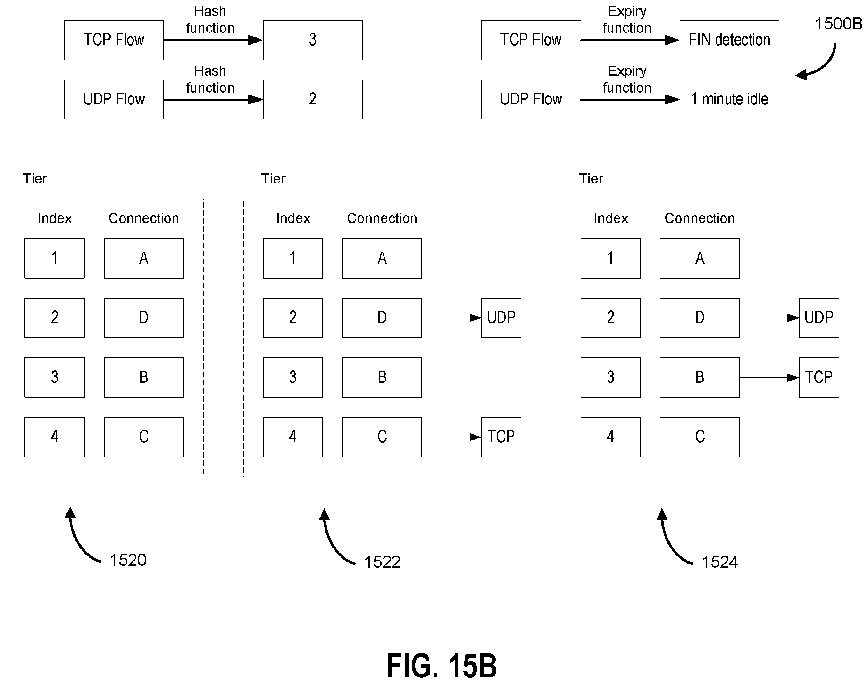

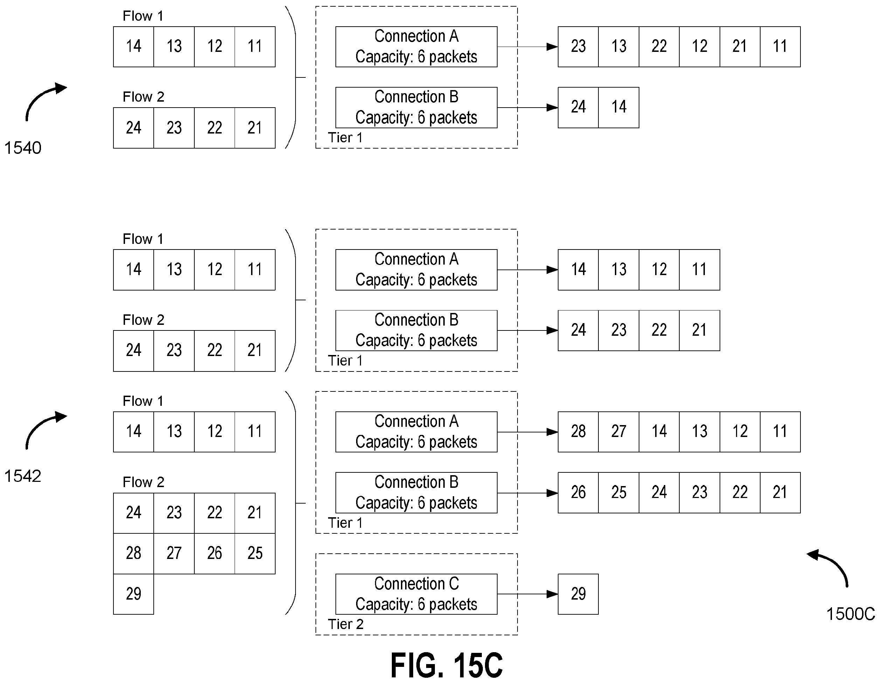

**FIG. 15A** is provided to illustrate an example of pseudorandom hashing and flow stickiness, according to some embodiments. **FIG. 15B** is provided to show expiry of stickiness after idle time and after a TCP FIN exchange, according to some embodiments. **FIG. 15C** is provided to show how pseudorandom selection helps keep packets of a single flow on the same connection, and also how increased demand traverses multiple Tiers. Other variations are possible.

**FIG. 15A** shows an example **1500A** of a new connection D being added to a Tier that already had connections A, B, and C in it, while a TCP flow and a UDP flow are active.

Before connection D was added, the TCP flow was pseudorandomly hashed to the connection at index 3 in the Tier, namely Connection C, and the UDP flow was pseudorandomly hashed to the connection at index 2 in the Tier, namely Connection B. When Connection D is added in **1502,** it is placed at index 2, thus displacing Connections B and C to indexes 3 and 4, respectively. Despite the pseudorandom hashing of the TCP and UDP flows to indexes 2 and 3, respectively, the TCP and UDP flows remain sticky to the connections they initially started at.

In some embodiments, the system may be configured such that the selected connection may be eventually forgotten based on idle time. For example, given a Tier, a connection may be pseudo-randomly chosen as the preferred one. This connection may be chosen for a flow (e.g. a video call), and the packets belonging to the flow may be kept sticky to it. Sticky connections are useful as it may aid with improving overall communications characteristics by using a same connection where possible.

However, eventually the flow could go idle because the video call ended, for instance. The system may not have explicit notification that the flow has ended, but it can infer it after not seeing packets for it after a period of time, and at the point the sticky connection preference may be expired / reset.

Continuing the above example, **FIG. 15B** shows an example **1500B** of the sticky connection being reset, and later remapped, for the UDP flow after a period of idle time.

Assume both the TCP flow and the UDP flow go idle for more than one minute at **1520.** This causes the UDP flow to be considered ended, and its sticky connection preference (Connection B) to be forgotten. At **1522,** the TCP and UDP flows resume again, and UDP is remapped after expiry. Here, TCP remains sticky because a FIN packet has not been detected. For example, if the UDP flow starts again, assuming the hashing function produces the same index of 2, the sticky connection preference is now determined again and becomes Connection D, which happens to be at index 2 in the Tier at the time.

In some embodiments, the sticky connection may be forgotten based on different factors. For example, some protocols such as transmission control protocol (TCP) have an explicit flow termination sequence (FIN exchange). The connection may be forgotten based on recognizing such state transitions.

Continuing the above example, FIG. 15B shows an example of the sticky connection being reset, and later remapped, for the TCP flow after a FIN exchange is detected at **1524.** Assume the TCP flow is completed and both sides of the connection perform the FIN exchange. This causes the TCP flow to be considered ended, and its sticky connection preference (Connection C) to be forgotten. The TCP connection may then be established once more, with a new handshake at **1524,** and may be remapped, in some embodiments. For instance, if the TCP flow starts again, assuming the hashing function produces the same index of 3, the sticky connection preference is now determined again and becomes Connection B, which happens to be at index 3 in the Tier at the time.

In some embodiments, the connection may be intentionally forgotten for security / obfuscation purposes. For example, packets may be intentionally split between connections to prevent an attacker eavesdropping on a single connection from capturing all packets related to the flow.

Forgetting the preferred connection after idle periods may be important to avoid issues with "over-stickiness", which is a condition where many long-lived (but bursty) flows end up sticky to the same connection and compete for capacity on the same preferred connection, requiring their traffic to be split among multiple connections and recombined at the receiver.

The pseudo-random selection of the preferred connection for starting the iteration over the "functionally equivalent" connections, according to some embodiments, addresses various technical challenges. Specifically, flows are more likely to remain entirely on one connection, since they are not competing with other flows for the same connections in the same order, which is more likely to result in overflow of packets onto the next connection. Further, all of the connections in the active Tiers will tend to have fresh Properties since they are continually being used by different flows.

**FIG. 15C** shows an example **1500C** of two flows sending packets over multiple connections in multiple Tiers. Assume only 6 packets can be sent on each connection at a time to avoid congestion. In the top half, each of flows 1 and 2 have 4 packets to send.

Without pseudorandom selection at **1540,** both flows, shown as Flow 1 and Flow 2 in the example, always select the first connection, Connection A, in Tier 1 as their starting connection, and the packets of both flows end up being split between both Connections A and B. In the lower half of **FIG. 15C at 1542,** with pseudorandom selection, each flow may select a different starting connection.

For instance, if flow 1 selects Connection A and flow 2 selects Connection B: all the packets of flow 1 end up only on Connection A, and all the packets of flow 2 end up only on Connection B. In other words, each flow has all of its packets assigned to a different connection.

When the demand of one flow increases and requires the scheduler to iterate over multiple connections / Tiers to schedule all its traffic, the other flow is not affected. In this example, the demand of flow 2 increases and it gets 5 additional packets to send. It iterates over all connections of Tier 1, and if all are filled with packets to their capacity, it moves onto Tier 2. More specifically, the 5 additional packets are distributed as follows: 2 on Connection B of Tier 1, 2 on Connection A of Tier 1, and 1 on Connection C of Tier 2. Observe that, despite flow 2 getting split among 3 connections in 2 Tiers, it does not affect flow 1, which continues to have all its packets on 1 connection, that is Connection A in Tier 1.

In some embodiments, the sticky preferred connection is only remembered for the first Tier, because once more than one Tier is used, by definition the packets are being split across multiple connections so resequencing of the packets will be required at the receiver.

In some embodiments, the preferred connection may be forgotten (and a new one selected) if it no longer exists in the first Tier. For example, its measured properties and resulting EDT may have caused it to be moved to another Tier.

Pseudo-random selection of the preferred connection can be done in many different ways. In some embodiments, properties of the flow may be hashed (destination IP, port, etc.), or a random number might be generated, and in both cases the value modulo the number of connections in the Tier becomes the index of the selected connection.

In some embodiments, the selection may be done in a sequence. For example, the first flow is assigned the first connection in the Tier as its sticky connection preference, the second flow is assigned the second connection, etc., wrapping back around to the first connection each time the number of connections in the Tier has been reached.

In some embodiments, the sticky selection may be done by biasing based on available capacity. For example, the choice might be based on the least used connection at the moment, which could be determined based on factors such as the number of flows that have selected each connection as their preference, or the current unused capacity of each connection.

In some embodiments, an estimate of the throughput requirements of the flow may be used as part of the preferred sticky connection selection, such that the selected connection is the one least likely to result in the flow needing to spillover to other connections. While the connections in a Tier are functionally equivalent, they are not identical, so overflow of packets onto multiple connections can result in out of order packets that require re-sequencing at the receiver. The likelihood of this happening when a flow only uses one connection is reduced.

In some embodiments, selection of the initial connection in a Tier and the subsequent iteration through the connections in the Tier occurs in order of the connections from shortest to longest backlog ("Shortest Backlog Scheduling"). Backlog is measured in units of time (typically milliseconds) and is defined as the volume of inflight (transmitted but unacknowledged) bytes, divided by the transmission rate of the connection. Iterating in this order minimizes the latency experienced by a flow when it requires more bandwidth than any single connection can provide on its own.

For example, consider the following scenario:

An application that transmits packets at a rate of 1 packet every 1ms
Two identical WAN connections, where each one:

Is capable of transmitting 1 packet every 2ms
Has a one-way latency of 5ms
Has a CWND (congestion window) of 5 packets

With sticky connection selection, the packets generated by the application (1 every 1ms) are scheduled onto the connections C1 and C2 and are transmitted as follows:

t=0ms: Packet1 scheduled for transmission on C1 @ t=0ms (RemainingCWND=4)
t=1ms: Packet2 scheduled for transmission on C1 @ t=2ms (RemainingCWND=3)
t=2ms: Packet3 scheduled for transmission on C1 @ t=4ms (RemainingCWND=2)
t=3ms: Packet4 scheduled for transmission on C1 @ t=6ms (RemainingCWND=1)
t=4ms: Packet5 scheduled for transmission on C1 @ t=8ms (RemainingCWND=0)
t=5ms: Packet6 scheduled for transmission on C2 @ t=5ms (RemainingCWND=4)

The receiver receives the packets out of order as follows:

Packet1: received via C1 @ t=5ms
Packet2: received via C1 @ t=7ms
Packet3: received via C1 @ t=9ms
Packet6: received via C2 @ t=10ms
Packet4: received via C1 @ t=11ms
Packet5: received via C1 @ t=13ms

Once the receiver reorders the packets back into the correct sequence and releases them to the destination, the destination experiences both a high degree of jitter (the packets are no longer consistently spaced 1ms apart), and an overall latency that is longer than the one-way latency of 5ms on each connection:

Packet1: released after re-ordering @ t=5ms
Packet2: released after re-ordering @ t=7ms
Packet3: released after re-ordering @ t=9ms
Packet4: released after re-ordering @ t=11ms
Packet5: released after re-ordering @ t=13ms
Packet6: released after re-ordering @ t=13ms

Conversely, connection selection and packet scheduling based on least backlog would result in the packets being scheduled onto C1 and C2 and transmitted as follows:

t=0ms: Packet1 scheduled for transmission on C1 @ t=0ms (RemainingCWND=4)
t=1ms: Packet2 scheduled for transmission on C2 @ t=1ms (RemainingCWND=4)
t=2ms: Packet3 scheduled for transmission on C1 @ t=2ms (RemainingCWND=3)
t=3ms: Packet4 scheduled for transmission on C2 @ t=3ms (RemainingCWND=3)
t=4ms: Packet5 scheduled for transmission on C1 @ t=4ms (RemainingCWND=2)
t=5ms: Packet6 scheduled for transmission on C2 @ t=5ms (RemainingCWND=2)

The receiver receives the packets in order, with no additional jitter (the consistent 1ms inter-packet spacing is preserved), and the latency experienced by the application is equal to the one-way latency of 5ms on each connection:

Packet1: received via C1 and released @ t=5ms
Packet2: received via C2 and released @ t=6ms
Packet3: received via C1 and released @ t=7ms
Packet6: received via C2 and released @ t=8ms
Packet4: received via C1 and released @ t=9ms
Packet5: received via C2 and released @ t=10ms

In some embodiments, Shortest Backlog Scheduling is instead simplified to round-robin between each connection in a Tier. In cases where the connections are known to have identical characteristics, this method is easier to implement and results in similar performance.

Connection Priority (CP) rules, or Priority Routing, may, in some embodiments, be specified by an administrator to express a preference for the order in which to use the connections. In previous solutions, these rules were global, applying to all flows, and also had the ability to limit bandwidth usage on lower priority connections. Consider an example set of connections with a CP configuration as follows:

Connection A: Primary
Connection B: Secondary / Threshold = 10 Mbps

According to these prior embodiments, Connection B would not become active unless the capacity of Connection A dropped below 10 Mbps, and once active, Connection B would only contribute the difference to bring the total aggregate capacity back up to 10 Mbps.

According to some current embodiments, the CP rules may be as granular as an individual flow. Limiting bandwidth usage of lower priorities may also be removed, because one flow's high priority may be another flow's low priority, thus attempting to limit bandwidth usage would conflict with the requirements of both flows. For example, assume Flow 1 has the same CP rules as described in the previous example, but Flow 2 has CP rules that are the inverse:

Connection B: Primary
Connection A: Secondary / Threshold = 10 Mbps

Flow 1 could consume the full capacity of Connection A since A is its Primary, and Flow 2 could consume the full capacity of B since it is its Primary. Neither can be limited as they could be with global CP rules.

In some embodiments, the bandwidth limiting functionality is replaced with global settings that limit bandwidth usage per-WAN connection (irrespective of flows or CP rules), or a bandwidth limit applied to matching flows, for example.

CP rules may influence the construction of Tiers, in that if two connections are in different CP levels, they may be placed in separate Tiers, even if they are "functionally equivalent" when considering all their other Properties. For example, consider the following

| Connection | EDT | $T_{prop}$ | Connection Priority |
|---|---|---|---|
| **A** | 10 ms | 2 ms | Primary |
| **B** | 50 ms | 20 ms | Secondary |
| **C** | 125 ms | 30 ms | Primary |
| **D** | 150 ms | 50 ms | Secondary |
| **E** | 300 ms | 125 ms | Primary |
| **F** | 350 ms | 175 ms | Secondary |

Given a packet with an ATL of 100ms, in the absence of Connection Priority rules, the Tier construction would be:

Tier 1:

$$A, B \, (T_{prop} \leq ATL \,\, \&\& \,\, EDT \leq ATL)$$

Tier 2:

$$C, D \, (T_{prop} \leq ATL \,\, \&\& \,\, EDT > ATL)$$

Tier 3:

$$E, F \, (T_{prop} > ATL \,\, \&\& \,\, EDT > ATL)$$

However, with Connection Priority rules, each change in Priority results in the creation of a new Tier, even if the $T_{prop}$ and EDT properties still satisfy the constraints:

Tier 1:

$$A \, (T_{prop} \leq ATL \,\, \&\& \,\, EDT \leq ATL \,\, \&\& \,\, CP = \mathrm{Pr} i mary)$$

Tier 2:

$$C \ (T_{prop} \leq ATL \ \&\& \ EDT > ATL \ \&\& \ CP = \mathrm{Pr} \, i \, mary)$$

Tier 3:

$$E \ (T_{prop} > ATL \ \&\& \ EDT > ATL \ \&\& \ CP = \mathrm{Pr} \, i \, mary)$$

Tier 4:

$$B \ (T_{prop} \leq ATL \ \&\& \ EDT \leq ATL \ \&\& \ CP = Secondary)$$

Tier 5:

$$D \ (T_{prop} \leq ATL \ \&\& \ EDT > ATL \ \&\& \ CP = Secondary)$$

Tier 6:

$$F \ (T_{prop} > ATL \ \&\& \ EDT > ATL \ \&\& \ CP = Secondary)$$

In addition, if one connection is "functionally better" than another connection, it might be placed in a less preferred Tier because it is in a CP level of lower priority. For example, Connection E above is placed in Tier 3, while connection B is placed in Tier 4 due to Connection Priority rules, despite Connection B having the lower $T_{prop}$ and EDT values.

In some embodiments, scheduling methods are introduced to help ensure packets belonging to real-time flows arrive before their deadline, but balance this against the bandwidth usage (a naïve implementation may simply broadcast the real-time packets on all available connections, for instance).

In some embodiments, real-time packets may be scheduled onto multiple connections to maximize the chance that they arrive before the deadline while balancing bandwidth usage. As a non-limiting example, according to an embodiment:

Assign a score to packet transmissions on each Tier, for instance:

- Tier 1: Score = 3
- Tier 2: Score = 2
- Tier 3: Score = 1

Schedule the packet on as many connections as required to get its cumulative score to be greater or equal to a predefined target score. Target may be a parameter, such as 3, for example.

Connections that do not have fresh stats or are unreliable (close to 100% drop probability) may contribute Score = 0 regardless of their Tier. This may have the intentional side effect of refreshing the stats on these connections if / when the packets are acknowledged.

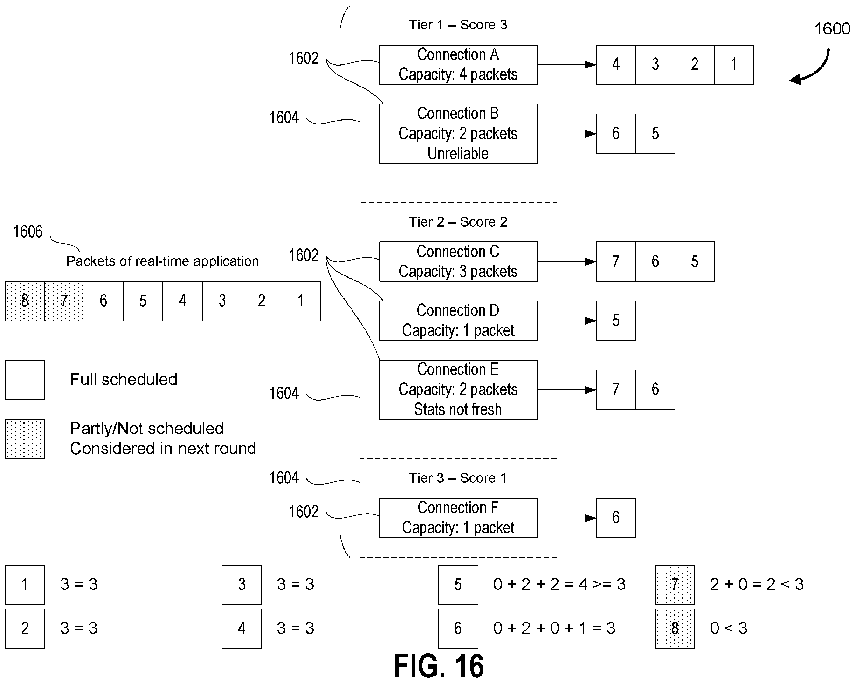

FIG. 16 shows an example 1600 with a variety of connections 1602, sorted into a variety of Tiers 1604, used to send a number of packets 1606. Similar to above, Tier 1 connections score 3, Tier 2 connections score 2, and Tier 3 connections score 1. Unreliable connections or connections with stale stats score 0, regardless of which Tier they belong to. For each input packet, connections are iterated from Tier 1 through Tier 3, in other words, from connections A through F. Each packet is sent on the connections it comes across and accumulates their scores until the target score of 3 is reached or exceeded. This results in the following exemplary outcomes:

Packets 1 through 4 reach the target score immediately after being sent on the first connection, Connection A. At this point, the capacity of Connection A is fully consumed.

Packet 5 reaches the target score after being sent on 3 connections: Tier 1: Connection B, Tier 2: Connection C, and Tier 2: Connection D. It accumulates scores 0, 2, and 2, respectively, for a total score of 4 which exceeds the target score of 3. Note that Tier 1: Connection B scores 0 because it is unreliable. At this point, the capacity of Connection D is fully consumed.

Packet 6 reaches the target score after being sent on 4 connections: Tier 1: Connection B, Tier 2: Connection C, Tier 2: Connection E, and Tier 3 Connection F. It accumulates scores 0, 2, 0, and 1, respectively, for a total score of 3 which meets the target score. Note that Tier 2: Connection E scores 0 because its stats are not fresh. At this point, the capacities of Tier 1: Connection B and Tier 3: Connection F are fully consumed.

Packet 7 does not reach the target score, even after being sent on 2 connections: Tier 2: Connection C and Tier 2: Connection E. It accumulates scores 2 and 0, respectively, for a total score of 2, which falls short of the target score of 3. At this point, the capacities of Tier 2: Connection C and Tier 2: Connection E are fully consumed. At this point too, the capacities of all connections have been fully consumed, so all sending stops. Sending of packet 7 continues in the next round of sending when more connection capacity becomes available (e.g. packets acknowledged as received or new connections are added), unless packet 7 is among the packets acknowledged as being received.

Packet 8 does not reach the target score, because all connection capacity is fully consumed, and it is not sent on any connections. Sending of packet 8 can happen in the next round of sending when more connection capacity becomes available.

Some embodiments may have different predefined target values on a per-flow basis. For example, a super high priority flow that wants its packets broadcast on all connections, or other methods allowing the administrator control over the trade-off between bandwidth usage and hitting the deadline.

In some embodiments, CP rules may be ignored in order to reach the target score, under the assumption that the user would prefer the deadline to be achieved even if it incurs additional cost of activating the lower priorities. For example, if after iterating over all connections in all higher priority Tiers (deemed active by CP rules), the cumulative score has not reached the target, iteration may continue into the connections in the lower priority Tiers (deemed inactive by CP rules).

In some embodiments, pre-emptive scheduling may take into account predictions about upcoming location changes (e.g. bus, airplane, etc. that is in motion on a predictable path with a predictable change in measured properties). For example, a current Tier 1 connection may soon become Tier 3, and vice versa, so in some embodiments, the target score may be adjusted in advance and more redundancy may be transmitted when close to the transition.

Described embodiments present a technical improvement over existing solutions, because pre-emptive re-transmissions only apply to the flows that have a deadline (real-time applications), and the flow deadline and connection EDT may be taken into account when deciding whether a pre-emptive re-transmission is required, rather than only the connection drop probability. Throughput flows or other similar types without a deadline would not incur the bandwidth cost and overhead of the pre-emptive re-transmissions.

In other embodiments, there may be early re-transmission of packets that are approaching their deadline but are still inflight and have not yet been acknowledged (including pre-emptive retransmits). Such embodiments may balance meeting the deadline with efficient use of connections (cost - dollars, bandwidth, compute). In some embodiments, there may be per-flow rules that allow the administrator to influence this balance. For example, "cost" would not matter if the flow is of high importance, such that early re-transmissions of packets may be broadcast on all connections, regardless of the additional cost that might be incurred. As non-limiting examples:

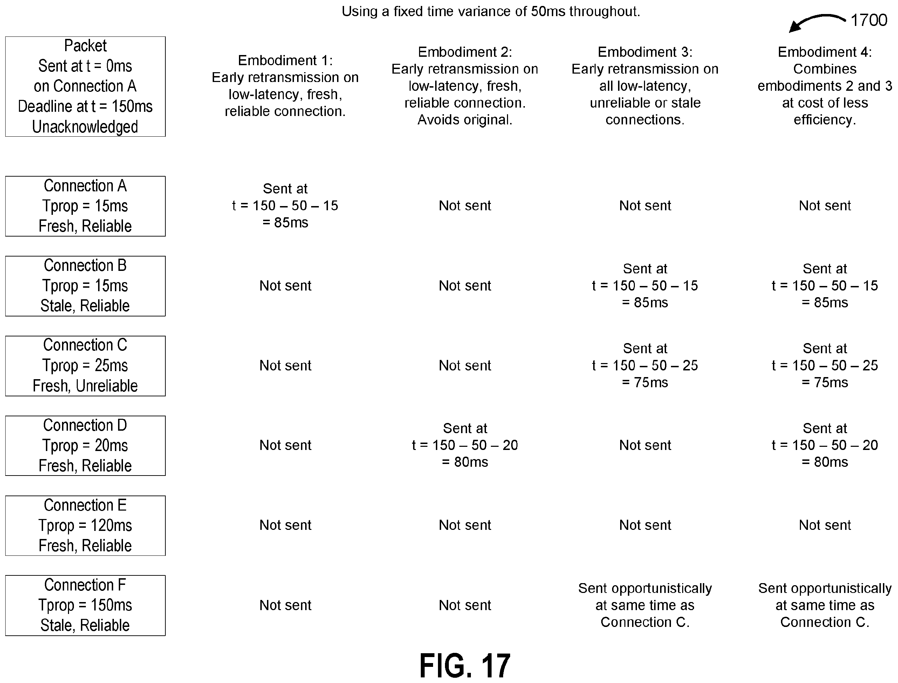

In one embodiment, if a packet has a deadline and it has not been acknowledged as received, and the reliable connection with the lowest latency, available capacity, and fresh stats has just enough time to get the packet across one additional time (while taking into account some variance, for example, time for processing overhead), an early retransmission of this packet is sent on this connection. This is done as a last resort to get the packet across in time before its deadline. **FIG. 17** shows an example **1700** of such an embodiment, Embodiment 1, where an unacknowledged packet sent originally on Connection A at t=0ms with a deadline of 150ms, has an early retransmission sent on Connection A once more at time t = 150 - 50 - 15 = 85ms, where 50ms is the assumed time variance, and 15 ms is the known latency of Connection A.

In one embodiment, the time variance is a fixed amount, for example 50ms, that can account for processing time and some variance in the actual connection latency.

In another embodiment, the time variance is a variable amount that is a function of the connection type or measured properties. For example, if the round-trip time of a connection has statistically a large standard deviation, the time variance for early retransmissions may be increased. In another example, satellite connections are known to have a relatively stable processing time, as compared to, say, cellular connections, and may accordingly allocate a lower time variance when considering early retransmissions.

In one embodiment, if this reliable connection with the lowest latency, available capacity, and fresh stats has been already used previously to send this packet, another reliable connection that has a low enough latency, fresh stats, and available capacity to get the packet across before its deadline is used to send an early retransmission of the packet. This is done to increase the diversity of connections over which the same packet is sent, and because the first selected connection is considered potentially unreliable since it has not delivered its copy of the packet. FIG. 17 shows an example **1700** of such an embodiment, Embodiment 2, where since Connection A was already used to send the packet originally, it is avoided, and the early retransmission of the packet is sent on Connection D at time t = 150 - 50 - 20 = 80ms, where 50ms is the assumed time variance, and 20 ms is the known latency of Connection D.

In one embodiment, early retransmissions of an unacknowledged packet nearing its deadline are sent on some or all connections that are either unreliable, don't have fresh stats or both. Such connections may have become reliable, or now have more favorable properties (for example, since they haven't been used for a while, they could have become less congested), and hence may be able to get across the packet before its deadline. The number of such connections used for early retransmissions can depend on the balance of meeting the deadline and the efficient use of the network connections mentioned previously. **FIG. 17** shows an example **1700** of such an embodiment, Embodiment 3, where early retransmissions are sent on all unreliable and/or stale connections. The send times for each are calculated similarly to the previous embodiments in this figure. For Connection F, the calculation yields a time that is in the past (t = 150 - 50 - 150 = -50ms); therefore, the early retransmission on Connection F is sent opportunistically at the same time as the earliest early retransmission, that of Connection C in this example (t = 75ms).

In one embodiment, more than one of the above early retransmission approaches are combined. For example, an embodiment might combine all the above approaches when servicing a very high importance flow that should meet its deadline as much as possible at any cost. As such, early retransmissions get sent on the original connection a packet was sent on, on other reliable connections that have an appropriate latency and EDT, available capacity and fresh stats, and on all other connections that are unreliable or have stale stats. **FIG. 17** shows an example **1700** of such an embodiment, Embodiment 4, which combines the early retransmissions of Embodiments 2 and 3.

In one embodiment, the above early retransmission approaches are considered sequentially (in any order), until at least one or more connections are found for sending early retransmissions of the packet at hand.

Early re-transmissions may ignore CP rules, under the assumption that an early re-transmission is the final chance to achieve the packet deadline, so all available connections must be considered.

In some embodiments, modified scheduling methods for packets belonging to flows with a throughput preference, assuming they have higher tolerance for delay / jitter / loss, are introduced.

According to an embodiment, the scheduling algorithm is similar to the description above for real-time flows, except each Tier contributes a score of 3 (except stale or unreliable connections, which still contribute a score of 0). As such, packets belonging to throughput flows may only be transmitted once (excluding stale or unreliable connections).

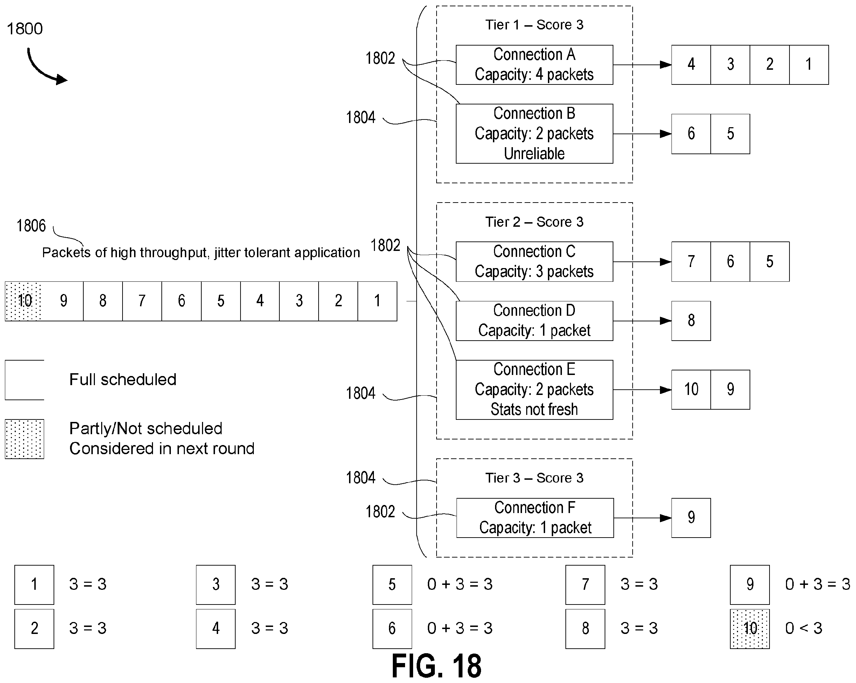

**FIG. 18** is a diagram showing an example **1800** with a variety of connections **1802** sorted into a variety of Tiers **1804,** used to send a number of packets **1806** for throughput flow, according to some example embodiments. **FIG. 18** shows a variant of the example in **FIG. 16,** but this time for a throughput flow. The variety of Tiers **1804** and connections **1802** are the same, except that all Tiers **1804** have a score of 3 now. Unreliable connections or connections **1802** with stale stats continue to score 0, regardless of which Tier they belong to. This results in the following exemplary outcomes:

Packets 1 through 4 reach the target score immediately after being sent on the first connection, Connection A. At this point, the capacity of Connection A is fully consumed.

Packets 5 and 6 reach the target score after being sent on 2 connections: Tier 1: Connection B, and Tier 2: Connection C. They each accumulate scores 0 and 3, respectively, for a total score of 3 which meets the target score of 3. Note that Tier 1: Connection B scores 0 because it is unreliable. At this point, the capacity of Connection B is fully consumed.

Packet 7 reaches the target score immediately after being sent on Tier 2: Connection C. At this point, the capacity of Connection C is fully consumed.

Packet 8 reaches the target score immediately after being sent on Tier 2: Connection D. At this point, the capacity of Connection D is fully consumed.

Packet 9 reaches the target score after being sent on 2 connections: Tier 2: Connection E, and Tier 3: Connection F. It accumulates scores 0 and 3, respectively, for a total score of 3 which meets the target score of 3. Note that Tier 2: Connection E scores 0 because its stats are not fresh. At this point, the capacity of Connection F is fully consumed.

Packet 10 does not reach the target score, even after being sent on 1 connection: Tier 2: Connection E. It accumulates a score of 0, which falls short of the target score of 3. At this point, the capacity of Tier 2: Connection E is fully consumed. At this point too, the capacities of all connections have been fully consumed, so all sending stops. Sending of packet 10 continues in the next round of sending when more connection capacity becomes available (e.g. packets acknowledged as received or new connections are added), unless packet 10 is among the packets acknowledged as being received.

In some embodiments, priority between flows may be implemented at a stage prior to packet scheduling (the input queue). One packet queue may be created for each flow that enters the system, and the queues are serviced according to the Deficit Round Robin (DRR) and / or Deficit Weighted Round Robin (DWRR) queue scheduler algorithm (described in RFC 8290), which by default, attempts to be fair to all queues. Described embodiments introduce technical improvements as additional modifications which allow for intentional unfairness to be configured by an administrator.

DRR / DWRR has the concept of a quantum (i.e. the target number of bytes to service from each queue in each round). Normally this quantum is equal for all queues, but the described modifications allow this to be modified by a weight (specified as a rule by administrator configuration). In some embodiments, the weight may be specified by other means, such as being automatically determined based on the type of application, time of day, machine learning, among others.

For example:

- Flow #1: Weight=2
- Flow #2: Weight=5
- Flow #3: Weight=1

In this example, Flow #1 receives 2 times the nominal quantum each round, Flow #2 receives 5 times the nominal quantum, and Flow #3 receives 1 times the nominal quantum. In some embodiments, the quantum may be scaled, for instance to a multiple, while preserving relative weights. For example, *NominalQuantum * k,* multiplied by $\frac{2}{8}$ , ⅝, ⅛ respectively, where NominalQuantum and k are parameters. In some embodiments, weights may be specified on rules, and all flows that match the rules share a common pool of quantum.

In the example above, k would be k=1, and NominalQuantum has a default value that can be specified manually by an administrator configuration, or automatically based on the type of application, time of day, machine learning, among others.

In some embodiments, the concept of a queue importance level is introduced. Queues of higher importance are typically serviced before those of lower importance. In some embodiments, lower importance queues can be starved if there is only enough capacity to service the high importance queues. Queues at the same importance level may split the capacity according to their assigned weights.

The present embodiments improve upon existing DRR / DWRR, as they describe a multi-level DRR / DWRR priority queue. The traditional DRR / DWRR queue is describe by the property that each flow "i" will achieve a minimum long term average data rate of:

$$\frac{Q_i}{Q_1 + Q_2 + \cdots + Q_N} R$$

where $Q_i$ is the quantum for flow "i", and R is the total available WAN capacity.

In some of the described multi-level DRR / DWRR queue embodiments, flows that are predefined as having a higher "Importance" are allowed to starve flows with a lower "Importance", such that a given flow "i" in priority level "M" will achieve a minimum long term average data rate of:

$$\frac{Q_i}{Q_1 + Q_2 + \cdots + Q_N} \left( R - \sum_{j=0}^{M-1} R_j \right) ,$$

where $Q_i$ is the quantum for flow "i" among the N flows in priority level M, priority levels 0 through M-1 are all higher priority than M, and $R_j$ is the WAN capacity used by all of the flows in a particular priority level.

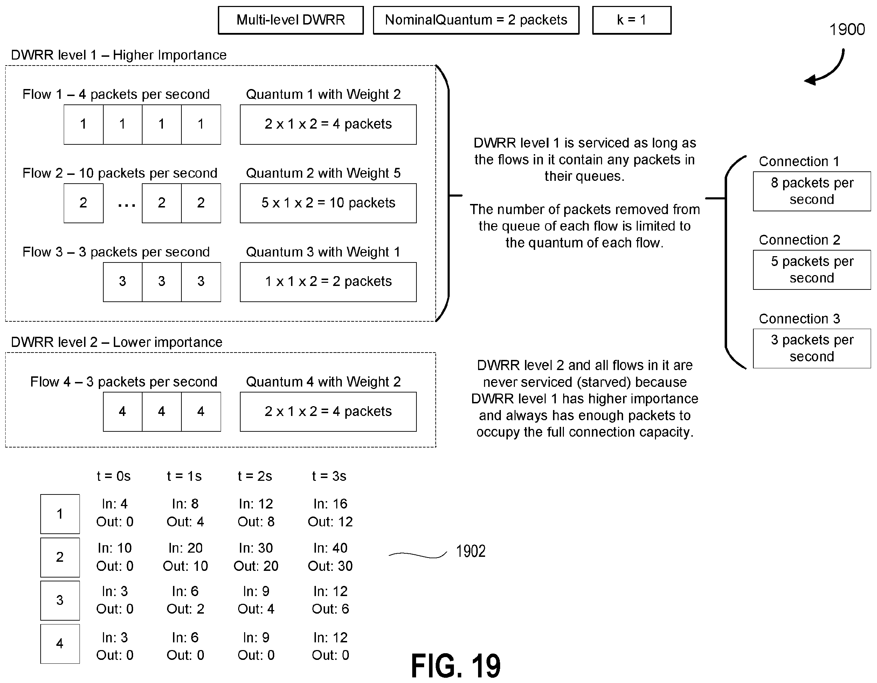

**FIG. 19** shows an example of an embodiment **1900** with a 2-level DWRR queue management algorithm, according to some example embodiments. DWRR level 1 has higher importance than DWRR level 2. DWRR level 1 has 3 flows, with weights as described above, namely 2, 5, and 1, respectively, for flows 1, 2 and 3. DWRR level 2 has a single flow 4, with weight 2. Assume in this example there are 3 connections, with an aggregate capacity of 16 packets per second. Assume the packet rates of the flows are as follows: Flow 1 produces 4 packets per second, Flow 2 produces 10 packets per second, Flow 3 produces 3 packets per second, and Flow 4 produces 3 packets per second. Since DWRR level 1 is higher importance than DWRR level 2, DWRR level 1 will always get serviced before DWRR level 2 as long as it has packets available from any of its flows. In this example, the flows of DWRR level 1 together produce a total of 17 packets per second, which is higher than the aggregate capacity of the connections; in other words, DWRR level 1 will always have packets available, causing DWRR level 2 to get starved and never be serviced.

A table **1902** at the bottom of **FIG. 19** shows the number of packets that each flow has seen over time at the input and the output.

Flows 1 and 2 in DWRR level 1 are of high importance and produce packets proportionally to their quantums; therefore, the number of output packets always catches up with the number of input packets.

Flow 3 in DWRR level 1 is of higher importance and gets serviced; however, since it produces more packets than its share of quantum, it forms a backlog of packets, which is seen as the number of input packets growing faster than the number of output packets.

Flow 4 in DWRR level 2 is of lower importance and does not get serviced because DWRR level 1 of higher importance produces enough packets to consume the full capacity of the available connections. Flow 4 is starved, and this is seen as the number of input packets constantly increasing while the number of output packets stays at 0. Had Flow 4 been in DWRR level 1, some of its packets would have been serviced before DWRR goes back to service Flow 1, meaning Flow 4 would have not been completely starved.

Present embodiments introduce technical improvements to the Sequencer described above, for more efficient operation on a per-flow basis. The Sequencer may use the following Measured Properties to operate:

a) A statistically filtered measurement of the one-way latency of each WAN connection.
b) The set of WAN connections that a particular flow is actively using.

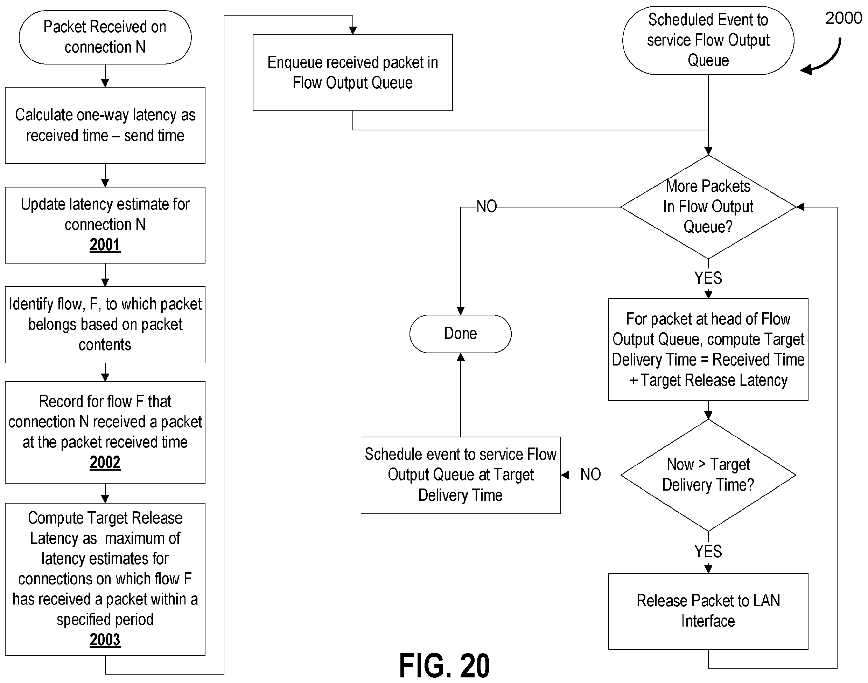

**FIG. 20** is a block diagram of a Per-Flow Packet Receiver **2000,** according to some example embodiments.

The Per-Flow Packet Receiver maintains an estimate of the one-way latency of the WAN connections at **2001,** and the set of WAN connections that have been used recently for a particular flow at **2002.** These may be used to determine the appropriate time to release packets from the Flow Output Queue at **2003** to minimize the jitter in the propagation time of packets in that flow through the system.

A basic implementation would measure and store both of these Properties on a per-flow basis. Described embodiments provide improvement from the observation that (a), above, a statistically filtered measurement of the one-way latency of each WAN connection does not vary on a per-flow basis, so the estimate of one-way latency of the WAN connection at **2001** can be shared between all the flows.

In some per-Flow Packet Receiver embodiments, the one-way latency estimators may accept Tuning Parameters that adjust the quality of the estimate based on the expected characteristics of the flow, or of the WAN connection. The Tuning Parameters may include low-pass filter parameters, and the duration after which individual packet measurements are discarded. In this embodiment, there may be more than one estimate of the one-way latency of each WAN connection, and these estimates can be shared between all flows that use the same Tuning Parameters.

In some embodiments, the estimated one-way latency of the WAN connection at **2001** may be used to calculate EDT for a WAN connection.

Embodiments as described above including the improvements to tiering, Scheduling, and Sequencing (collectively, "Real-Time Flow Support") have been tested in simulated scenarios that mimic real world usage patterns and have been shown to provide quantitative improvements to jitter and latency. Specifically, a common scenario is a real-time video chat application such as Zoom™, Microsoft Teams™, or Google Meet™, being used through a multi-WAN router containing a wired broadband connection (e.g. consumer cable or DSL) and 3x LTE connections. Connection Priority (CP) rules are used to set the wired broadband connection as Primary, and the LTE connections as Secondary.

The scenario then simulates sudden failure of the wired broadband link (e.g. 100% packet loss and/or 0 bandwidth capacity), and measures the resulting effect on packet loss, latency, and jitter. The results are as follows:

| Embodiment | Packet Loss | Jitter (avg) | Jitter (max) | Latency (avg) | Latency (max) |
|---|---|---|---|---|---|
| Real-Time Flow Support | 0% | 797 ms | 1158 ms | 40.7 ms | 62 ms |
| No Real-Time Flow Support | 0% | 986 ms | 2070 ms | 51.1 ms | 351.2 ms |

The improvements to jitter and latency stem from the pre-emptive retransmission (target scoring system) and early retransmit logic. In this scenario, when the wired broadband connection fails suddenly, the inflight packets that are lost on the wired broadband connection are either already pre-emptively or early retransmitted on the LTE connections. In comparison, the embodiment without real-time flow support must wait for a full RTO (retransmit timeout) to occur before retransmitting the lost packets.

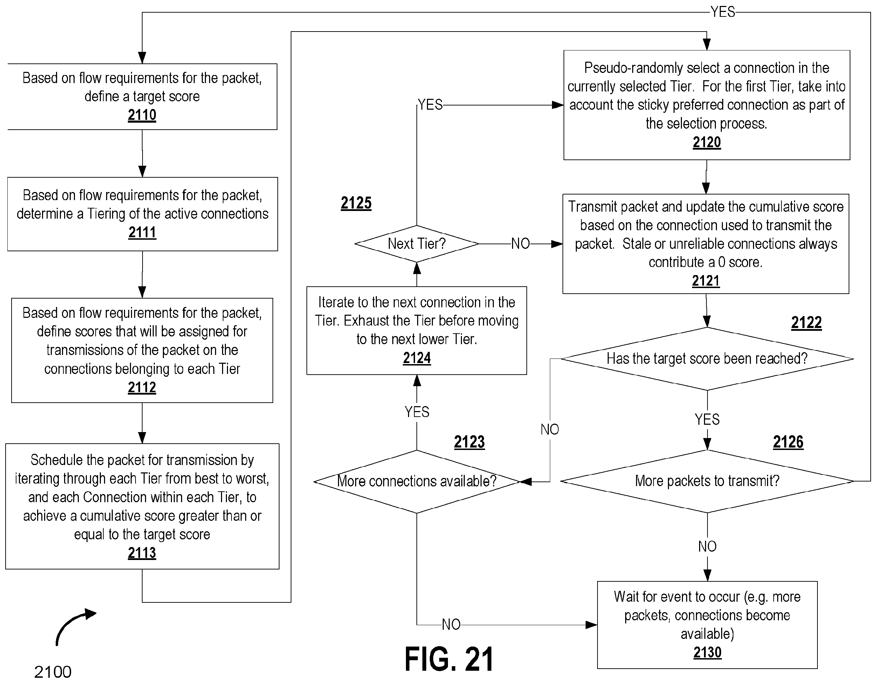

**FIG. 21** is a block diagram of a per-flow communication system workflow **2100,** according to some example embodiments. For a user with a smartphone connected over WiFi to a multi-LTE WAN router, such as one described above, the experience may be similar to video calling over a wired broadband connection.

The per-flow communication system workflow **2100** according to one embodiment may follow such a process outlined below, but may in other embodiments include more or less steps, and may be performed in various orders.

In the shown exemplary workflow **2100,** beginning at **2110,** a target score is assigned to the packet based on the requirements of the flow to which the packet belongs. The connections may then in **2111,** be tiered based on the flow requirements. For example, for real-time flows, the per-packet deadline ATL, as well as the connection's Properties, such as EDT and $T_{prop}$ are used to construct Tiers. For throughput flows, Tier construction may be based on unique Mathis and Capacity Factor pairs.

Next, at **2112** a score may be assigned to packet transmissions that occur on connections at each Tier. Connections without fresh statistics (stale connections) or unreliable connections (connections close to 100% drop probability) contribute a score of 0, regardless of Tier. In **2113,** the packet scheduling process begins, iterating through each Tier from best to worst, and iterating over each connection in each Tier, transmitting the packet on as many connections as required to achieve a cumulative score greater than or equal to the predefined target score, assigned previously in **2110.**

A connection within the currently selected Tier may then be pseudo-randomly selected in **2120.** If the current Tier is also the highest (best) Tier, the selected connection is remembered as the sticky preferred connection. Future packets belonging to this flow will always start with this connection (instead of pseudo-randomly selecting one), if it still exists in the best Tier.

Next, the packet may be transmitted in **2121,** and the cumulative score may be updated. Next, it may be determined in **2122** if the target score has been reached. If not, at **2123,** a check if any more available connections occurs. If yes, at **2124,** iteration may occur through to the next connection in the current Tier, exhausting all available connections in the current Tier before moving onto the next Tier.

If connections are still available in the current Tier at **2125,** then the process may continue from **2121,** transmitting on the next connection in the Tier and updating the score accordingly. If all the connections are exhausted in the Tier, then it may iterate to the next Tier, and the process may continue at **2120,** pseudo-randomly selecting a connection in this new Tier.

Once the target score has been reached in **2122,** then it may be determined if there are remaining packets to be transmitted at **2126.** If so, then the entire process begins again at **2110** for the next packet. If all available packets have been transmitted at **2126,** then packet scheduling pauses at **2130** until more packets arrive for transmission.

At **2122,** it is also possible that a packet has not yet reached its target score, but there are no available connections in any Tier at **2123,** where lack of availability can be for reasons such as all of the connections having their available capacity consumed (inflight packets greater than or equal to their congestion window), or Connection Priority rules preventing some connections from being activated. If this case, packet scheduling pauses at **2130** until an event occurs such as connection capacity becoming available due to inflight packets being acknowledged. This allows the packet to resume the scheduling and transmission process starting again at **2110,** but with its partial cumulative score.

As a non-limiting example implementation, which may follow the workflow as shown in **2100,** consider that the multi-LTE WAN router includes X connections, and that connection 1 would be equivalent to the old single LTE connection. Given this, there is now connections 2 through X. A user may begin a voice call, the voice call having a latency / jitter sensitive flow (packet 1, packet 2, packet N). The flow itself could also have a given latency / jitter requirement. Consider 150 ms maximum latency, 30 ms maximum jitter, and 1% maximum packet loss, respectively.

In some embodiments, a flow could consist of packets that have multiple different latency / jitter requirements, but similar to standard routers, flows may be identified and segregated based on the fields in the standard IP/TCP/UDP headers (the "SrcIP,SrcPort,DstIP,DstPort,Protocol,DSCP" tuples). Typically applications know of this standard router property, and as such, if they care about different latency / jitter requirements for their different packets, they will create separate flows for them.

Now, consider initial starting assumptions for an example implementation walking through exemplary workflow **2100.** Recall that as described above, according to some embodiments, a score may be assigned to packet transmission on each Tier. In this example, Tier 1 gives a score of 3, Tier 2 gives a score of 2, and Tier 3 gives a score of 1. Connections that do not have fresh statistics or are unreliable contribute a score of 0, regardless of Tier. The packets may then be scheduled on as many connections as required to get the packet cumulative score to be greater than or equal to a predefined target score. Consider in this example a target score of 3. Also assume that the application has a nominal target latency requirement of 150ms, and the following initial properties with respect to the available connections:

| Connection | EDT | $T_{prop}$ | Connection Priority | Fresh / Stale | Available Capacity (Inflight < CWND) |
|---|---|---|---|---|---|
| A | 10 ms | 2 ms | Primary | Fresh | Yes |
| B | 10 ms | 2 ms | Primary | Fresh | No |
| C | 10 ms | 2 ms | Primary | Stale | Yes |
| D | 5 ms | 2 ms | Secondary | Stale | Yes |
| E | 5 ms | 2 ms | Secondary | Stale | Yes |
| F | 180 ms | 100 ms | Primary | Fresh | Yes |
| G | 180 ms | 100 ms | Primary | Stale | No |
| H | 180 ms | 100 ms | Secondary | Fresh | Yes |
| I | 180 ms | 100 ms | Secondary | Stale | Yes |
| J | 500 ms | 200 ms | Primary | Stale | Yes |
| K | 500 ms | 200 ms | Primary | Fresh | Yes |
| L | 500 ms | 200 ms | Secondary | Fresh | Yes |
| M | 500 ms | 200 ms | Secondary | Fresh | Yes |

Next, consider Packet 1 and its tiering. Recall that as described above, according to some embodiments, Tiers are based on the relationship between the flow's per-packet deadlines (referred to as ATL) and the connection's EDT and $T_{prop}$ Properties. Given a nominal target latency of 150ms, assume that the Packet 1 ATL is also 150ms, resulting in the following Tiers:

◦ Packet 1:

    i. Tier 1: Connection A, B, C
    ii. Tier 2: F, G
    iii.Tier 3: J, K
    iv. Tier 4: D, E
    v. Tier 5: H, I
    vi. Tier 6: L, M

As described above, iteration may begin at Tier 1. In this example, assume the first transmission for this flow is pseudo-randomly chosen to be sticky to Connection B. Attempt to transmit on B, but it currently has no available capacity. Iterating through the Tier to connection C, transmits once, but it is stale so it contributes 0 to the target. Iterating to connection A, transmits once, and A is fresh, which contributes 3 to the target.

Consider next Packet 2, where the Tiers are the same, but the properties for B have changed such that it now has some available capacity. There is a sticky connection preference for B, so Packet 2 transmits once on B, which is still fresh and contributes 3 to the target.

For Packet 3, assume connections B and C become unavailable (100% packet loss). B and C are moved to Tier 2 (EDT becomes infinite, $T_{prop}$ is still the last measured value), and they are marked stale. The sticky connection preference for B is no longer in Tier 1, so it is forgotten. Transmit once on the only remaining Tier 1 connection A (fresh, contributes 3 to the target), and choose A as the new sticky connection preference.

Packet 3:

    vii.        Tier 1: A
    viii.      Tier 2: B, C, F, G
    ix.         Tier 3: J, K
    x.          Tier 4: D, E
    xi.         Tier 5: H, I
    xii.       Tier 6: L, M

For Packet 4, assume connection A becomes unavailable (100% packet loss). A is moved to Tier 2 (EDT becomes infinite, $T_{prop}$ is still the last measured value), and is marked stale. Tier 1 is empty, so the sticky connection preference is completely forgotten, and iteration starts at Tier 2. Assume that B is pseudo-randomly selected from Tier 2 as the initial connection to begin iteration, so packet 2 is transmitted once on B, which is stale so it contributes 0 to the target.

Packet 4:

    xiii.      Tier 1:
    xiv.      Tier 2: A, B, C, F, G
    xv.       Tier 3: J, K
    xvi.      Tier 4: D, E
    xvii.     Tier 5: H, I
    xviii.    Tier 6: L, M

Iterate to the next connection C, transmit once (stale, contributes 0 to the target).

Iterate to the next connection F, transmit once (fresh, contributes 2 to the target).

Iterate to the next connection G, no available capacity, so it is skipped.

Iterate to the next connection A, transmit once (stale, contributes 0 to the target).

Tier 2 is now exhausted and the target is still not met, hence iterate to Tier 3. Sticky connection preferences do not exist for Tiers greater than 1, so assume a pseudo-random starting choice of J. Transmit Packet 4 once on J (stale, contributes 0 to the target).

Iterate to the next connection K, and transmit once (fresh, contributes 1 to the target, resulting in a cumulative score of 3).

For a final Packet 5, assume connection K becomes unavailable (100% packet loss). K stays in Tier 3 (EDT becomes infinite, $T_{prop}$ is the last measured value, still >150ms Target Latency), and is marked stale.

Packet 5:

| | |
|---|---|
| xix. | Tier 1: |
| XX. | Tier 2: A, B, C, F, G |
| xxi. | Tier 3: J, K |
| xxii. | Tier 4: D, E |
| xxiii. | Tier 5: H, I |
| xxiv. | Tier 6: L, M |

Assume all previous stale connections transmitted for Packet 4 are still stale. Typically this would not be true in practice, since those stale transmissions that occurred with Packet 4 would have refreshed the connection statistics, allowing updated properties to be measured on each of the stale connections. However, this example will assume this to be the case in order to demonstrate how the Secondary priorities may be used to meet the target.

Repeating all of the same iterations from Packet 4, we arrive at Tier 3 being exhausted and the target score still not being met. Thus, iterate to Tier 4. Sticky connection preferences do not exist for Tier 4, so assume a pseudo-random starting choice of E.

Transmit once on E (stale, contributes 0 to the target).

Iterate to the next connection D, transmit once (stale, contributes 0 to the target). Tier 4 is then exhausted and the target still not met, so iterate to Tier 5. Sticky connection preferences do not exist for Tier 5, so assume a pseudo-random starting choice of H. Transmit once on H (fresh, contributes 2 to the target, cumulative score of 4).

Assume that there are no more packets available, so scheduling and transmission is suspended until an event occurs (for example, new packets are received at the input, negative acknowledgements for transmitted packets are received, etc.).

Consider also that given all the stale and pre-emptive packet transmissions described above, there may be many duplicates and out of order packets. In some embodiments, resequencing and de-duplicating may occur, and the endpoint may receive the packets in order.

The implementation of a per-flow communication system according to one embodiment may follow such a process outlined above, but may in other embodiments include more or less steps, and may be performed in various orders.

Consider another non-limiting example implementation, which may follow the exemplary workflow **2100,** for a flow that has a throughput maximization requirement (as opposed to a real-time flow in the previous example). Recall that as described above, according to some embodiments, a score may be assigned to packet transmission on each Tier. In this example, throughput flows configure all Tiers to contribute a score of 3. Connections that do not have fresh statistics or are unreliable contribute a score of 0, regardless of Tier.

In this example the target score for throughput flows is also 3, meaning a single packet transmission on any connection that is fresh and reliable is sufficient to reach the target. The threshold for activating Secondary connections is also configured for 10 Mbps, which means the aggregate capacity of all Primary connections must drop below 10 Mbps before the Secondary connections will become available for transmission.

Assume the following with respect to the initial state of the available connections:

| Connection | Capacity | Rounded Mathis Factor | Rounded Capacity Factor | Connection Priority | Fresh / Stale | Available Capacity (Inflight < CWND) |
|---|---|---|---|---|---|---|
| A | 50 Mbps | 50 | 100,000 | Primary | Stale | Yes |
| B | 10 Mbps | 1,000 | 10,000 | Primary | Fresh | Yes |
| C | 50 Mbps | 50 | 100,000 | Secondary | Fresh | Yes |

(continued)

| Connection | Capacity | Rounded Mathis Factor | Rounded Capacity Factor | Connection Priority | Fresh / Stale | Available Capacity (Inflight < CWND) |
|---|---|---|---|---|---|---|
| D | 50 Mbps | 50 | 100,000 | Secondary | Stale | Yes |
| E | 50 Mbps | 50 | 100,000 | Primary | Fresh | No |
| F | 10 Mbps | 5,000 | 10,000 | Primary | Stale | Yes |

Next, consider transmission of Packet 1 and its tiering. Recall that as described above, according to some embodiments, Tiers for throughput flows are based on unique tuples of the Rounded Mathis Factor, Rounded Capacity Factor, and the Connection Priority. Given that smaller Rounded Mathis Factor values are better and Larger Rounded Capacity Factor values are better, this results in the following Tiers:

Packet 1:

Tier 1: Connection A, E
Tier 2: B
Tier 3: F
Tier 4: C, D

As described above, iteration may begin at Tier 1. In this example, assume the first transmission for this flow is pseudo-randomly chosen to be sticky to Connection A. A transmission occurs on A, but it is stale, so it contributes 0 to the target.

Tier 1 is now exhausted and the target is still not met, hence iterate to Tier 2. Sticky connection preferences do not exist for Tiers greater than 1, and there's only one connection in this Tier, so pseudo-random selection provides a choice of B by default. Capacity is available so transmission occurs. The connection is also fresh, so it contributes 3 to the cumulative score, reaching the desired target.

Next consider transmission of Packet 2 belonging to the same flow. Assume that all connection properties remain the same as with Packet 1, except that A is no longer stale due to the transmission of Packet 1 updating its measured properties. The flow has a sticky connection preference for A, so Packet 2 is transmitted on it, meeting the target score of 3.

Next consider transmission of Packet 3 belonging to the same flow. Assume that connection A has now become unreliable and stale, resulting in its Rounded Mathis Factor increasing to the maximum value of 5,000.

| Connection | Capacity | Rounded Mathis Factor | Rounded Capacity Factor | Connection Priority | Fresh / Stale | Available Capacity (Inflight < CWND) |
|---|---|---|---|---|---|---|
| A | 50 Mbps | 5,000 | 100,000 | Primary | Stale | Yes |
| B | 10 Mbps | 1,000 | 10,000 | Primary | Fresh | Yes |
| C | 50 Mbps | 50 | 100,000 | Secondary | Fresh | Yes |
| D | 50 Mbps | 50 | 100,000 | Secondary | Stale | Yes |
| E | 50 Mbps | 50 | 100,000 | Primary | Fresh | No |
| F | 10 Mbps | 5,000 | 10,000 | Primary | Stale | Yes |

Connection A now has a unique tuple, causing it to be placed into its own Tier:

Packet 3:

Tier 1: Connection E
Tier 2: B
Tier 3: A
Tier 4: F
Tier 5: C, D

Iteration begins at Tier 1. Connection A no longer exists in Tier 1, so the sticky connection preference for it is forgotten. Transmission is attempted on E, and it becomes the new sticky connection preference, but it has no available capacity, so it is skipped. Iteration proceeds to Tier 2

Sticky connection preferences only exist for Tier 1, and there's only one connection in Tier 2, so pseudo-random selection provides a choice of B by default. Capacity is available so transmission occurs. The connection is also fresh, so it contributes 3 to the cumulative score, reaching the desired target.

Next consider transmission of Packet 4 belonging to the same flow. Assume that connection B has now become unreliable, resulting in its Rounded Mathis Factor increasing to the maximum value of 5,000 and it becoming stale.

| Connection | Capacity | Rounded Mathis Factor | Rounded Capacity Factor | Connection Priority | Fresh / Stale | Available Capacity (Inflight < CWND) |
|---|---|---|---|---|---|---|
| A | 50 Mbps | 5,000 | 100,000 | Primary | Stale | Yes |
| B | 10 Mbps | 5,000 | 10,000 | Primary | Stale | Yes |
| C | 50 Mbps | 50 | 100,000 | Secondary | Fresh | Yes |
| D | 50 Mbps | 50 | 100,000 | Secondary | Stale | Yes |
| E | 10 Mbps | 50 | 100,000 | Primary | Fresh | No |
| F | 50 Mbps | 5,000 | 10,000 | Primary | Stale | Yes |

This gives it the same tuple as Connection F, so they are now in the same Tier:

Packet 4:

XXV. Tier 1: Connection E
xxvi. Tier 2: A
xxvii. Tier 3: B, F
xxviii. Tier 4: C, D

Iteration begins at Tier 1. Connection E is the sticky connection preference and it exists in Tier 1, but it has no available capacity, so it is skipped. Iteration proceeds to Tier 2. Sticky connection preferences only exist for Tier 1, and there's only one connection in Tier 2, so pseudo-random selection provides a choice of A by default. It is stale and unreliable, so it contributes 0 to the cumulative score even though transmission occurs.

Iteration proceeds to Tier 3. Sticky connection preferences only exist for Tier 1, so assume that pseudo-random connection selection chooses connection F first. Transmission occurs but since it is stale it contributes 0 to target score. Iteration proceeds within the Tier to connection B. It is stale and unreliable, so it also contributes to the target score after transmission.

Iteration stops, not proceeding to Tier 4 because all Primary connections have been exhausted, and the Connection Priority rules are configured to only activate Secondary connections if the total fresh, reliable capacity drops below 10 Mbps. This threshold is still met by Connection E, it just currently has no capacity.

Packet 4 has no more connections available for transmission, but it has not yet met its target score of 3. The system waits until an event occurs that could allow for further transmission to occur. For example, acknowledgements of inflight packets on connection E which would increase its available capacity, failure of connection E which would satisfy the threshold for activating the Secondary connections, updated measured properties on any of the other Primary connections so that they are no longer stale and/or unreliable.

Assume that an event occurs that causes the capacity of connection E to drop to 8 Mbps, which also reduces its Capacity Factor:

| Connection | Capacity | Rounded Mathis Factor | Rounded Capacity Factor | Connection Priority | Fresh / Stale | Available Capacity (Inflight < CWND) |
|---|---|---|---|---|---|---|
| A | 50 Mbps | 5,000 | 100,000 | Primary | Stale | Yes |
| B | 10 Mbps | 5,000 | 10,000 | Primary | Stale | Yes |
| C | 50 Mbps | 50 | 100,000 | Secondary | Fresh | Yes |
| D | 50 Mbps | 50 | 100,000 | Secondary | Stale | Yes |
| E | 8 Mbps | 50 | 10,000 | Primary | Fresh | No |
| F | 50 Mbps | 5,000 | 10,000 | Primary | Stale | Yes |

The Tiers remain the same, and the iteration steps repeat again from the beginning, but this time instead of stopping at Tier 3, iteration proceeds to Tier 4 because the aggregate available Primary capacity has dropped below the configured threshold of 10 Mbps (only 8 Mbps available on connection E).

Sticky connection preferences only exist for Tier 1, so assume that pseudo-random connection selection choose connection D first from Tier 4. Transmission occurs but since it is stale it contributes 0 to target score. Iteration proceeds within the Tier to connection C. It is fresh, so it contributes 3 to the packet score. The target is met and transmission for packet 4 is complete.

Assume that there are no more packets available, so scheduling and transmission is suspended until an event occurs (for example, new packets are received at the input, negative acknowledgements for transmitted packets are received, etc.).

Consider also that given all the stale packet transmissions described above, there may be many duplicates and out of order packets. In some embodiments, resequencing and deduplicating may occur, and the endpoint may receive the packets in order.

The implementation of a per-flow communication system according to one embodiment may follow such a process outlined above, but may in other embodiments include more or less steps, and may be performed in various orders.

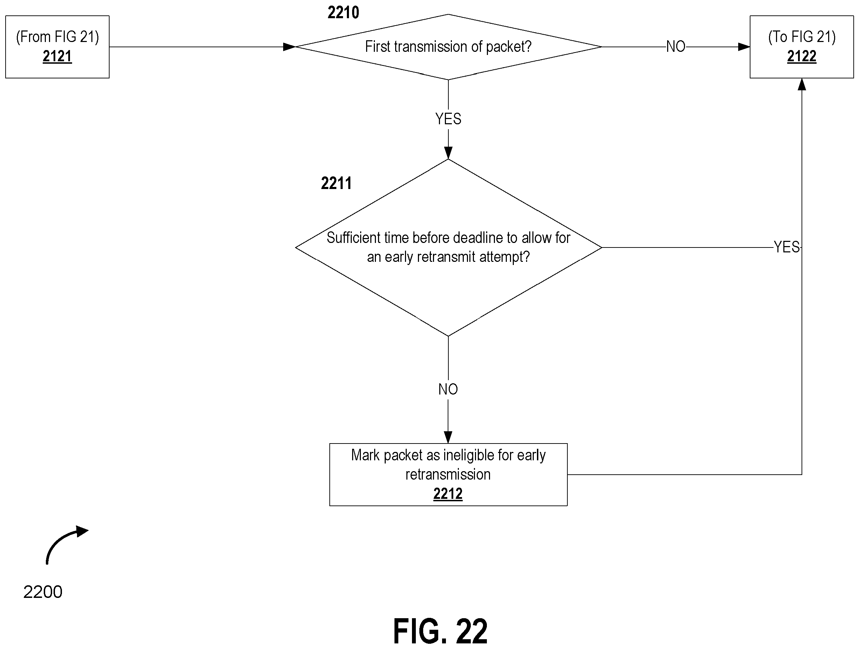

**FIG. 22** is a block diagram showing a workflow **2200** that can occur between **2121** and **2122 of FIG. 21,** specifically for real-time flows, according to some example embodiments. These flows have the ability to trigger early retransmission of packets when their deadlines will occur soon, but they still have not been acknowledged yet.

The exemplary workflow **2200** according to one embodiment may follow such a process outlined below, but may in other embodiments include more or less steps, and may be performed in various orders.

In the shown exemplary workflow **2200,** beginning at **2210,** the transmitted packet (which occurred at **2121** of **FIG. 21),** a check is made if this is the first transmission of the packet. If it is not, that means there has already been a previous transmission of the packet on a better connection, so the early retransmission eligibility check would have already been completed. As such, the packet returns to **2122** in **FIG. 21.**

However, if it is the first transmission of the packet, at **2211** a check occurs if there is sufficient time before the packet deadline to complete an early retransmission attempt. In some embodiments, this check consists of three components:

The best case duration of this first transmission and its corresponding ACK (this would typically be the connection RTT)

The worst case duration for an early retransmission attempt to succeed, after the best case duration has elapsed without receiving the ACK (this would typically be the connection EDT)

A pre-defined "overhead" value to account for system processing time (in some embodiments, this is a constant of 50 ms)

If the sum of these three components exceeds the current packet ATL, it is marked ineligible for early retransmission at **2212.** In both cases (eligible and ineligible), the packet proceeds back to step **2122** in **FIG. 21.**

As a non-limiting example implementation, which may follow the workflow as shown in **2200,** consider Packet 1 from a real-time flow that has an ATL of 200ms, scheduled for its first transmission on Connection A with RTT 25ms and EDT 100ms. At **2211,** the sum of the three components (RTT + EDT + 50ms = 25 + 100 + 50 = 175ms) is less than the ATL, so the packet is eligible for retransmission. The explanation for this comparison is that in the nominal scenario, Connection A is expected to deliver Packet 1 and ACK it within its RTT of 25ms. If 25ms has elapsed and an ACK or NACK has not been received yet, the system may begin to suspect that the transmission has been lost and consider an early retransmission in order to meet the deadline. In order for there to be sufficient time left for this early retransmission to be effective, there must be an additional EDT + Processing Time Overhead remaining before the Packet 1 deadline.

In this example, there is sufficient time, so Packet 1 is eligible to be considered for early retransmission, and it proceeds back to step **2122.**

Next, consider that Packet 1 enters the workflow again, because it requires multiple transmissions as described by workflow **2100** to reach its target score. This time, at **2210** Packet 1 is not on its first transmission, so it proceeds directly back to **2122.**

Next, consider that Packet 2 from the same real-time flow enters at **2210,** with an ATL of 150ms. Assume that it is also scheduled for its first transmission on Connection A with the same RTT and EDT parameters as for Packet 1. This time the sum of the three components (175 ms) is greater than the ATL, so Packet 2 is marked ineligible for early retransmission at **2212.** It then proceeds back into the **2100** workflow at **2122.**

The implementation of a per-flow communication system according to one embodiment may follow such a process outlined above, but may in other embodiments include more or less steps, and may be performed in various orders.

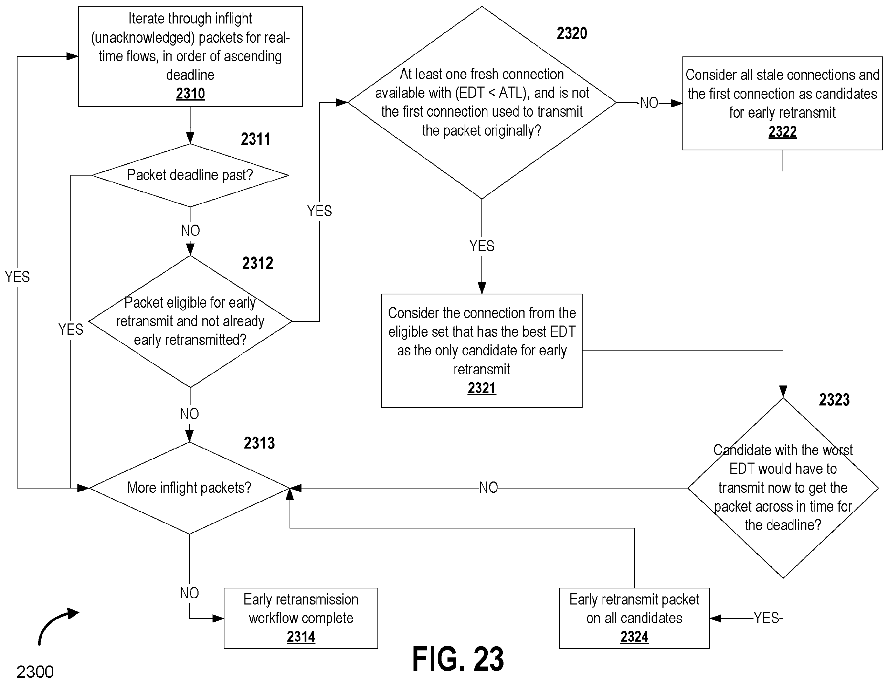

**FIG. 23** is a block diagram showing a workflow for considering early retransmission of inflight packets, according to some example embodiments. In particular, **FIG. 23** is a block diagram showing a workflow **2300** for considering early retransmission of inflight packets (those that have been transmitted and met their target score through workflows **2100** and **2200,** but have not yet been acknowledged as received or lost).

The exemplary workflow **2300** according to one embodiment may follow such a process outlined below, but may in other embodiments include more or less steps, and may be performed in various orders.

In the shown exemplary workflow **2300,** beginning at **2310,** iteration through the inflight packets belonging to real-time flows occurs, in ascending order of the packet deadlines.

Packets with deadlines in the past are skipped at **2311,** and packets that have already been early retransmitted previously are skipped at **2312.** Any packets that were marked as ineligible for early retransmit as part of workflow **2200** are also skipped at **2312.**

If a packet has not been skipped, at **2320** its ATL is compared with the EDT of all available connections. For all fresh connections, the one with the best EDT that is less than the packet ATL and is also not the first connection that was originally used to transmit the packet is returned as the candidate for early retransmission at **2321.** If no such candidate exists, multiple candidates are returned at **2322,** consisting of all stale connections plus the first connection that was originally used to transmit the packet (if it meets the EDT < ATL requirement).

At **2323,** the candidate with the worst EDT is checked against the packet deadline. If the deadline is getting so close that this candidate would need to transmit the packet now in order for it to reach the destination in time, the packet is scheduled for immediate early retransmission on all candidates at **2324.** In this exemplary embodiment, the definition of "so close" is a pre-defined constant of 50ms, meaning there is less than 50ms between the current time plus the connection EDT and the packet deadline.

Otherwise, the packet is not near enough to its deadline yet to warrant an early retransmit, and the system prefers to wait longer in case the packet is successfully delivered by the initial transmissions that occurred through workflow **2200.**

Iteration continues to the next inflight packet at **2313** if there is one available, otherwise the early retransmit workflow ends at **2314,** to be resumed again later. In this exemplary embodiment, workflow **2300** is triggered by a timer set according to the "so close" deadline described above, for the packet with the earliest deadline. The workflow is also always triggered immediately prior to workflow **2100.**

As a non-limiting example implementation, which may follow the workflow as shown in **2300,** consider Packet 1 which is the only inflight packet, with a deadline in the future of T=1000ms, where the current time is t=100ms. Assume the following connections exist in the system, and that the first Connection that Packet 1 was originally transmitted on was C:

| Connection | EDT | Fresh / Stale |
|---|---|---|
| A | 150ms | Fresh |
| B | 300ms | Stale |
| C | 50ms | Fresh |
| D | 195ms | Fresh |

At **2310,** Packet 1 is the only inflight packet, so it is selected for iteration.

At **2311,** the Packet 1 is determined to not have a past deadline (current time is t=100ms, deadline is T=1000ms).

At **2312,** Packet is determined to be eligible for early retransmit (not previously marked ineligible by workflow **2200),** and not already early retransmitted.

At **2320,** ATL is 900ms (T=1000ms minus t=100ms), so all four of Connection A, B, C, and D satisfy the (EDT < ATL) requirement. However, B does not satisfy the freshness requirement, and C was the first connection used to transmit Packet 1 originally, so it is also excluded. This leaves Connection A and D as the only remaining eligible ones.

Connection A has the best EDT of the two, so it is returned as the only eligible candidate at **2321.**

At **2323,** Connection A does not satisfy the "packet deadline is close" requirement. Recall that in this exemplary embodiment, it is (now + EDT + 50ms) >= PacketDeadline, or (t=100ms + 150ms + 50ms) = 300ms, which is not >= T = 1000ms.

As a result, Packet 1 is not early retransmitted. Iteration over more packets occurs at **2313,** but there are none remaining, so the early retransmission workflow terminates at **2314.**

In this exemplary embodiment, a timer is set to restart workflow **2300** at t=800ms, which is the time when the Packet 1 deadline is considered near enough to require an early retransmit on Connection A if Packet 1 is still inflight at that time.

Assume that this timer fires, that Packet 1 is still inflight, but that the Connection properties have now changed such that Connection A is stale:

| Connection | EDT | Fresh / Stale |
|---|---|---|
| A | 150ms | Stale |
| B | 300ms | Stale |
| C | 50ms | Fresh |
| D | 195ms | Fresh |

The previous steps **2310, 2311,** and **2312** remain the same.

At **2320,** ATL is 200ms (T=1000ms minus t=800ms), so only Connections A, C, and D satisfy the (EDT < ATL) requirement. However, A no longer satisfies the freshness requirement, and C was the first connection used to transmit Packet 1 originally, so it is also excluded. This leaves Connection D as the only remaining eligible connection, so it is returned as the candidate at **2321.**

At **2323,** Connection D satisfies the "packet deadline is close" requirement. Recall that in this exemplary embodiment, it is (now + EDT + 50ms) >= PacketDeadline, or (t=800ms + 195ms + 50ms) = 1045ms, which is >= T=1000ms.

As a result, Packet 1 is early retransmitted on Connection D at **2324.**

Iteration to the next packet occurs at **2313.** Assume that there are no other packets inflight, so the early retransmission workflow terminates at **2314.**

Assume that there is now a Packet 2 inflight, with a deadline of T=2000ms, that was originally transmitted on Connection C, and that the current time is t=1900ms. Assume that the Connection properties are unchanged since Packet 1:

| Connection | EDT | Fresh / Stale |
|---|---|---|
| A | 150ms | Stale |
| B | 300ms | Stale |
| C | 50ms | Fresh |
| D | 195ms | Fresh |

Assume that Packet 2 passes the checks at stages **2311** and **2312,** moving to **2320.** The ATL is 100ms (T=2000ms minus t=1900ms). Only Connection C satisfies the EDT < ATL requirement, however it is also the first connection that was used to transmit Packet 2.

As a result, **2320** is left with no option but to proceed to **2322,** where it returns all stale connections plus the first connection from the original transmit. This means that all of Connections A, B, and C are returned.

At **2323,** the connection with the worst EDT is B, and it satisfies the "packet deadline is close" requirement. Recall that in this exemplary embodiment, it is (now + EDT + 50ms) >= PacketDeadline, or (t=1900ms + 300ms + 50ms) = 2250ms, which is >= T=2000ms.

As a result, Packet 2 is early retransmitted on all candidates, Connections A, B, and C. Iteration to the next packet occurs at **2313.** Assume that there are no other packets inflight, so the early retransmission workflow terminates at **2314.**

The implementation of a per-flow communication system according to one embodiment may follow such a process outlined above, but may in other embodiments include more or less steps, and may be performed in various orders.

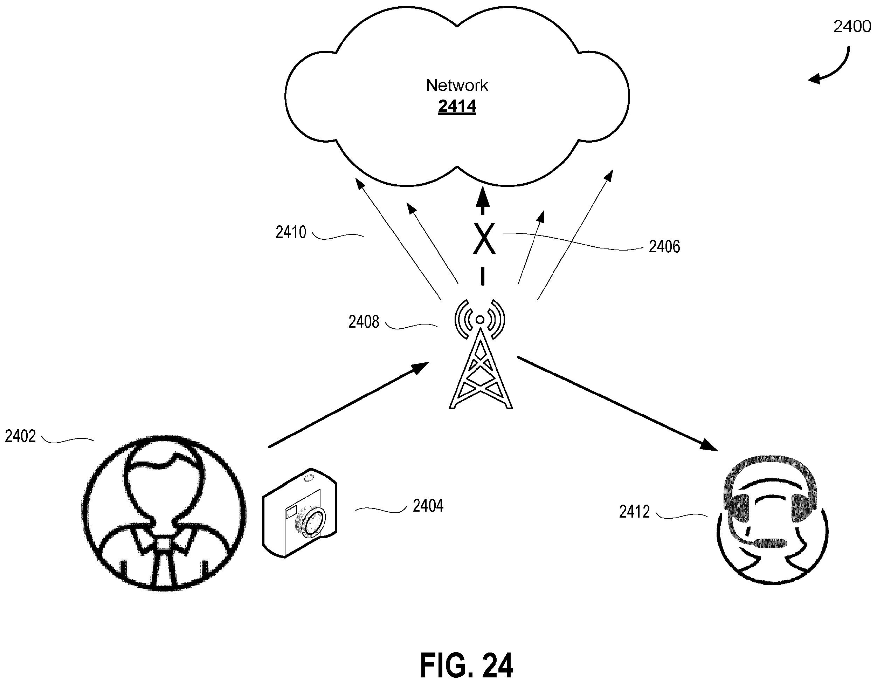

**FIG. 24** is a diagram of a per-flow communication system implementation **2400,** according to some example embodiments.

During an emergency, first-responders should not need to worry about connectivity for their communications, nor should they be IT experts. First responders and public safety agencies rely on advanced technology to improve situational awareness and response times. Transmitting real-time video and data from the field requires large amounts of bandwidth, and relying on a single connection can leave organizations vulnerable.

Emergency situations may occur in various environments, including those with unreliable network conditions where reliable connectivity is still required. This connectivity needs to provide appropriate connection security, diversity, redundancy, latency, and bandwidth required for communications, such as real-time video and data. These communications often have latency / jitter requirements, and with current technology, the available WAN connections are not able to consistently meet the real-time requirements on their own. The reasons they cannot meet the requirements may be due to connection overload (contention / competition for connection capacity), or due to connection failure / inconsistency (e.g. cut fiber, wireless interference, faulty equipment). Connection competition could be anywhere along the path (first / middle / last mile), anywhere where demand exceeds the capacity of a particular network link.

Embodiments described above make use of multiple WAN connections to be able to meet these real-time requirements, despite the individual WAN unreliability.

Consider the exemplary implementation **2400** of an embodiment as shown in **FIG. 24.** In this example, a police officer **2402** can be seen with a body camera **2404.** Police officer **2402** may be in a pursuit in a spectrally challenged environment, such as an apartment building, and body camera **2404** may be relaying real-time live video and audio of the situation to a 911 dispatch center, for example.

As seen in **2400,** their connection to network **2414** may have been overloaded, or they may have suffered failure of the main connection **2406.** Router **2408,** is a multi-LTE WAN router, according to one of embodiments described above, and has multiple connections **2410.** Router **2408** may be able to maintain a reliable communication with the dispatch center, via the multiple other connections. Data packets for the video and audio communication may be transmitted according to the processes described in the embodiments above, and may ensure that latency and jitter requirements are met so that the video feed is clear for the dispatch center, including for example, dispatch worker **2412.**

Similarly, since connection failures can occur with any type of connection, the dispatch center itself might be connected to the network with multi-WAN Router **2408** that supports multiple wired and wireless broadband connections **2410** (e.g. fiber, cable, DSL, LEO satellite, LTE, etc.). According to the embodiments described above, Connection Priority rules can be used to set the unmetered connections as Primary (e.g. fiber, cable, DSL, LEO satellite), and the metered, more expensive connections (e.g. LTE) as Secondary. Data packets for the video and audio communication may be transmitted according to the processes described in the embodiments above and may ensure that the latency and jitter requirements are met even if the dispatch center suffers congestion or failures on multiple WAN connections simultaneously. This occurs commonly for dispatch centers in regions with limited choices for unmetered connections, such as rural areas that may only have access to low quality DSL lines and oversubscribed LEO satellite service.

Other public-safety related use-cases may include a mobile command, where for example, reliable connection is required to enable connected command vehicles to send and receive data from cameras, sensors and edge devices. First responders must be able to quickly and reliably get the information they need to make life-saving decisions.

As public safety departments around the world increase their use of real-time video, the amount of video which law enforcement agencies produce and ingest is rapidly increasing. The described embodiments present a solution to this increased demand which simultaneously requires a high standard of reliability, enabling multiple different connections for sending data packets, processes to sort / Tier these connections and send the packets to ensure their timely arrival while adhering to the strict requirements.

Described embodiments may provide use for fleet connectivity, where live video can be sent back to command centers and enabling "mobile precincts" to help make appropriate response decisions or retrieve vital data in the field to keep teams safe and respond faster. For instance, a mobile camera could capture a license plate and send to the edge for instant analysis to alert a police officer if action should be taken.

Real-time video applications, such as those described in example implementation **2400,** may also ensure central command has real-time video to support decision-making during sporting events, parades, protests, and other events which draw large, mobile crowds.

Described embodiments may enable unmanned aerial systems, or drones, to provide real-time video from the safety of the sky to improve situational awareness for law enforcement and fire service commanders.

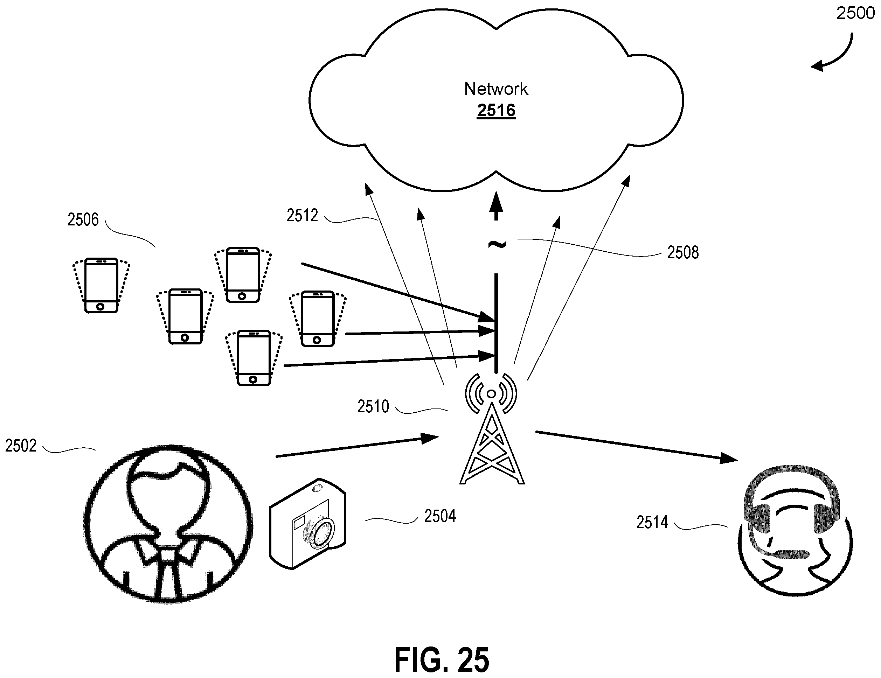

**FIG. 25** is a diagram of a per-flow communication system implementation **2500,** according to some example embodiments.

As VoIP grows, broadcasting needs, processes, and deliverables continue to evolve. Described embodiments may provide a single service for uninterrupted live broadcasts from remote locations, for example. Some embodiments may be easy-to-use and integrate into a broadcast workflow, and may be versatile to different environment uses (e.g. vehicle-mounted, worn in a backpack, integrated into drones, etc.)

Broadcast communications typically have latency / jitter requirements, and with current technology, the available WAN connections are not able to consistently meet the real-time requirements on their own. The reasons they cannot meet the requirements may be due to connection overload (contention / competition for connection capacity), or due to connection failure / inconsistency (e.g. cut fiber, wireless interference, faulty equipment). Connection competition could be anywhere along the path (first / middle / last mile), anywhere where demand exceeds the capacity of a particular network link.

Embodiments described above make use of multiple WAN connections to be able to meet these real-time requirements, despite the unreliability of the individual WAN connections.

Consider the example implementation shown in **FIG. 25.** A reporter **2502** may be reporting breaking news a live event where reporter **2502** is in a remote broadcast location filming with broadcast camera **2504,** and due to the large crowd at the live event all using their cellphones **2506,** the main connection **2508** has become very slow due to overload and competition. A slow connection is obviously not conducive to a good broadcast production.

Reporter **2502** may need to transmit real-time video and be present on a VoIP call with the main broadcast anchor, receiving their video and audio, as well as talking points over a teleprompter at the remote location. Low-latency and jitter is required to ensure the remote team with reporter **2502** remain in sync with central production **2514.**

Router **2510** may allow this low-latency return video and teleprompting feeds to be sent to live broadcast production teams in the field and with central production, and may allow them to view these feeds simultaneously on tablets and mobile devices. Router **2510,** is a multi-LTE WAN router, according to one of embodiments described above.

Router **2510** may be able to maintain a reliable communication with central production, via the multiple other connections **2512.** Data packets for the video communication may be transmitted according to the processes described in the embodiments above, and may ensure that latency and jitter requirements are met so that the video feed is clear for the broadcast.

Router **2510** may provide reliable connection to network **2516,** which may provide high-throughput wireless internet to the remote team with reporter **2502,** which may improve their productivity by providing access to cloud services, online resources, media assets, and newsroom systems from anywhere. Router **2510** may be a portable and / or an in-vehicle device as well. Described embodiments may provide remote connectivity, where media assets and newsroom systems may be accessed remotely, files quickly transferred back and forth, and allow for more-easy communication with field personnel.

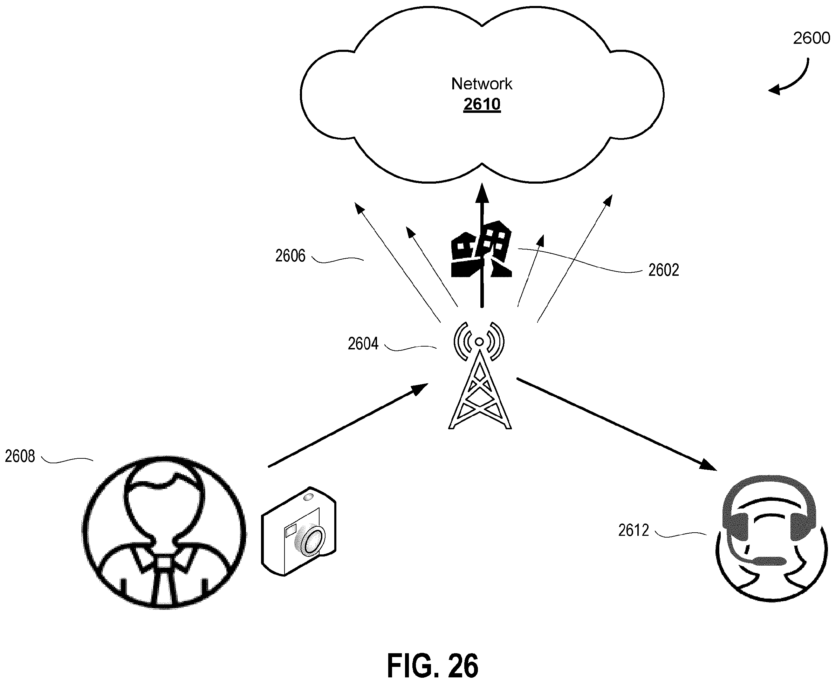

**FIG. 26** is a diagram of a per-flow communication system implementation **2600,** according to some example embodiments. **FIG. 26** shows another broadcast implementation example.

Storms, floods, and other extreme weather vents may disrupt broadcast operations, while damage or cuts to fiber optic cables can take days or weeks to locate and repair. As shown in **2600,** main connection **2602** has been damaged and cut due to a sever-weather event, and can no longer transmit data.

Router **2604** may provide a portable and permanent back-up connectivity solutions, due to the multiple-LTE WAN connections **2606.** This can allow a broadcast **2608** to remain on-air, and keep remote teams connected to network **2610** during emergency weather events, as shown in **2600.** In such a situation, it may be incredibly important for public safety, say in the event of a large natural disaster such as an earthquake, that the news broadcasts remain active to provide the public with accurate and up-to-date information, live. Described embodiments may keep broadcasts **2608** on air and retain content distribution capabilities in the event of damage to broadcast facilities or studios **2612,** for example.

Other example broadcast implementations and use-cases of the described embodiments may be for remote contribution, as shown in **FIG. 25** and described above. Embodiments may also help in the case of remote production, where production activities themselves are being produced in a remote location.

Described embodiments may also allow for cost-effective distribution of content to network affiliates, group stations, or to other broadcasters and media organizations, for example.

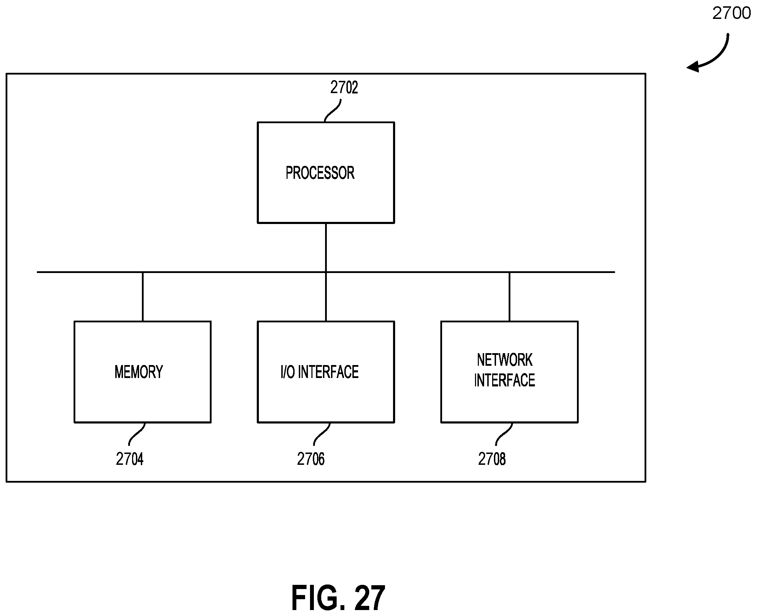

**FIG. 27** is a schematic diagram of computing device **2700** which may be used to implement system **1200A** and/or **1200B,** in accordance with an embodiment.

As depicted, computing device **2700** includes at least one processor **2702,** memory **2704,** at least one I/O interface **2706,** and at least one network interface **2708.**

Each processor **2702** may be, for example, be a microprocessor or microcontroller (e.g., a special-purpose microprocessor or microcontroller), a digital signal processing (DSP) processor, an integrated circuit, a field programmable gate array (FPGA), a reconfigurable processor, a programmable read-only memory (PROM), or various combinations thereof.

Memory **2704** may include a suitable combination of various types of computer memory that is located either internally or externally such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like.

Each I/O interface **2706** enables computing device **2700** to interconnect with one or more input devices, such as a keyboard, mouse, camera, touch screen and a microphone, or with one or more output devices such as a display screen and a speaker.

Each network interface **2708** enables computing device **2700** to communicate with other components, to exchange data with other components, to access and connect to network resources, to serve applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g., Wi-Fi, WiMAX), SS7 signaling network, fixed line, local area network, wide area network, and others, including various combinations of these.

For simplicity only, one computing device **2700** is shown but system **1200A** and/or **1200B** may include multiple computing devices **2700.** The computing devices **2700** may be the same or different types of devices. The computing devices **2700** may be connected in various ways including directly coupled, indirectly coupled via a network, and distributed over a wide geographic area and connected via a network (which may be referred to as "cloud computing").

For example, and without limitation, a computing device **2700** may be a server, network appliance, set-top box, embedded device, computer expansion module, personal computer, laptop, personal data assistant, cellular telephone, smartphone device, UMPC tablets, video display terminal, gaming console, or various other computing device capable of being configured to carry out the methods described herein.

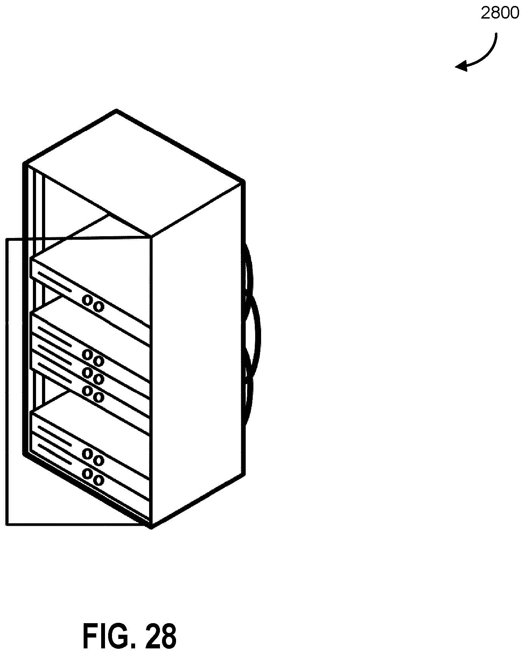

**FIG. 28** is a diagram **2800** depicting a physical computer server rack, according to some example embodiments. In the computer server rack shown in **2800,** there are multiple networked computing components, including rack mounted computing appliances, such as a networked router, switch, hub, gateway, etc. In this example, the components interoperate with one another to controlling routing, for example, by establishing and/or periodically updating routing tables and/or routing rules. In another embodiment, the components interoperate to control routing by controlling network connections, routing data packets, etc., in accordance with the routing tables and/or routing rules.

As described herein, the approach is a technical, computational solution that can be implemented in the form of a physical data router or other networking device configured for controlling routing of communications of data packets. The device can include one or more processors operating in conjunction with computer memory, and the one or more processors may be coupled to data storage. Corresponding methods, and non-transitory computer readable media (e.g., diskette, solid state storage, hard disk drive) storing machine-interpretable instructions thereon (e.g., software which when executed by a computer processor, cause the processor to perform a method described herein in various embodiments).

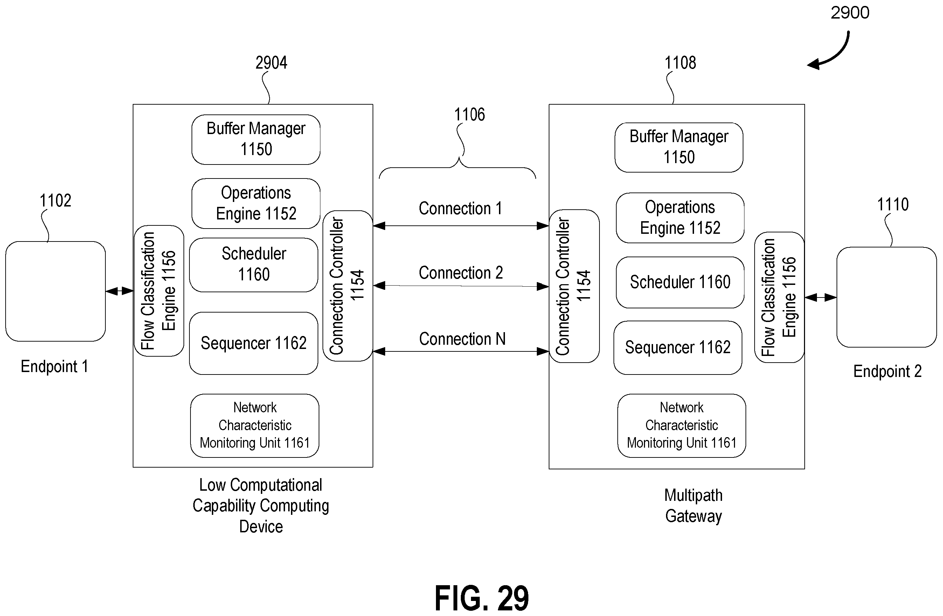

**FIG. 29** is a diagram depicting a practical variation using a reduced computing ability computing device, according to some example embodiments.

In **FIG. 29,** a drawing **2900** is shown of a variant embodiment of the per flow system described herein. In this variation, the system is adapted to operate using a reduced computing ability computing device **2904** (e.g., such as a Raspberry Pi™ device or an Arduino™ device) at one or the other side of the communication.

In this example embodiment, the computationally expensive or computationally resource intensive operations (e.g., processing time, speed, power, memory / storage requirements) are conducted on a side having more available resources, while the other side is assigned to conduct basic operations requiring only a minimum of computing resources.

This is useful when a practical situation requires an asymmetrical level of investment and computational power, due to, for example, availability of computing devices in a particular region or a difficulty of transporting expensive and heavy equipment to such a region (e.g., correspondents in emergency zones, in remote areas, in areas with less transport infrastructure).

Accordingly, asymmetrical computing scenarios are possible and contemplated, and the system can be adapted to operate in these types of configurations as well.

In particular, the side with more resources can do computationally expensive operations and communicate the results over-to-air to the other side, such as the network model of each connection (e.g., capacity, cwnd, loss rate, RTO all of which need data collection over time, statistical and filtering operations that are mathematically demanding).

A negotiation protocol can optionally be implemented where both sides can communicate their capabilities and mutually agree who will compute what and communicate it to the other side.

In particular, each side could be associated with a data structure advertising the corresponding capabilities, and a scoring / ranking algorithm can be utilized to conduct an automatic mutual agreement process.

In another variation, a discovery protocol is utilized where each side learns what the other is capable of and manages transmission of packets such that the other side is not computationally overwhelmed in terms of packet processing, even if the network allows for high bitrates. The discovery protocol can be practically implemented using a data process that runs on both, for example, asynchronously or synchronously, to maintain an up to date listing of available computing capabilities. This can be useful where the devices draw resources from pools of shared capabilities, such as in distributed computing systems where resources can be assigned and allocated dynamically.

Accordingly, as shown in **FIG. 29,** a dynamic assignment of compute tasks for network routing can be shared as between the two devices such that the device with more computing capabilities can be utilized for controlling routing and sending routing instructions to the other in the form of data messages and packets. In particular, the device with more computing capabilities can be used to manage tier structures and establish priority routing, while maintaining and/or sensing priorities of the various network connections. The device with more computing capabilities can manage a composite property that represents the estimated delivery time, and apply various scheduling approaches to address issues that arise when sorting connections by properties.

In particular, the tiered approach allows for establishing functional equivalence for connections that belong in a particular tier based on various definitions, such as a specific approach based on a per-flow basis (e.g., different approaches for flows that have a throughput preference as opposed to real-time flows that could have a latency / jitter preference). This distinction can be used to more granularly control the re-transmit approach / probability of receipt approaches such that, for example, pre-emptive re-transmission approaches only apply to real-time flows.

The device with more computing capabilities can thus manage and track the ATL value as a dynamic value that changes per-packet and over time, for example, as the packet ages. The device with more computing capabilities then identifies a connection to schedule packets for delivery, and sends routing instructions accordingly, and additionally connection priority rules and logical flows can be utilized to establish a granular approach for control, or can be used to influence how tiers are constructed and/or maintained.

During the scheduling approach, the device with more computing capabilities conducts the score assignments, scheduling, and controls the communication by either device across the various network connections.

Furthermore, in some embodiments, early-retransmission of packets can be controlled to occur by the device with more computing capabilities. Per-packet deadlines can be maintained, and an early-re-transmission can be controlled in certain example situations, such as sending on all stale connections, and/or on an original connection.

By controlling which device conducts which activities, the reduced computing capability of multiple devices can be taken into consideration, and load can be shared or passed entirely to one device (e.g., the device having more resources). This can also be used to manage other types of computing characteristics, such as device wear / lifetime usage management, heat levels, among others. Accordingly, asymmetric computing can be a useful variation from a computational load balancing perspective, addressing technical issues that arise due to differences in computing characteristics or differences in computing environments. While the example described primarily has the load being shifted entirely to the device with more computing capabilities, this does not necessarily need to occur, instead specific activities can be load balanced between two devices.

The term "connected" or "coupled to" may include both direct coupling (in which two elements that are coupled to each other contact each other) and indirect coupling (in which at least one additional element is located between the two elements).

Although the embodiments have been described in detail, it should be understood that various changes, substitutions and alterations can be made herein without departing from the scope. Moreover, the scope of the present application is not intended to be limited to the particular embodiments of the process, machine, manufacture, composition of matter, means, methods and steps described in the specification.

As one of ordinary skill in the art will readily appreciate from the disclosure, processes, machines, manufacture, compositions of matter, means, methods, or steps, presently existing or later to be developed, that perform substantially the same function or achieve substantially the same result as the corresponding embodiments described herein may be utilized. Accordingly, the appended claims are intended to include within their scope such processes, machines, manufacture, compositions of matter, means, methods, or steps.

As can be understood, the examples described above and illustrated are intended to be exemplary only.

**Claims**

1. A device for coordinating data communications across a plurality of wide area network connections, the device comprising:
   a processor coupled with computer memory and non-transitory computer readable storage media, the processor configured to:

   monitor, for each wide area network connection of the plurality of wide area network connections, at least one of latency, packet loss, and throughput properties for packets transmitted on the wide area network connection;
   define, for each wide area network connection of the plurality of wide area network connections, an estimated delivery time, EDT, based at least on an expected value of a delivery time of the packets after retransmissions due to dropped packets;
   identify, for each packet having a latency/jitter preference in a plurality of packets being routed, an adjusted target latency, ATL, based at least on a per-packet deadline for communication of the packet to a target endpoint;
   group, using the per-packet ATL, the plurality of wide area network connection properties, and the EDT for each wide area network connection of the plurality of wide area network connections, to establish a plurality of tiered groupings such that each wide area network connection of the plurality of wide area network connections is grouped into a corresponding tiered grouping of the plurality of tiered groupings; and

communicate the packet using one or more selected wide area network connections selected from the plurality of wide area network connections, selected at least using the plurality of tiered groupings.

2. The device of claim 1, wherein the wide area network connection latency and packet loss properties include the EDT generated based on the relation:

$$EDT = T_{prop} + T_{rtprop} \frac{P_{drop}}{1 - P_{drop}}$$

wherein: $P_{drop}$ is defined as packet drop probability;
$T_{prop}$ is defined as one-way propagation delay; and
$T_{rtprop}$ is defined as round-trip propagation delay.

3. The device of claim 1, wherein the wide area network connections belonging to each tiered grouping of the plurality of tiered groupings is considered functionally equivalent for selection of the one or more selected wide area network connection.

4. The device of claim 1, wherein the plurality of tiered groupings includes at least a first Tier (Tier 1), a second Tier (Tier 2), and a third Tier (Tier 3), defined based on a relationship between the per-packet ATL and the plurality of wide area network connection properties, EDT and $T_{prop}$:

Tier 1: $T_{prop} \leq ATL$ && $EDT \leq ATL$
Tier 2: $T_{prop} \leq ATL$ && $EDT > ATL$
Tier 3: $T_{prop} > ATL$ && $EDT > ATL$

5. The device of claim 4, wherein the plurality of tiered groupings includes further Tiers that subdivide Tiers 1, 2, and 3 based on one or more pre-defined connection priority rules, such that the result is a new set of Tiers, from Tier 1 through Tier N;
optionally wherein connection priority rules are ignored if the scheduling of the packet on multiple connections on higher Tiers is unable to achieve the cumulative score greater than or equal to a pre-defined target score.

6. The device of claim 4, wherein the selecting of the one or more selected wide area network connections among available wide area network connections is iterated from available wide area network connections in Tier 1, and then Tier 2, and finally Tier 3;

wherein an option A further comprises the communication of the packet using the one or more selected wide area network connections selected from the plurality of wide area network connections includes scheduling the packet on multiple connections selected from the plurality of wide area network connections for pre-emptive re-transmissions ;
wherein option A further comprises an option B
wherein wide area network connections in each Tier are assigned a Tier-based score, and the scheduling of the packet on multiple connections is conducted to achieve a cumulative score greater than or equal to a pre-defined target score.

7. The device of claim 6 comprising option B,

wherein connections designated as unreliable or not having recent monitored properties are assigned a Tier-based score of 0, regardless of their corresponding Tier level;
optionally wherein for packets associated with throughput preference flows, every Tier is assigned the same Tier-based score that matches the pre-defined target score.

8. The device of claim 6, wherein the selecting of the selected wide area network connection among available wide area network connections in a tiered grouping includes pseudo-randomly or algorithmically selecting an available wide area network connection; or

wherein selecting of the one or more selected wide area network connections among available wide area network connections in a tiered grouping includes selecting the wide area network connection with the shortest backlog, wherein backlog is measured in units of time, and defined as the number of inflight bytes divided by the connection bitrate.

9. The device of claim 8, wherein initial selection of the selected wide area network connection for a data flow corresponding to a packet includes an initial pseudo-random selection, and for future packets corresponding to the data flow, the selection of the selected wide area network connection is maintained;
optionally wherein:

the selection of the selected wide area network connection is maintained only until a connection dormancy period threshold has been reached, or an explicit flow termination notification has occurred, upon which a further packet on the data flow utilizes a further initial pseudo-random selection; or
the selection of the one or more selected wide area network connections is maintained only for as long as administrative configuration allows.

10. The device of claim 1, wherein the processor is further configured to:
classify data flows into (i) throughput preference flows and (ii) real-time flows; and only packets from real-time flows are identified as packets having a latency/jitter preference;
optionally wherein for packets from the throughput preference flows, grouped Tiers are established based on identical composite property pairs based at least on one or more measured properties of the plurality of wide area network connections.

11. The device of claim 1, wherein the processor is further configured to:

track per-packet deadlines of a packet sent on a first wide area network connection that is nearing a deadline but has not been acknowledged;
execute an early re-transmit of the packet that is nearing the deadline but has not been acknowledged using a second wide area network connection having available congestion window, CWND, along with a $T_{prop}$ and backlog value short enough to communicate the packet that is nearing the deadline but has not been acknowledged to the corresponding target endpoint.

12. The device of claim 1, wherein the processor is further configured to:

track per-packet deadlines of a packet sent on a first wide area network connection that is nearing a deadline but has not been acknowledged;
determine that there is not an available non-stale second wide area network connection having available congestion window, CWND, along with a $T_{prop}$ and backlog value short enough to communicate the packet; and responsive to the determination, execute an early re-transmit of the packet that is nearing the deadline but has not been acknowledged using one or more stale wide area network connections;
optionally wherein the processor is further configured to:
execute an early re-transmit of the packet on the first wide area network connection that was used to transmit the packet originally.

13. The device of claim 1, wherein the processor is further configured to: prior to communicating the packet using the selected wide area network connection, establish a priority between packets within the flow defining a packet queue for the flow;
optionally wherein the packet queue is unloaded according to a multi-level deficit weighted round robin, DWRR, scheduling approach, wherein the queues at higher importance levels can starve the queues at lower importance levels, preventing the lower importance queues from being serviced, regardless of the weights assigned to the lower importance queues.

14. The device of claim 1, wherein the ATL is a dynamic value that changes per-packet;

wherein an option A further comprises that the ATL changes as the packet ages;
wherein option A further comprises an option B wherein the ATL is defined as a packet deadline time value subtracted by a current time value;
wherein option B optionally comprises that

the packet's current deadline time value is equal to the packet's original reception time ($T_{PacketReceived}$) added to the flow's nominal target latency requirement.

15. A method for coordinating data communications across a plurality of wide area network connections, the method comprising:

monitoring, for each wide area network connection of the plurality of wide area network connections, latency and packet loss properties for packets transmitted on the wide area network connection;

defining, for each wide area network connection of the plurality of wide area network connections, an estimated delivery time, EDT, based at least on an expected value of a delivery time of the packets after retransmissions due to dropped packets;

identifying, for each packet having a latency/jitter preference in a plurality of packets being routed, an adjusted target latency, ATL, based at least on a per-packet deadline for communication of the packet to a target endpoint;

grouping, using the per-packet ATL, the plurality of wide area network connection properties, and the EDT for each wide area network connection of the plurality of wide area network connections, to establish a plurality of tiered groupings such that each wide area network connection of the plurality of wide area network connections is grouped into a corresponding tiered grouping of the plurality of tiered groupings; and

communicating the packet using one or more selected wide area network connections selected from the plurality of wide area network connections, selected at least using the plurality of tiered groupings.

**Patentansprüche**

1. Vorrichtung für die Koordinierung der Datenkommunikationen über eine Mehrzahl von Weitverkehrsnetzverbindungen, wobei die Vorrichtung umfasst:
einen Prozessor, der mit einem Computerarbeitsspeicher und nichtflüchtigen, computerlesbaren Speichermedien gekoppelt ist, wobei der Prozessor konfiguriert ist, zum:

Überwachen für jede Weitverkehrsnetzverbindung aus der Mehrzahl von Weitverkehrsnetzverbindungen wenigstens einer der Eigenschaften Latenz, Paketverlust und Durchsatz für Pakete, die über die Weitverkehrsnetzverbindung übertragen werden;

Definieren für jede Weitverkehrsnetzverbindung aus der Mehrzahl von Weitverkehrsnetzverbindungen einer geschätzten Lieferzeit, EDT, die wenigstens auf einem erwarteten Wert einer Lieferzeit der Pakete nach Wiederholungsübertragungen aufgrund von verlorenen Paketen basiert;

Identifizieren für jedes Paket mit einer Latenz-/Jitter-Präferenz in einer Mehrzahl von Paketen, die geroutet werden, einer angepassten Ziellatenz, ATL, die wenigstens auf einer paketbezogenen Frist für die Kommunikation des Pakets an einen Zielendpunkt basiert;

Gruppieren unter Verwendung der paketbezogenen ATL, der Mehrzahl von Weitverkehrsnetzverbindungseigenschaften und der EDT für jede Weitverkehrsnetzverbindung aus der Mehrzahl von Weitverkehrsnetzverbindungen, um eine Mehrzahl von abgestuften Gruppierungen zu bilden, sodass jede Weitverkehrsnetzverbindung der Mehrzahl von Weitverkehrsnetzverbindungen in eine entsprechende abgestufte Gruppierung der Mehrzahl von abgestuften Gruppierungen gruppiert wird; und

Kommunizieren des Pakets unter Verwendung einer oder mehrerer ausgewählter Weitverkehrsnetzverbindungen, die aus der Mehrzahl von Weitverkehrsnetzverbindungen ausgewählt wurden, wenigstens unter Verwendung der Mehrzahl von abgestuften Gruppierungen ausgewählt.

2. Vorrichtung nach Anspruch 1, wobei die Weitverkehrsnetzverbindungseigenschaften Latenz und Paketverlust die EDT beinhalten, die auf Grundlage der Beziehung erzeugt wird:

$$EDT = T_{prop} + T_{rtprop}\frac{P_{drop}}{1 - P_{drop}}$$

wobei: $P_{drop}$ als Paketverlustwahrscheinlichkeit definiert ist;
$T_{prop}$ als Einweg-Ausbreitungsverzögerung definiert ist; und
$T_{rtprop}$ als Hin- und Rückweg-Ausbreitungsverzögerung definiert ist.

3. Vorrichtung nach Anspruch 1, wobei die Weitverkehrsnetzverbindungen, die zu jeder abgestuften Gruppierung der Mehrzahl von abgestuften Gruppierungen gehören, für die Auswahl der einen oder der mehreren ausgewählten Weitverkehrsnetzverbindungen als funktional gleichwertig betrachtet werden.

4. Vorrichtung nach Anspruch 1, wobei die Mehrzahl von abgestuften Gruppierungen wenigstens eine erste Stufe (Stufe 1), eine zweite Stufe (Stufe 2) und eine dritte Stufe (Stufe 3) beinhaltet, die auf Grundlage einer Beziehung zwischen der paketbezogenen ATL und der Mehrzahl von Weitverkehrsnetzverbindungseigenschaften, EDT und $T_{prop}$ definiert sind:

Stufe 1: $T_{prop} \leq ATL \,\&\&\, EDT \leq ATL$
Stufe 2: $T_{prop} \leq ATL \,\&\&\, EDT > ATL$
Stufe 3: $T_{prop} > ATL \,\&\&\, EDT > ATL$

5. Vorrichtung nach Anspruch 4, wobei die Mehrzahl von abgestuften Gruppierungen weitere Stufen beinhaltet, die die Stufen 1, 2 und 3 auf Grundlage einer oder mehrerer vordefinierter Verbindungsprioritätsregeln unterteilen, sodass sich ein neuer Satz von Stufen ergibt, von Stufe 1 bis einschließlich Stufe N;
wobei optional die Verbindungsprioritätsregeln ignoriert werden, wenn bei der Einplanung des Pakets auf mehreren Verbindungen auf höheren Stufen die kumulative Bewertungsziffer größer oder gleich einer vordefinierten Zielbewertungsziffer nicht erreicht werden kann.

6. Vorrichtung nach Anspruch 4, wobei die Auswahl der einen oder der mehreren ausgewählten Weitverkehrsnetzverbindungen unter den verfügbaren Weitverkehrsnetzverbindungen aus den verfügbaren Weitverkehrsnetzverbindungen auf Stufe 1, dann auf Stufe 2 und schließlich auf Stufe 3 iteriert wird;
wobei eine Option A ferner umfasst:

die Kommunikation des Pakets unter Verwendung der einen oder der mehreren ausgewählten Weitverkehrsnetzverbindungen, die aus der Mehrzahl von Weitverkehrsnetzverbindungen ausgewählt wurden, beinhaltet die Einplanung des Pakets auf mehreren Verbindungen, die aus der Mehrzahl von Weitverkehrsnetzverbindungen für präemptive Wiederholungsübertragungen ausgewählt wurden;
wobei Option A ferner eine Option B umfasst, wobei Weitverkehrsnetzverbindungen auf jeder Stufe eine stufenbasierte Bewertungsziffer zugewiesen wird und die Einplanung des Pakets auf mehreren Verbindungen durchgeführt wird, um eine kumulative Bewertungsziffer zu erreichen, die größer oder gleich einer vordefinierten Zielbewertungsziffer ist.

7. Vorrichtung nach Anspruch 6, die Option B umfasst, wobei Verbindungen, die als unzuverlässig bezeichnet werden oder keine kürzlich überwachten Eigenschaften aufweisen, eine stufenbasierte Bewertungsziffer von 0 zugewiesen wird, unabhängig von ihrem entsprechenden Stufenniveau;
optional wobei für Pakete, die mit Durchsatzpräferenzströmen assoziiert sind, jeder Stufe die gleiche stufenbasierte Bewertungsziffer zugewiesen wird, die der vordefinierten Zielbewertungsziffer entspricht.

8. Vorrichtung nach Anspruch 6, wobei die Auswahl der ausgewählten Weitverkehrsnetzverbindung unter den verfügbaren Weitverkehrsnetzverbindungen in einer gestuften Gruppierung das pseudozufällige oder algorithmische Auswählen einer verfügbaren Weitverkehrsnetzverbindung beinhaltet; oder
wobei die Auswahl der einen oder der mehreren ausgewählten Weitverkehrsnetzverbindungen unter den verfügbaren Weitverkehrsnetzverbindungen in einer gestuften Gruppierung die Auswahl der Weitverkehrsnetzverbindung mit dem kürzesten Rückstand beinhaltet, wobei der Rückstand in Zeiteinheiten gemessen und als die Anzahl von Bytes im Flug, geteilt durch die Verbindungsbitrate, definiert ist.

9. Vorrichtung nach Anspruch 8, wobei die anfängliche Auswahl der ausgewählten Weitverkehrsnetzverbindung für einen einem Paket entsprechenden Datenstrom eine anfängliche pseudozufällige Auswahl beinhaltet, und für zukünftige Pakete, die dem Datenstrom entsprechen, die Auswahl der ausgewählten Weitverkehrsnetzverbindung beibehalten wird;
optional wobei:

die Auswahl der ausgewählten Weitverkehrsnetzverbindung nur so lange beibehalten wird, bis eine Schwelle für die Verbindungsinaktivitätsdauer erreicht wurde oder eine explizite Benachrichtigung über die Beendigung des Stroms eingetreten ist, woraufhin ein weiteres Paket in dem Datenstrom eine weitere anfängliche pseudozufällige Auswahl nutzt; oder
die Auswahl der einen oder der mehreren ausgewählten Weitverkehrsnetzverbindungen nur so lange beibehalten wird, wie es die administrative Konfiguration zulässt.

10. Vorrichtung nach Anspruch 1, wobei der Prozessor ferner konfiguriert ist, zum:

Klassifizieren von Datenströmen in (i) Durchsatzpräferenzströme und (ii) Echtzeitströme; und nur Pakete aus Echtzeitströmen als Pakete mit einer Latenz-/Jitter-Präferenz identifiziert werden;
wobei optional für Pakete aus den Durchsatzpräferenzströmen gruppierte Stufen auf Grundlage identischer zusammengesetzter Eigenschaftspaare eingerichtet werden, die wenigstens auf einer oder mehreren gemessenen Eigenschaften der Mehrzahl von Weitverkehrsnetzverbindungen basieren.

11. Vorrichtung nach Anspruch 1, wobei der Prozessor ferner konfiguriert ist, zum:

Verfolgen der paketbezogenen Fristen eines Pakets, das über eine erste Weitverkehrsnetzverbindung gesendet wurde und sich einer Frist nähert, aber noch nicht bestätigt wurde;
Ausführen einer vorzeitigen Wiederholungsübertragung des Pakets, das sich der Frist nähert, aber noch nicht bestätigt wurde, unter Verwendung einer zweiten Weitverkehrsnetzverbindung mit einem verfügbaren Überlastungsfenster, CWND, zusammen mit einem $T_{prop}$- und Rückstandswert, der kurz genug ist, um das Paket, das sich der Frist nähert, aber noch nicht bestätigt wurde, an den entsprechenden Zielendpunkt zu kommunizieren.

12. Vorrichtung nach Anspruch 1, wobei der Prozessor konfiguriert ist, zum:

Verfolgen der paketbezogenen Fristen eines über eine erste Weitverkehrsnetzverbindung gesendeten Pakets, das sich einer Frist nähert, aber noch nicht bestätigt wurde;
Bestimmen, dass es keine verfügbare, nicht veraltete zweite Weitverkehrsnetzverbindung mit verfügbarem Überlastungsfenster, CWND, zusammen mit einem $T_{prop}$- und Rückstandswert gibt, der kurz genug ist, um das Paket zu kommunizieren; und
als Reaktion auf das Bestimmen Ausführen einer vorzeitigen Wiederholungsübertragung des Pakets, das sich der Frist nähert, aber noch nicht bestätigt wurde, unter Verwendung einer oder mehrerer veralteter Weitverkehrsnetzverbindungen;
optional wobei der Prozessor konfiguriert ist, zum:
Ausführen einer vorzeitigen Wiederholungsübertragung des Pakets über die erste Weitverkehrsnetzverbindung, die ursprünglich für die Übertragung des Pakets verwendet wurde.

13. Vorrichtung nach Anspruch 1, wobei der Prozessor ferner konfiguriert ist, zum:

vor der Kommunikation des Pakets unter Verwendung der ausgewählten Weitverkehrsnetzverbindung Erstellen einer Priorität zwischen Paketen innerhalb des Stroms, was eine Paketwarteschlange für den Strom definiert;
wobei optional die Paketwarteschlange gemäß einem mehrstufigen, defizitgewichteten Round-Robin-, DWRR-, Planungsansatz abgeladen wird, wobei die Warteschlangen auf Stufen mit höherer Wichtigkeit die Warteschlangen auf Stufen mit niedrigerer Wichtigkeit aushungern können, wodurch verhindert wird, dass die Warteschlangen mit niedrigerer Wichtigkeit bedient werden, unabhängig von den Gewichten, die den Warteschlangen mit niedrigerer Wichtigkeit zugewiesen sind.

14. Vorrichtung nach Anspruch 1, wobei die ATL ein dynamischer Wert ist, der sich paketbezogen ändert;

wobei eine Option A ferner umfasst, dass sich die ATL mit zunehmendem Alter des Pakets ändert;
wobei Option A ferner eine Option B umfasst, wobei die ATL als ein Zeitwert für die Paketfrist definiert ist, von dem ein aktueller Zeitwert abgezogen wird;
wobei Option B optional umfasst, dass der aktuelle Zeitwert für die Paketfrist gleich der ursprünglichen Empfangszeit des Pakets ($T_{PacketReceived}$) ist, der zu der nominalen Ziellatenzanforderung des Stroms addiert wurde.

15. Verfahren für die Koordinierung der Datenkommunikation über eine Mehrzahl von Weitverkehrsnetzverbindungen, wobei das Verfahren umfasst:

Überwachen für jede Weitverkehrsnetzverbindung aus der Mehrzahl von Weitverkehrsnetzverbindungen von Eigenschaften Latenz und Paketverlust, die über die Weitverkehrsnetzverbindung übertragen werden;
Definieren für jede Weitverkehrsnetzverbindung aus der Mehrzahl von Weitverkehrsnetzverbindungen einer geschätzten Lieferzeit, EDT, die wenigstens auf einem erwarteten Wert einer Lieferzeit der Pakete nach Wiederholungsübertragungen aufgrund von verlorenen Paketen basiert;

Identifizieren für jedes Paket mit einer Latenz-/Jitter-Präferenz in einer Mehrzahl von Paketen, die geroutet werden, einer angepassten Ziellatenz, ATL, die wenigstens auf einer paketbezogenen Frist für die Kommunikation des Pakets an einen Zielendpunkt basiert;

Gruppieren unter Verwendung der paketbezogenen ATL, der Mehrzahl von Weitverkehrsnetzverbindungseigenschaften und der EDT für jede Weitverkehrsnetzverbindung aus der Mehrzahl von Weitverkehrsnetzverbindungen, um eine Mehrzahl von abgestuften Gruppierungen zu erstellen, sodass jede Weitverkehrsnetzverbindung der Mehrzahl von Weitverkehrsnetzverbindungen in eine entsprechende abgestufte Gruppierung der Mehrzahl von abgestuften Gruppierungen gruppiert wird; und

Kommunizieren des Pakets unter Verwendung einer oder mehrerer ausgewählter Weitverkehrsnetzverbindungen, die aus der Mehrzahl von Weitverkehrsnetzverbindungen ausgewählt wurden, wenigstens unter Verwendung der Mehrzahl von abgestuften Gruppierungen ausgewählt.

## Revendications

1. Dispositif de coordination de communications de données sur une pluralité de connexions de réseau étendu, le dispositif comprenant :

un processeur couplé à une mémoire d'ordinateur et à des supports de stockage non transitoires lisibles par ordinateur, le processeur étant configuré pour :

surveiller, pour chaque connexion de réseau étendu de la pluralité de connexions de réseau étendu, au moins les unes parmi des propriétés de latence, de perte de paquets, et de débit pour des paquets transmis sur la connexion de réseau étendu ;

définir, pour chaque connexion de réseau étendu de la pluralité de connexions de réseau étendu, un temps de livraison estimé, EDT, sur la base au moins d'une valeur prévue d'un temps de livraison des paquets après des retransmissions dues à des paquets abandonnés ;

identifier, pour chaque paquet ayant une préférence de latence/gigue dans une pluralité de paquets qui sont en cours de routage, une latence cible ajustée, ATL, sur la base au moins d'une échéance par paquet pour une communication du paquet à un point terminal cible ;

regrouper, à l'aide de l'ATL par paquet, la pluralité de propriétés de connexion de réseau étendu, et l'EDT pour chaque connexion de réseau étendu de la pluralité de connexions de réseau étendu, pour établir une pluralité de regroupements en paliers de sorte que chaque connexion de réseau étendu de la pluralité de connexions de réseau étendu est regroupée dans un regroupement en palier correspondant de la pluralité de regroupements en paliers ; et

communiquer le paquet à l'aide d'une ou de plusieurs connexions de réseau étendu sélectionnée qui sont sélectionnées à partir de la pluralité de connexions de réseau étendu, sélectionnées au moins à l'aide de la pluralité de regroupements en paliers.

2. Dispositif selon la revendication 1, dans lequel les propriétés de latence et de perte de paquets de connexion de réseau étendu comportent l'EDT généré sur la base de la relation :

$$EDT = T_{prop} + T_{rtprop} \frac{P_{drop}}{1 - P_{drop}}$$

où : $P_{drop}$ est défini comme la probabilité d'abandon de paquets ;

$T_{drop}$ est défini comme le retard de propagation aller ; et

$T_{rtdrop}$ est défini comme le retard de propagation aller-retour.

3. Dispositif selon la revendication 1, dans lequel les connexions de réseau étendu appartenant à chaque regroupement en palier de la pluralité de regroupements en paliers sont considérées comme fonctionnellement équivalentes pour une sélection des une ou plusieurs connexions de réseau étendu sélectionnées.

4. Dispositif selon la revendication 1, dans lequel la pluralité de regroupements en paliers comporte au moins un premier palier (palier 1), un deuxième palier (palier 2), et un troisième palier (palier 3), définis sur la base d'une relation entre l'ATL par paquet et la pluralité de propriétés de connexion de réseau étendu, EDT et $T_{prop}$ :

Palier 1 : $T_{prop} \leq ATL$ && $EDT \leq ATL$
Palier 2 : $T_{prop} \leq ATL$ && $EDT > ATL$
Palier 3 : $T_{prop} > ATL$ && $EDT > ATL.$

5. Dispositif selon la revendication 4, dans lequel la pluralité de regroupements en paliers comporte d'autres paliers qui subdivisent les paliers 1, 2, et 3 sur la base d'une ou de plusieurs règles de priorité de connexion prédéfinies, de sorte que le résultat est un nouvel ensemble de paliers, du palier 1 au palier N ;
éventuellement dans lequel des règles de priorité de connexion sont ignorées si la planification du paquet sur de multiples connexions sur des paliers supérieurs est incapable d'obtenir le score cumulé supérieur ou égal à un score cible prédéfini.

6. Dispositif selon la revendication 4, dans lequel la sélection des une ou plusieurs connexions de réseau étendu sélectionnées parmi des connexions de réseau étendu disponibles est itérée à partir de connexions de réseau étendu disponibles dans le palier 1, puis le palier 2, et enfin le palier 3 ;

dans lequel une option A comprend en outre la communication du paquet à l'aide des une ou plusieurs connexions de réseau étendu sélectionnées qui sont sélectionnées parmi la pluralité de connexions de réseau étendu comporte la planification du paquet sur de multiples connexions sélectionnées parmi la pluralité de connexions de réseau étendu pour des retransmissions préemptives ;
dans lequel l'option A comprend en outre une option B dans lequel des connexions de réseau étendu dans chaque palier reçoivent un score basé sur le palier, et la planification du paquet sur de multiples connexions est conduite pour obtenir un score cumulé supérieur ou égal à un score cible prédéfini.

7. Dispositif selon la revendication 6 comprenant l'option B, dans lequel des connexions désignées comme non fiables ou n'ayant pas de propriétés surveillées récentes reçoivent un score basé sur le palier de 0, indépendamment de leur niveau de palier correspondant ;
éventuellement dans lequel pour des paquets associés à des flux de préférence de débit, chaque palier reçoit le même score basé sur le palier qui concorde avec le score cible prédéfini.

8. Dispositif selon la revendication 6, dans lequel la sélection de la connexion de réseau étendu sélectionnée parmi des connexions de réseau étendu disponibles dans un regroupement en palier comporte la sélection pseudo-aléatoire ou algorithmique d'une connexion de réseau étendu disponible ; ou
dans lequel la sélection des une ou plusieurs connexions de réseau étendu sélectionnées parmi des connexions de réseau étendu disponibles dans un regroupement en palier comporte la sélection de la connexion de réseau étendu avec l'arriéré le plus court, dans lequel l'arriéré est mesuré en unités de temps, et défini comme le nombre d'octets en vol divisé par le débit binaire de connexion.

9. Dispositif selon la revendication 8, dans lequel une sélection initiale de la connexion de réseau étendu sélectionnée pour un flux de données correspondant à un paquet comporte une sélection pseudo-aléatoire initiale, et pour de futurs paquets correspondant au flux de données, la sélection de la connexion de réseau étendu sélectionnée est maintenue ;
éventuellement dans lequel :

la sélection de la connexion de réseau étendu sélectionnée est maintenue uniquement jusqu'à ce qu'un seuil de période de dormance de connexion ait été atteint, ou qu'une notification de terminaison de flux explicite soit survenue, suite à quoi un autre paquet sur le flux de données utilise une autre sélection pseudo-aléatoire initiale ; ou
la sélection des une ou plusieurs connexions de réseau étendu sélectionnées est maintenue uniquement tant que la configuration administrative le permet.

10. Dispositif selon la revendication 1, dans lequel le processeur est en outre configuré pour :
classifier des paquets dans (i) des flux de préférence de débit et (ii) des flux en temps réel ; et uniquement des paquets issus des flux en temps réel sont identifiés comme des paquets ayant une préférence de latence/gigue ;
éventuellement dans lequel pour des paquets issus des flux de préférence de débit, des paliers regroupés sont établis sur la base de paires de propriétés composites identiques sur la base au moins d'une ou de plusieurs propriétés mesurées de la pluralité de connexions de réseau étendu.

11. Dispositif selon la revendication 1, dans lequel le processeur est en outre configuré pour :

suivre des échéances par paquet d'un paquet envoyé sur une première connexion de réseau étendu qui approche d'une échéance, mais n'a pas fait l'objet d'un accusé de réception ;

exécuter une retransmission précoce du paquet qui approche de l'échéance, mais n'a pas fait l'objet d'un accusé de réception à l'aide d'une deuxième connexion de réseau étendu ayant une fenêtre de congestion, CWND, disponible ainsi qu'un $T_{prop}$ et une valeur d'arriéré suffisamment courte pour communiquer le paquet qui approche de l'échéance, mais n'a pas fait l'objet d'un accusé de réception au point terminal cible correspondant.

12. Dispositif selon la revendication 1, dans lequel le processeur est en outre configuré pour :

suivre des échéances par paquet d'un paquet envoyé sur une première connexion de réseau étendu qui approche d'une échéance, mais n'a pas fait l'objet d'un accusé de réception ;

déterminer qu'il n'existe pas de deuxième connexion de réseau étendu non périmée disponible ayant une fenêtre de congestion, CWND, disponible ainsi qu'un $T_{prop}$ et une valeur d'arriéré suffisamment courte pour communiquer le paquet ; et

en réponse à la détermination, exécuter une retransmission précoce du paquet qui approche de l'échéance mais n'a pas fait l'objet d'un accusé de réception à l'aide d'une ou de plusieurs connexions de réseau étendu périmées ;

éventuellement dans lequel le processeur est en outre configuré pour :

exécuter une transmission précoce du paquet sur la première connexion de réseau étendu qui a été utilisée pour transmettre le paquet à l'origine.

13. Dispositif selon la revendication 1, dans lequel le processeur est en outre configuré pour :

avant la communication du paquet à l'aide de la connexion de réseau étendu sélectionnée, établir une priorité entre des paquets au sein du flux définissant une file d'attente de paquets pour le flux ;

éventuellement dans lequel la file d'attente de paquets est déchargée selon une approche de planification par circuit circulaire à poids déficitaire, DWRR, multi-niveau, dans lequel les files d'attente à des niveau d'importance supérieure peuvent sous-alimenter les files d'attente à des niveaux d'importance inférieure, ce qui empêche les files d'attente d'importance inférieure d'être desservies, indépendamment des poids attribués aux files d'attente d'importance inférieure.

14. Dispositif selon la revendication 1, dans lequel l'ATL est une valeur dynamique qui change par paquet ;

dans lequel une option A comprend le fait que l'ATL change à mesure que le paquet vieillit ;

dans lequel une option A comprend en outre une option B dans lequel l'ATL est défini comme une valeur de temps d'échéance de paquet dont une valeur de temps en cours est soustraite ;

dans lequel l'option B comprend éventuellement le fait que la valeur de temps d'échéance en cours du paquet est égale au temps de réception d'origine du paquet ($T_{PacketReceived}$) ajouté à l'exigence de latence cible nominale du flux.

15. Procédé de coordination de communications de données sur une pluralité de connexions de réseau étendu, le procédé comprenant :

la surveillance, pour chaque connexion de réseau étendu de la pluralité de connexions de réseau étendu, de propriétés de latence et de perte de paquets pour des paquets transmis sur la connexion de réseau étendu ;

la définition, pour chaque connexion de réseau étendu de la pluralité de connexions de réseau étendu, d'un temps de livraison estimé, EDT, sur la base au moins d'une valeur prévue d'un temps de livraison des paquets après des retransmissions dues à des paquets abandonnés ;

l'identification, pour chaque paquet ayant une préférence de latence/gigue dans une pluralité de paquets qui sont en cours de routage, d'une latence cible ajustée, ATL, sur la base au moins d'une échéance par paquet pour une communication du paquet à un point terminal cible ;

le regroupement, à l'aide de l'ATL par paquet, de la pluralité de propriétés de connexion de réseau étendu, et de l'EDT pour chaque connexion de réseau étendu de la pluralité de connexions de réseau étendu, pour établir une pluralité de regroupements en paliers de sorte que chaque connexion de réseau étendu de la pluralité de connexions de réseau étendu est regroupée dans un regroupement en palier correspondant de la pluralité de regroupements en paliers ; et

la communication du paquet à l'aide d'une ou de plusieurs connexions de réseau étendu sélectionnées qui sont sélectionnées à partir de la pluralité de connexions de réseau étendu, sélectionnées au moins à l'aide de la pluralité de regroupements en paliers.

EP 4 523 395 B1

Input Queue
102

Pull Scheduler
130

Timer
108A

Connection
110A

Timer
108B

Connection
110B

To 112

Timer
108N

Connection
110N

From 110

Network
112

Connection
114

Receiver
116

Sequencer
118

LAN
120

100A

FIG. 1A

FIG. 1B

Determine when an input queue includes unassigned data packets available for transmission
**1130**

END

Assign one or more data packets of the unassigned data packets to one or more corresponding output queues of the plurality of networks having suitable monitored characteristics
**1132**

Update the monitored characteristics of the corresponding plurality of networks to reflect the assigned one or more data packets
**1134**

YES

For each connection which has packets queued, send those packets to the next pipeline stage for that connection
**1136**

EP 4 523 395 B1

100C

# FIG. 1C

Perform any necessary accounting for
connection metadata updates and
determine the set of active connections
**1102**

Queue a packet to be sent on the first
connection in the order which has available
capacity
**1110**

Determine an ordering of connections
based on connection metadata
**1104**

Update the connection metadata to reflect
the scheduled packet
**1112**

While there are packets to send and
available network capacity in the set of
active connections
**1106**

Is there available
connection capacity? **1114**

Yes

No

Retreive the next packet to be sent
**1108**

For each connection which has packets
queued, send those packets to the next
pipeline stage for that connection
**1116**

100D

# FIG. 1D

Perform any necessary accounting for connection metadata updates and determine the set of active connections **1102**

Construct a selector based on the currently active connection set **1103**

Use the selector to choose a packet to send over one of the available connections. Exit the loop if no packet is selected **1105**

Determine an ordering of the active connections based on the packet's flow and flow classification in combination with the connection metadata **1107**

Queue a packet to be sent on the first connection in the ordering which has available capacity **1110**

Update the connection metadata to reflect the scheduled packet **1112**

Is there available connection capacity? **1114**

Yes

NO

For each connection which has packets queued, send those packets to the next pipeline stage for that connection **1116**

100E

**FIG. 1E**

Start

1. Connections that are completely down (100% summarized loss) are considered worse than connections than have <100% summarized loss

2. PR Priority (higher priority is better)

3. MathisFactor (lower is better)

4. RoundedRTT (lower is better)

5. CapacityFactor (higher is better)

6. RoundedRtProp (lower is better)

7. RoundedBtlBw (higher is better)

8. ConnectionID (lower is better)

End

**FIG. 1F**

100F

FIG. 2

**FIG. 3**

Time: t = 1

| Sequence: 8 Send At: 9 | Sequence: 7 Send At: 7 | Sequence: 6 Send At: 5 | Sequence: 5 Send At: 0 |

300

Pipeline Stage 3

| Sequence: 4 Send At: 4 | Sequence: 2 Send At: 1 | Sequence: 3 Send At: 0 | Sequence: 1 Send At: 0 |

Eligible to send now

Time: t = 2

Pipeline Stage 3

| Sequence: 8 Send At: 9 | Sequence: 7 Send At: 7 | Sequence: 6 Send At: 5 | Sequence: 4 Send At: 4 | Sequence: 5 Send At: 0 | Sequence: 2 Send At: 1 | Sequence: 3 Send At: 0 | Sequence: 1 Send At: 0 |

Eligible to send now

Time: t = 3

Pipeline Stage 3

| Sequence: 8 Send At: 9 | Sequence: 7 Send At: 7 | Sequence: 6 Send At: 5 | Sequence: 4 Send At: 4 |

No packets eligible to send until t=4

| Sequence: 5 Send At: 0 | Sequence: 2 Send At: 1 | Sequence: 3 Send At: 0 | Sequence: 1 Send At: 0 |

**Connection 1**
RtProp: 30 ms
RTT: 100 ms
BtlBw: 250 BPS

Rounded RtProp: 50ms
Rounded BtlBw: 300 BPS
Capacity Factor: 6

Available Cwnd: Yes

**Connection 2**
RtProp: 50 ms
RTT: 100 ms
BtlBw: 300 BPS

Rounded RtProp: 50 ms
Rounded Btlw: 300 BPS
Capacity Factor: 6

Available Cwnd: No

**Connection 3**
RtProp: 600 ms
RTT: 750 ms
BtlBw: 20 BPS

Rounded RtProp: 600 ms
Rounded BtlBw: 20 BPS
Capacity Factor: 1

Available Cwnd: Yes

**Flow Class 1**

Criteria:
RtProp <= 50 ms and BtlBw > 100 BPS

Sort Dimension Preference:
Capacity Factor, RTT, BtlBw

**Flow Class 2**

Criteria:
RtProp < 500 ms

Sort Dimension Preference:
RTT, BtlBw, Capacity Factor

**Flow Class 3**

Criteria:
BtlBw > 400 BPS

Sort Dimension Preference:
RTT, BtlBw, Capacity Factor

**Selector**

FC1 matches (C1)
FC2 matches (C1)

400A

**FIG. 4A**

FIG. 4B

400C

**Connection 1**

RtProp: 30 ms
RTT: 100 ms
BtlBw: 250 BPS

Capacity Factor: 6
Available Cwnd: Yes

**Connection 2**

RtProp: 50 ms
RTT: 100 ms
BtlBw: 300 BPS

Capacity Factor: 6
Available Cwnd: No

**Connection 3**

RtProp: 600 ms
RTT: 750 ms
BtlBw: 20 BPS

Capacity Factor: 1
Available Cwnd: Yes

**Flow Class 1**

Criteria:
RtProp <= 50 ms and BtlBw > 100 BPS

Sort Dimension Preference:
Capacity Factor, RTT, BtlBw

**Packet**

Flow ID: 7
Flow Class: 1

**Ordering**

Connection 2
Connection 1

**FIG. 4C**

400D

**Packet**

Flow ID: 7
Flow Class: 1

**Ordering**

~~Connection 2~~
Connection 1

**Connection 2**

RtProp: 50 ms
RTT: 100 ms
BtlBw: 300 BPS

Capacity Factor: 6
Available Cwnd: **No**

First Connection with
available cwnd

**Connection 1**

RtProp: 30 ms
RTT: 100 ms
BtlBw: 250 BPS

Capacity Factor: 6
Available Cwnd: **Yes**

# FIG. 4D

**FIG. 5A**

EP 4 523 395 B1

FIG. 5B

EP 4 523 395 B1

## Rules

600A

Rules contain a list of Behaviours that are applied to any flow that matches the rule's Match Criteria.
Each rule has a global priority order that can be changed by clicking "Reorder Rules" then dragging the row. If a flow matches several rules, the rule with highest priority will be applied.

Q  Search

PROTOCOL: All    SOURCE IP: All    SOURCE PORT: All    DESTINATION IP: All    DESTINATION PORT: All

⊕ REORDER RULES    ⊕ ADD RULE

| PRIORITY ▾ | NAME | DESCRIPTION | MATCH CRITERIA | BEHAVIOUR | | |
|---|---|---|---|---|---|---|
| 1 | › HTTPS | Secure traffic to a web app. | PROTOCOL: TCP (6)<br>DESTINATION PORT: 443 | PRIORITY ROUTING: ON<br>TCP ACCELERATION: ON | ✏ | 🗑 |
| 2 | › Broadcast Video | Traffic from a Dejero EnGo device. | IP VERSION: IPv4<br>PROTOCOL: UDP (17)<br>SOURCE IP: 192.168.0.100<br>… | INPUT QUEUE: Tail Drop<br>ARQ: ON<br>JITTER BUFFER: Absolute<br>… | ✏ | 🗑 |
| 3 | › Web Browsing | Traffic to a web app. | PROTOCOL: TCP (6)<br>DESTINATION PORT: 80, 443 | PRIORITY ROUTING: ON<br>TCP ACCELERATION: ON | ✏ | 🗑 |
| 4 | › Router | ICMP packets going to the router. | PROTOCOL: ICMP (1)<br>DESTINATION IP: 192.168.0.1 | LATE PACKETS: Drop | ✏ | 🗑 |
| 5 | › VoIP Application | Skype packets for port 3478. | PROTOCOL: UDP (17)<br>DESTINATION PORT: 3478 | PRIORITY ROUTING: ON<br>LATE PACKETS: Transmit | ✏ | 🗑 |
| 6 | › | | | | ✏ | 🗑 |
| 7 | › | | | | ✏ | 🗑 |
| 8 | › | | | | ✏ | 🗑 |

# FIG. 6A

EP 4 523 395 B1

## Rules

Rules contain a list of Behaviours that are applied to any flow that matches the rule's Match Criteria.
Each rule has a global priority order that can be changed by clicking "Reorder Rules" then dragging the row. If a flow matches several rules, the rule with highest priority will be applied.

Q  Search

PROTOCOL: All     SOURCE IP: All     SOURCE PORT: All     DESTINATION IP: All     DESTINATION PORT: All

CANCEL   SAVE   ⊕ ADD RULE

| PRIORITY ▾ | NAME | DESCRIPTION | MATCH CRITERIA | BEHAVIOUR | | |
|---|---|---|---|---|---|---|
| ≡ 1 | › HTTPS | Secure traffic to a web app. | PROTOCOL: TCP (6)<br>DESTINATION PORT: 443 | PRIORITY ROUTING: ON<br>TCP ACCELERATION: ON | ▱ | 🗑 |
| ≡ 2 | › Broadcast Video | Traffic from a Dejero EnGo device. | IP VERSION: IPv4<br>PROTOCOL: UDP (17)<br>SOURCE IP: 192.168.0.100<br>... | INPUT QUEUE: Tail Drop<br>ARQ: ON<br>JITTER BUFFER: Absolute<br>... | ▱ | 🗑 |
| ≡ 3 | › Web Browsing | Traffic to a web app. | PROTOCOL: TCP (6)<br>DESTINATION PORT: 80, 443 | PRIORITY ROUTING: ON<br>TCP ACCELERATION: ON | ▱ | 🗑 |
| ≡ 4 | › Router | ICMP packets going to the router. | PROTOCOL: ICMP (1)<br>DESTINATION IP: 192.168.0.1 | LATE PACKETS: Drop | ▱ | 🗑 |
| ≡ 5 | › VoIP Application | Skype packets for port 3478. | PROTOCOL: UDP (17)<br>DESTINATION PORT: 3478 | PRIORITY ROUTING: ON<br>LATE PACKETS: Transmit | ▱ | 🗑 |
| ≡ 6 | › | | | | ▱ | 🗑 |
| ≡ 7 | › | | | | ▱ | 🗑 |
| ≡ 8 | › | | | | ▱ | 🗑 |

<div align="center">

# FIG. 6B

</div>

## Rules

Rules contain a list of Behaviours that are applied to any flow that matches the rule's Match Criteria.
Each rule has a global priority order that can be changed by clicking "Reorder Rules" then dragging the row. If a flow matches several rules, the rule with highest priority will be applied.

Q Search

PROTOCOL: All    SOURCE IP: All    SOURCE PORT: All    DESTINATION IP: All    DESTINATION PORT: All

⊕ REORDER RULES    ⊕ ADD RULE

| PRIORITY ▾ | NAME | DESCRIPTION | MATCH CRITERIA | BEHAVIOUR | | |
|---|---|---|---|---|---|---|
| 1 | › HTTPS | Secure traffic to a web app. | PROTOCOL: TCP (6)<br>DESTINATION PORT: 443 | PRIORITY ROUTING: ON<br>TCP ACCELERATION: ON | ☑ | 🗑 |
| 2 | › Broadcast Video | Traffic from a Dejero EnGo device. | IP VERSION: IPv4<br>PROTOCOL: UDP (17)<br>SOURCE IP: 192.168.0.100<br>... | INPUT QUEUE: Tail Drop<br>ARQ: ON<br>JITTER BUFFER: Absolute<br>... | ☑ | 🗑 |
| 3 | ⌄ Web Browsing | Traffic to a web app. | PROTOCOL: TCP (6)<br>DESTINATION PORT: 80, 443 | PRIORITY ROUTING: ON<br>TCP ACCELERATION: ON | ☑ | 🗑 |

**FULL DETAILS**

| MATCH CRITERIA | BEHAVIOUR |
|---|---|
| IP VERSION: *<br>DSCP TAG: *<br>PROTOCOL: TCP (6)<br>SOURCE IP: *<br>SOURCE PORT: *<br>DESTINATION IP: *<br>DESTINATION PORT: 80, 443 | PRIORITY ROUTING: ON<br>  WAN0: Primary<br>  CELL1: Secondary<br>  CELL2: Secondary<br>  CELL3: Tertiary<br>TCP ACCELERATION: ON |

**MATCHING FLOWS**

| NAME | PROTOCOL | SOURCE | DESTINATION |
|---|---|---|---|
| Flow 1 | TCP (6) | 200.0.0.1:4755 | 214.3.0.2:80 |
| Flow 3 | TCP (6) | 200.0.0.1:4756 | 214.3.0.2:443 |
| Flow 5 | TCP (6) | 201.3.0.2:4462 | 214.3.0.1:80 |
| Flow 6 | TCP (6) | 154.16.0.13:4235 | 187.32.4.1:80 |

| PRIORITY | NAME | DESCRIPTION | MATCH CRITERIA | BEHAVIOUR | | |
|---|---|---|---|---|---|---|
| 4 | › Router | ICMP packets going to the router. | PROTOCOL: ICMP (1)<br>DESTINATION IP: 192.168.0.1 | LATE PACKETS: Drop | ☑ | 🗑 |

## FIG. 6C

600C

EP 4 523 395 B1

600D

# Edit Web Browsing

**Name**

Web Browsing

**Description**

Traffic to a web app.

**Match Criteria**

| **Source IP(s)** | **IP Version** |
|---|---|
| Enter IP | All ▼ |

| **Source Port(s)** | **DSCP Tag** |
|---|---|
| Enter port | Enter tag value |

| **Destination IP(s)** | **Protocol** |
|---|---|
| Enter IP | TCP (6) ▼ |

**Destination Port(s)**

80 ☓  443 ☓  Enter port

**Behaviour**

[ ON ] OFF  **Priority Routing**

| **wan0** | **cell1** |
|---|---|
| Primary ▼ | Secondary ▼ |

| **cell2** | **cell3** |
|---|---|
| Secondary ▼ | Tertiary ▼ |

ON [ OFF ]  **TCP Acceleration**

# FIG. 6D

## Add Rule

600E

**Name**

Web Browsing

**Description**

Traffic to a web app.

**Match Criteria**

| Source IP(s) | IP Version |
| --- | --- |
| Enter IP | All ▼ |

| Source Port(s) | DSCP Tag |
| --- | --- |
| Enter port | Enter tag value |

| Destination IP(s) | Protocol |
| --- | --- |
| Enter IP | TCP (6) ▼ |

**Destination Port(s)**

80 ×   443 ×   Enter port

**Behaviour**

[ON] OFF   **Priority Routing**

| wan0 | cell1 |
| --- | --- |
| Primary ▼ | Secondary ▼ |

| cell2 | cell3 |
| --- | --- |
| Secondary ▼ | Tertiary ▼ |

ON [OFF]   **TCP Acceleration**

ON [OFF]   **ARQ**

**Input Queue Discipline**

Select a discipline ▼

**Jitter Buffer**

Select a type ▼

**Late Packets**

Select an action ▼

# FIG. 6E

Sender

Receiver

Packet 1 sent at t = 0

Packets exit network
buffer at BtlBw rate

1

Ack 1 received at t =
RtProp

Sender

Receiver

Packet 1 sent at t = 0

Packets exit network
buffer at BtlBw rate

1

Ack 1 received at t =
RtProp

Volume Inflight = 8 packets

Actual rate =
8 packets / RtProp =
(BDP / 2) / RtProp =
BtlBw / 2

Calculated rate =
(Volume Inflight / BDP) x BtlBw =
(8 / 16) x BtlBw =
BtlBw / 2 = Actual rate

☐  Packet

⌐ ¬  Ack
⌊ ⌋

# FIG. 7

FIG. 8A

Sender     Packets exit network     Receiver     800B
buffer at BtlBw rate

```
16    15    14    13    [            12]    11    10    |9|

          [1]
          [-]
          [4]
```

Sender     Packets exit network     Receiver
buffer at BtlBw rate

Actual rate = BDP / t
BtlBw = BDP / RtProp

Only then can
sending continue
resulting in lower
throughput

```
[1]
[-]
[4]
```

```
[16         15]    14    13    12
```

```
[         5]
[         -]
[         8]
```

```
[11][10][9]
```

Therefore, since t > RtProp,
Actual rate < BtlBw

☐ Packet

⌐ ¬
⌐_ ⌐ Ack

FIG. 8B

EP 4 523 395 B1

Sender — Packets exit network buffer at BtlBw rate → — Receiver

Instead, sender can keep sending even before receiving feedback

Volume inflight exceeds BDP

| 11 | 10 | 9 | 8 | | 7 | 6 | 5 | 4 |

| 3 | 2 | 1 |

Sender — Packets exit network buffer at BtlBw rate → — Receiver

Volume inflight (without Acks) exceeds BDP from sender's perspective, but actual rate does not exceed BDP.

Actual rate = Min (Volume inflight, BDP) / BDP x BtlBw = BtlBw

| 19 | 18 | 17 | 16 | | 15 | 14 | 13 | 12 |

| 1 - 4 | | 5 - 8 | | 11 | 10 | 9 |

☐ Packet

⌐ ¬ Ack

## FIG. 8C

900A

Packets exit network
buffer at BtlBw rate
→

Receiver

| 19 | 18 | 17 | 16 | | 15 | 14 | 13 | 12 |

| 5 - 8 |

| 11 | 10 | 9 |

| 1 - 4 |

BDP = 16 packets
Volume = 19 packets
Goodput = 14 packets

Volume > BDP, therefore,

Goodput rate =
(Goodput portion / Full volume) x BtlBw =
(14 / 16) x BtlBw = (7/8) x BtlBw

■ Goodput packet    ▨ Goodput ack

□ Other packet      ⌐¬ Other ack

FIG. 9A

EP 4 523 395 B1

900B

Sender    Packets exit network    Receiver
          buffer at BtlBw rate
          →

⬚ ⬚ ⬚ ⬚ [_____] ▨3 ☐2 ⬚

⬚ ⬚ ▨1 [_____] ⬚ ⬚ ⬚ ⬚

BDP = 16 packets
Volume = 3 packets
Goodput = 2 packets

Volume < BDP, therefore,

Goodput extra space =
BDP − Volume = 13 packets

Potential goodput rate =
((Goodput portion + Goodput extra
space) / Full volume) x BtlBw =
((2+13) / 16) x BtlBw = (15/16) x BtlBw

▨ Goodput packet    ▨ Goodput ack    ⬚ Goodput extra space

☐ Other packet    ⬚ Other ack

## FIG. 9B

EP 4 523 395 B1

900C

BDP = 16 packets
Volume = 3 packets
Goodput = 2 packets
Cwnd = 11 packets

Volume < BDP, therefore,

Goodput extra space =
BDP – Volume = 13 packets
Limited goodput extra space =
Cwnd – Volume = 8 packets

Potential goodput rate =
(Goodput portion + Limited goodput
extra space) / Full volume x BtlBw =
(2+8) / 16 x BtlBw = 10/16 x BtlBw =
5 / 8 x BtlBw

Sender

Packets exit network
buffer at BtlBw rate
→

Receiver

| Legend | |
|---|---|
| ▨ Goodput packet | ▨ Goodput ack |
| □ Goodput extra space | |
| □ Other packet | ⌐┘ Other ack |
| ⊠ Congestion window reduction from BDP | |

**FIG. 9C**

EP 4 523 395 B1

FIG. 10A

FIG. 10B

**FIG. 11**

EP 4 523 395 B1

FIG. 12A

1200B

Tier Creation
1212

Connection
Montoring

Flow
Properties

Packet
Properties

Administrator
Config

Location

⋮

Connections
and
Requirements
Processor
1214

Connections → Tier 1

Connections → Tier 2

Connections → Tier 3

⋮

Connections → Tier N

Connection Scheduler
1216

Iterate through Tiers

Iterate through
connections in Tier

Connection 1

⋮

Connection M

**FIG. 12B**

| One-Way Propagation Delay $T_{prop}$ = 5ms **13101** | Response Timeout $T_{rto}$ = 12ms **13102** | Drop Probability $P_{drop}$ = 0.05 **13103** |
|---|---|---|

Packet delivered on first attempt – Probability = 0.95, Delivery Time = 5ms

First send | ACK sent | ACK received | time (ms)

$T_{prop}$      $T_{prop}$

0           5           10

Packet delivered on second attempt – Probability = 0.05 * 0.95 = 0.0475, Delivery Time = 17ms

First send | Packet Dropped | Second send | ACK sent | ACK received | time (ms)

$T_{rto}$           $T_{prop}$        $T_{prop}$

0              12           17         22

⋮

## FIG. 13A

EP 4 523 395 B1

| One-Way Propagation Delay $T_{prop}$ = 5ms **13101** | Reverse Propagation Delay $T_{rprop}$ = 6ms **13204** | Response Timeout $T_{rto}$ = 12ms **13102** |
|---|---|---|

| Drop Probability $P_{drop}$ = 0.05 **13103** | Reverse Drop Probability $P_{rdrop}$ = 0.04 **13205** |
|---|---|

Packet delivered on first attempt – Probability = 0.95, Delivery Time = 5ms

First send ... ACK sent ... ACK received ... time (ms)

$T_{prop}$ ... $T_{rprop}$

0 ... 5 ... 11

Packet delivered on second attempt, NACK not dropped – Probability = 0.05 * 0.96 * 0.95 = 0.0475, Delivery Time = 16ms

First send ... NACK sent ... Second send ... ACK sent ... ACK received ... time (ms)

$T_{prop}$ ... $T_{rprop}$ ... $T_{prop}$ ... $T_{rprop}$

0 ... 5 ... 11 ... 16 ... 22

Packet delivered on second attempt, NACK dropped – Probability = 0.05 * 0.04 * 0.95 = 0.0475, Delivery Time = 17ms

First send ... NACK sent ... Second send ... ACK sent ... ACK received ...

$T_{prop}$ ... $T_{rto} - T_{prop}$ ... $T_{prop}$ ... $T_{rprop}$

0 ... 5 ... 12 ... 17 ... 23

**FIG. 13B**

EP 4 523 395 B1

1400

| Flow Requirement<br>**Packet Deadline** = 150ms | - | Input Packet<br>**Current Time** = 10ms | = | Packet **Adjusted**<br>**Target Latency** = 140ms |

Tier 1 connection with Tprop = 20 ms. Multiple retransmits possible before deadline.

| First send | NACK sent | Second send | NACK sent | Third send | Packet received | **Packet Deadline** |
| 10 | 30 | 50 | 70 | 90 | 110 | 150 |

time (ms)

Tier 2 connection with Tprop = 55 ms. Only one transmit possible before deadline.

| First send | NACK sent | Second send | **Packet Deadline** | Packet received |
| 10 | 65 | 120 | 150 | 175 |

time (ms)

Tier 3 connection with Tprop = 160 ms. Not possible to receive packet before deadline.

| First send | **Packet Deadline** | Packet received |
| 10 | 150 | 170 |

time (ms)

## FIG. 14

EP 4 523 395 B1

TCP Flow → Hash function → 3

UDP Flow → Hash function → 2

TCP Flow → Expiry function → FIN detection

UDP Flow → Expiry function → 1 minute idle

1500A

Tier

Index | Connection

Input packets

| TCP | UDP | TCP |

1 | A

2 | B → UDP

3 | C → | TCP | TCP |

1502

Input packets

| TCP | UDP | TCP |

Tier

Index | Connection

1 | A

2 | D

3 | B → UDP

4 | C → | TCP | TCP |

## FIG. 15A

**FIG. 15B**

EP 4 523 395 B1

**1540**

Flow 1

| 14 | 13 | 12 | 11 |

Flow 2

| 24 | 23 | 22 | 21 |

Connection A
Capacity: 6 packets

Connection B
Capacity: 6 packets

Tier 1

| 23 | 13 | 22 | 12 | 21 | 11 |

| 24 | 14 |

**1542**

Flow 1

| 14 | 13 | 12 | 11 |

Flow 2

| 24 | 23 | 22 | 21 |

Connection A
Capacity: 6 packets

Connection B
Capacity: 6 packets

Tier 1

| 14 | 13 | 12 | 11 |

| 24 | 23 | 22 | 21 |

Flow 1

| 14 | 13 | 12 | 11 |

Flow 2

| 24 | 23 | 22 | 21 |
| 28 | 27 | 26 | 25 |
| 29 |

Connection A
Capacity: 6 packets

Connection B
Capacity: 6 packets

Tier 1

Connection C
Capacity: 6 packets

Tier 2

| 28 | 27 | 14 | 13 | 12 | 11 |

| 26 | 25 | 24 | 23 | 22 | 21 |

| 29 |

**1500C**

# FIG. 15C

FIG. 16

Using a fixed time variance of 50ms throughout.

~1700

| Packet<br>Sent at t = 0ms<br>on Connection A<br>Deadline at t = 150ms<br>Unacknowledged | Embodiment 1:<br>Early retransmission on<br>low-latency, fresh,<br>reliable connection. | Embodiment 2:<br>Early retransmission on<br>low-latency, fresh,<br>reliable connection.<br>Avoids original. | Embodiment 3:<br>Early retransmission on<br>all low-latency,<br>unreliable or stale<br>connections. | Embodiment 4:<br>Combines<br>embodiments 2 and 3<br>at cost of less<br>efficiency. |
|---|---|---|---|---|
| Connection A<br>Tprop = 15ms<br>Fresh, Reliable | Sent at<br>t = 150 – 50 – 15<br>= 85ms | Not sent | Not sent | Not sent |
| Connection B<br>Tprop = 15ms<br>Stale, Reliable | Not sent | Not sent | Sent at<br>t = 150 – 50 – 15<br>= 85ms | Sent at<br>t = 150 – 50 – 15<br>= 85ms |
| Connection C<br>Tprop = 25ms<br>Fresh, Unreliable | Not sent | Not sent | Sent at<br>t = 150 – 50 – 25<br>= 75ms | Sent at<br>t = 150 – 50 – 25<br>= 75ms |
| Connection D<br>Tprop = 20ms<br>Fresh, Reliable | Not sent | Sent at<br>t = 150 – 50 – 20<br>= 80ms | Not sent | Sent at<br>t = 150 – 50 – 20<br>= 80ms |
| Connection E<br>Tprop = 120ms<br>Fresh, Reliable | Not sent | Not sent | Not sent | Not sent |
| Connection F<br>Tprop = 150ms<br>Stale, Reliable | Not sent | Not sent | Sent opportunistically<br>at same time as<br>Connection C. | Sent opportunistically<br>at same time as<br>Connection C. |

# FIG. 17

FIG. 18

| Multi-level DWRR | NominalQuantum = 2 packets | k = 1 |

1900

## DWRR level 1 – Higher Importance

Flow 1 – 4 packets per second  |  Quantum 1 with Weight 2

| 1 | 1 | 1 | 1 |  →  2 x 1 x 2 = 4 packets

Flow 2 – 10 packets per second  |  Quantum 2 with Weight 5

| 2 | ... | 2 | 2 |  →  5 x 1 x 2 = 10 packets

Flow 3 – 3 packets per second  |  Quantum 3 with Weight 1

| 3 | 3 | 3 |  →  1 x 1 x 2 = 2 packets

DWRR level 1 is serviced as long as the flows in it contain any packets in their queues.

The number of packets removed from the queue of each flow is limited to the quantum of each flow.

Connection 1

8 packets per second

Connection 2

5 packets per second

Connection 3

3 packets per second

## DWRR level 2 – Lower importance

Flow 4 – 3 packets per second  |  Quantum 4 with Weight 2

| 4 | 4 | 4 |  →  2 x 1 x 2 = 4 packets

DWRR level 2 and all flows in it are never serviced (starved) because DWRR level 1 has higher importance and always has enough packets to occupy the full connection capacity.

|   | t = 0s | t = 1s | t = 2s | t = 3s |
|---|--------|--------|--------|--------|
| 1 | In: 4<br>Out: 0 | In: 8<br>Out: 4 | In: 12<br>Out: 8 | In: 16<br>Out: 12 |
| 2 | In: 10<br>Out: 0 | In: 20<br>Out: 10 | In: 30<br>Out: 20 | In: 40<br>Out: 30 |
| 3 | In: 3<br>Out: 0 | In: 6<br>Out: 2 | In: 9<br>Out: 4 | In: 12<br>Out: 6 |
| 4 | In: 3<br>Out: 0 | In: 6<br>Out: 0 | In: 9<br>Out: 0 | In: 12<br>Out: 0 |

1902

# FIG. 19

FIG. 20

FIG. 21

2100

**2210**

(From FIG 21)
**2121**

First transmission of packet? — NO → (To FIG 21) **2122**

YES

**2211**

Sufficient time before deadline to allow for an early retransmit attempt? — YES

NO

Mark packet as ineligible for early retransmission
**2212**

2200

# FIG. 22

FIG. 23

2300

**FIG. 24**

EP 4 523 395 B1

EP 4 523 395 B1

**FIG. 25**

FIG. 26

2700

2702

PROCESSOR

MEMORY

I/O INTERFACE

NETWORK INTERFACE

2704

2706

2708

**FIG. 27**

FIG. 28

EP 4 523 395 B1

**FIG. 29**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2837231 B1

- CA 2020051090 W